# EUROPEAN PATENT APPLICATION

(11) **EP 2 090 173 A1**
(43) Date of publication of application: **19.08.2009**
(21) Application number: 09000968.9
(22) Date of filing: 02.08.2004
(51) Int. Cl.: A21D 13/08, A23C 9/154, A23F 3/00, A23F 3/30, A23F 5/00, A23G 1/00, A23G 3/00, A23L 1/187, A23L 1/236, A23L 2/02, A23L 2/60, C12P 17/10

(54) **Monatin tabletop sweetener compositions and methods of making same**

(30) Priority: 01.08.2003 US 492014 P
(62) Divisional of application: 04786446.7
(71) Applicant: Cargill, Incorporated, Wayzata, MN 55391-5624 (US)
(72) Inventor: Hicks, Paula, M., Bend, Oregon 97702 (US); Abraham, Timothy, W., Minnetonka MN 55345 (US); Cameron, Douglas, C., Plymouth MN 55447 (US); Goulson, Melanie, J., Dayton MN 55327 (US); Lindley, Michael, G., Berkshire (GB); McFarlan, Sara, C., St. Paul MN 55116 (US); Millis, James, R., Plymouth MN 55447 (US); Rosazza, John, Iowa City Iowa 52240 (US); Zhao, Lishan, Carlsbad CA 92009 (US); Weiner, David, P., Del Mar CA 92014 (US)
(74) Representative: Wibbelmann, Jobst

(57) **Abstract**

The present invention relates to novel sweetener compositions comprising monatin and methods for making such compositions. The present invention also relates to sweetener compositions comprising specific monatin stereoisomers, specific blends of monatin stereoisomers, and /or monatin produced via a biosynthetic pathway *in vivo* (e.g., inside cells) or *in vitro.*

## Description

### CROSS-REFERENCE TO RELATED APPLICATIONS

This is a divisional application of European patent application 04 786 446.7 filed on August 2, 2004 (published on April 26, 2006; publication no. EP 1 648 248); the disclosure of which is incorporated herein by reference in its entirety.

### FIELD OF INVENTION

The present invention relates to novel sweetener compositions comprising monatin and methods for making such compositions. The present invention also relates to sweetener compositions comprising specific monatin stereoisomers, specific blends of monatin stereoisomers, and/or monatin produced via a biosynthetic pathway *in vivo* (e.g., inside cells) or *in vitro.*

### BACKGROUND

The use of non-caloric high intensity sweeteners is increasing due to health concerns raised over childhood obesity, type II diabetes, and related illnesses. Thus, a demand exists for sweeteners having a sweetness significantly higher than that in conventional sweeteners, such as granulated sugar (sucrose). Many high intensity sweeteners contain unpleasant off-flavors and/or unexpected and less-than-desirable sweetness profiles. In attempts to overcome these problems, the industry continues to conduct significant research into bitterness inhibitors, off-flavor masking technologies, and sweetener blends to achieve a sweetness profile similar to sucrose.

Monatin (2-hydroxy-2-(indol-3-ylmethyl)-4-aminoglutaric acid) is a naturally-occurring, high intensity sweetener isolated from the plant *Sclerochiton ilicifolius,* found in the Transvaal Region of South Africa. Monatin contains no carbohydrate or sugar, and nearly no calories, unlike sucrose or other nutritive sweeteners at equal sweetness.

### SUMMARY

The present invention relates to sweetener compositions comprising monatin (2-hydroxy-2-(indol-3-ylinethyl)-4-aminoglutaric acid-also known as 4-amino-2-hydroxy-2-(1H-indol-3-ylmethyl)-pentanedioic acid, or alternatively, based on an alternate numbering system, 4-hydroxy-4-(3-indolylmethyl) glutamic acid), a compound having the formula:

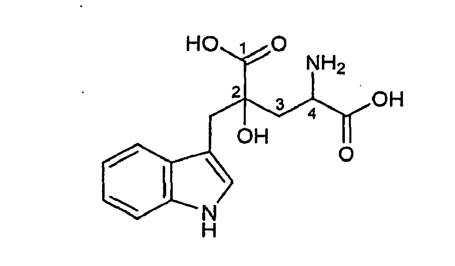

Monatin is a naturally-occurring, high intensity sweetener. Monatin has four stereoisomeric forms: 2R, 4R (the "R,R stereoisomer" or "R,R monatin"), 2S, 4S (the "S,S stereoisomer" or "S,S monatin"), 2R, 4S (the "R,S stereoisomer" or "R,S monatin"), and 2S, 4R (the "S,R stereoisomer" or "S,R monatin"). As used herein, unless stated otherwise, "monatin" refers to all four stereoisomers of monatin, as well as any blends of any combination of monatin stereoisomers (e.g., a blend of the R,R and S,S, stereoisomers of monatin).

Monatin has an excellent sweetness quality. Monatin has a flavor profile that is as clean or cleaner that other known high intensity sweeteners. The dose response curve of monatin is more linear, and therefore more similar to sucrose than other high intensity sweeteners, such as saccharin. Monatin's excellent sweetness profile makes monatin desirable for use in tabletop sweeteners, foods, beverages and other products.

Different stereoisomers of monatin, including the R,R and S,S stereoisomers, have potential in the sweetener industry, either as separate ingredients or in blends. Monatin, and blends of stereoisomers of monatin with other sweeteners, are thought to have superior taste characteristics and/or physical qualities, as compared to other high intensity sweeteners. For example, monatin is more stable than Equal® or NutraSweet® (aspartame, also known as "APM"), has a cleaner taste than Sweet N' Low® (saccharin), and is more sweet than Splenda® (sucralose). Likewise, monatin sweeteners do not have the bitter aftertaste associated with saccharin, or the metallic, acidic, astringent or throat burning aftertastes of some other high potency sweeteners. In addition, monatin sweeteners do not exhibit the licorice aftertaste associated with certain natural sweeteners, such as stevioside and glycyrrhizin. Furthermore, unlike aspartame sweeteners, monatin sweeteners do not require a phenylalanine warning for patients with phenylketonuria. Because of its intense sweetness, the R,R stereoisomer in particular should be economically competitive compared to other high intensity sweeteners.

In one aspect, the present invention provides sweetener compositions containing R,R monatin and/or S,S monatin. For example, such compositions may contain a sweetness comparable to that of granulated sugar (sucrose), and therefore can be used "spoon-for-spoon" or "cup-for-cup" in place of sugar. "A sweetness comparable" means that an experienced sensory evaluator, on average, will determine that the sweetness presented in a first composition is within a range of 80% to 120% of the sweetness presented a second composition. The phrase "a sweetness comparable" relates to a determination ascertained by five or more experienced sensory evaluators in a sweetness matching test, as discussed below, where the test is conducted with compositions (e.g., solutions) having a range of 2-10% sucrose equivalents. Thus, for instance, 100 mg/mL of a composition comprising monatin provides "a sweetness comparable" to 100 mg/mL of sucrose if the monatin composition has a sweetness falling with the range of sweetness presented in 80-120 mg/mL of sucrose.

One assesses sweetness of a sweetener relative to sucrose by using a panel of trained sensory evaluators experienced in the sweetness estimation procedure. All samples (in same buffers) are served in duplicate at a temperature of 22°C ± 1°C. Test solutions, coded with 3 digit random number codes, are presented individually to panelists, in random order. Sucrose reference standards, ranging from 4.0 - 10.0% (w/v) sucrose, increasing in steps of 0.5% (w/v) sucrose are also provided. Panelists are asked to estimate sweetness by comparing the sweetness of the test solution to the sucrose standards. This is carried out by taking 3 sips of the test solution, followed by a sip of water, followed by 3 sips of sucrose standard followed by a sip of water, etc.

Panelists estimate the sweetness to one decimal place, e.g., 6.8, 8.5. A five minute rest period is imposed between evaluating the test solutions. Panelists are also asked to rinse well and eat a cracker to reduce any potential carry over effects. Using information obtained from the panelists, the sweetness intensity or potency is calculated by dividing sucrose equivalent value (SEV) (e.g., % sucrose) by the % monatin at a particular point in a dose response curve.

In some embodiments, the compositions comprise monatin that consists essentially of S,S or R,R monatin. In other embodiments, the compositions contain predominantly S,S or R,R monatin. "Predominantly" means that of the monatin sterioisomers present in the composition, the monatin contains greater than 90% of a particular stereoisomer. In some embodiments, the compositions are substantially free of S,S or R,R monatin. "Substantially free" means that of the monatin sterioisomers present in the composition, the composition contains less than 2% of a particular stereoisomer. Additionally or alternatively, when used to describe monatin produced in a biosynthetic pathway, "substantially free" encompasses the amount of a stereoisomer (e.g., S,S monatin) produced as a by-product in a biosynthetic pathway involving chiral-specific enzymes (e.g., D-amino acid dehydrogenases or D-amino acid aminotransferases) and/or chiral-specific substrates (e.g., one having a carbon in the R-stereoconfiguration) to produce a different specific stereostereoisomer (e.g., R,R monatin)

In another aspect of the present invention, a sweetener composition is provided, which includes a stereoisomerically-enriched monatin mixture produced in a biosynthetic pathway. "Stereoisomerically-enriched monatin mixture" means that the mixture contains more than one monatin stereoisomer and at least 60% of the monatin steroisomers in the mixture is a particular stereoisomer, such as R,R, S,S, S,R or R,S. In other embodiments, the mixture contains greater than 65%, 70%, 75%, 80%, 85%, 90%, 95%, 98% or 99% of a particular monatin stereoisomer. In another embodiment, a sweetener composition comprises an stereoisomerically-enriched R,R or S,S monatin. "Stereoisomerically-enriched" R,R monatin means that the monatin comprises at least 60% R,R monatin. "Stereoisomerically-enriched" S,S monatin means that the monatin comprises at least 60% S,S monatin. In other embodiments, "stereoisomerically-enriched" monatin comprises greater than 65%, 70%, 75%, 80%, 85%, 90%, 95%, 98% or 99% of R,R or S,S monatin.

In another aspect, the present invention also provides sweetener formulations, for example, in pre-portioned packets or ready-to-use formulations, which include monatin in the R,R stereoisomer and/or S,S stereoisomer forms. For example, a single serving packet formulation (usually about 1 gram) can provide a sweetness comparable to that contained in two teaspoons of granulated sugar (sucrose). It is known in the art that a "teaspoons" of sucrose contains approximately 4 grams of sucrose. Alternatively, a volume of a ready-to-use formulation can provide a sweetness comparable to the same volume of granulated sugar. Alternatively, a single serving packet of a monatin composition (e.g., 1 gram) can provide a sweetness comparable to about 0.9 to about 9.0 grams of granulated sugar (sucrose). The term "about" encompasses the range of experimental error that occurs in any measurement. Unless otherwise stated, all measurement numbers are presumed to have the word "about" in front of them even if the word "about" is not expressly used.

In another aspect, the present invention provides a homogeneous tabletop sweetener composition comprising monatin. A "homogeneous" composition refers to a uniform composition. For example, a "homogeneous" tabletop sweetener composition (e.g., a liquid) will contain the same concentration of monatin throughout the composition-any sample obtained from that composition will have that concentration.

In another aspect of the present invention, a method of making a sweetener composition is provided. The method includes biosynthetically producing monatin either *in vivo or in vitro.* A "biosynthetic pathway" comprises at least one biological conversion step. In some embodiments, the biosynthetic pathway is a multi-step process and at least one step is a biological conversion step. In other embodiments, the biosynthetic pathway is a multi-step process involving both biological and chemical conversion steps. In some embodiments, the monatin produced is a stereoisomerically-enriched monatin mixture.

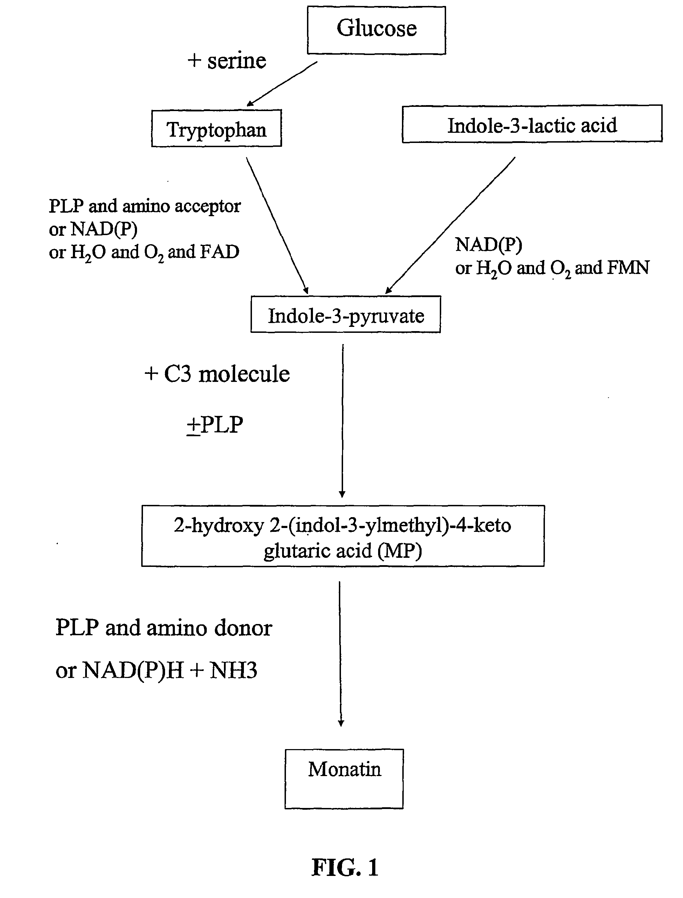

In another aspect of the present invention, several biosynthetic pathways exist for making monatin from substrates chosen from glucose, tryptophan, indole-3-lactic acid, as well as indole-3-pyruvate and 2-hydroxy 2-(indole-3-ylinethyl)-4-keto glutaric acid (also known as "the monatin precursor," "MP" or the alpha-keto form of monatin). Examples of biosynthetic pathways for producing or making monatin or its intermediates are disclosed in FIGS. 1-3 and 11-13, which show potential intermediate products and end products in boxes. For example, a conversion from one product to another, such as glucose to tryptophan, tryptophan to indole-3-pyruvate, indole-3-pyruvate to MP, MP to monatin, or indole-3-lactic acid (indolelactate) to indole-3-pyruvate, occurs in these pathways.

These conversions within the biosynthetic pathways can be facilitated via chemical and/or biological conversions. The term "convert" refers to the use of either chemical means or at least one polypeptide in a reaction to change a first intermediate into a second intermediate. Conversions can take place *in vivo* or *in vitro.* The term "chemical conversion" refers to a reaction that is not actively facilitated by a polypeptide. The term "biological conversion" refers to a reaction that is actively facilitated by one or more polypeptides. When biological conversions are used, the polypeptides and/or cells can be immobilized on supports such as by chemical attachment on polymer supports. The conversion can be accomplished using any reactor known to one of ordinary skill in the art, for example in a batch or a continuous reactor.

Examples of polypeptides, and their coding sequences, that can be used to perform biological conversions are shown in FIGS. 1-3 and 11-13. Polypeptides having one or more point mutations that allow the substrate specificity and/or activity of the polypeptides to be modified, can be used to make monatin. Isolated and recombinant cells expressing such polypeptides can be used to produce monatin. These cells can be any cell, such as a plant, animal, bacterial, yeast, algal, archaeal, or fungal cell.

For example, monatin-producing cells can include one or more (such as two or more, or three or more) of the following activities: tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC 2.6.1.28), multiple substrate aminotransferase (EC 2.6.1.-), aspartate aminotransferase (EC 2.6.1.1), L-amino acid oxidase (EC 1.4.3.2), tryptophan oxidase (no EC number, Hadar et al., J Bacteriol 125:1096-1104, 1976 and Furuya et al., Biosci Biotechnol Biochem 64:1486-93, 2000), D-tryptophan aminotransferase (Kohiba and Mito, Proceedings of the 8^{th} International Symposium on Vitamin B₆ and Carbonyl Catalysis, Osaka, Japan 1990), D-amino acid dehydrogenase (EC 1.4.99.1), D-amino acid oxidase (EC 1.4.3.3), D-alanine aminotransferase (EC 2.6.1.21), synthase/lyase (EC 4.1.3.-), such as 4-hydroxy-2-oxoglutarate aldolase (EC 4.1.3.16) or 4-hydroxy-4-methyl-2-oxoglutarate aldolase (EC 4.1.3.17), and/or synthase/lyase (4.1.2.-).

In another example, cells can include one or more (such as two or more, or three or more) of the following activities: indolelactate dehydrogenase (EC 1.1.1.110), R-4-hydroxyphenyllactate dehydrogenase (EC 1.1.1.222), 3-(4)-hydroxyphenylpyruvate reductase (EC 1.1.1.237), lactate dehydrogenase (EC 1.1.1.27, 1.1.1.28, 1.1.2.3), (3-imidazol-5-yl) lactate dehydrogenase (EC 1.1.1.111), lactate oxidase (EC 1.1.3.-), synthase/lyase (4.1.3.-) such as 4-hydroxy-2-oxoglutarate aldolase (EC 4.1.3.16) or 4-hydroxy-4-methyl-2-oxoglutarate aldolase (EC 4.1.3.17), synthase/lyase (4.1.2.-), tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC 2.6.1.28), multiple substrate aminotransferase (EC 2.6.1.-), aspartate aminotransferase (EC 2.6.1.1), D-tryptophan aminotransferase, D-amino acid dehydrogenase (EC 1.4.99.1), and/or D-alanine aminotransferase (EC 2.6.1.21).

In addition, the cells can include one or more (such as two or more, or three or more) of the following activities: tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC 2.6.1.28), multiple substrate aminotransferase (EC 2.6.1.-), aspartate aminotransferase (EC 2.6.1.1), L-amino acid oxidase (EC 1.4.3.2), tryptophan oxidase, D-tryptophan aminotransferase, D-amino acid dehydrogenase (EC 1.4.99.1), D-amino acid oxidase (EC 1.4.3.3), D-alanine aminotransferase (EC 2.6.1.21), indolelactate dehydrogenase (EC 1.1.1.110), R-4-hydroxyphenyllactate dehydrogenase (EC 1.1.1.222), 3-(4)-hydroxyphenylpyruvate reductase (EC 1.1.1.237), lactate dehydrogenase (EC 1.1.1.27, 1.1.1.28, 1.1.2.3), (3-imidazol-5-yl) lactate dehydrogenase (EC 1.1.1.111), lactate oxidase (EC 1.1.3.-), synthase/lyase (EC 4.1.3.-), such as 4-hydroxy-2-oxoglutarate aldolase (EC 4.1.3.16) or 4-hydroxy-4-methyl-2-oxoglutarate aldolase (EC 4.1.3.17), and/or synthase/lyase (4.1.2.-).

As further example, the cells can include one or more of the following aldolase activities: KHG aldolase, ProA aldolase, KDPG aldolase and/or related polypeptides (KDPH), transcarboxybenzalpyruvate hydratase-aldolase, 4-(2-carboxyphenyl)-2-oxobut-3-enoate aldolase, trans-O-hydroxybenzylidenepyruvate hydratase-aldolase, 3-hydroxyaspartate aldolase, benzoin aldolase, dihydroneopterin aldolase, L-threo-3-phenylserine benzaldehyde-lyase (phenylserine aldolase), 4-hydroxy-2-oxovalerate aldolase, 1,2-dihydroxybenzylpyruvate aldolase, and/or 2-hydroxybenzalpyruvate aldolase.

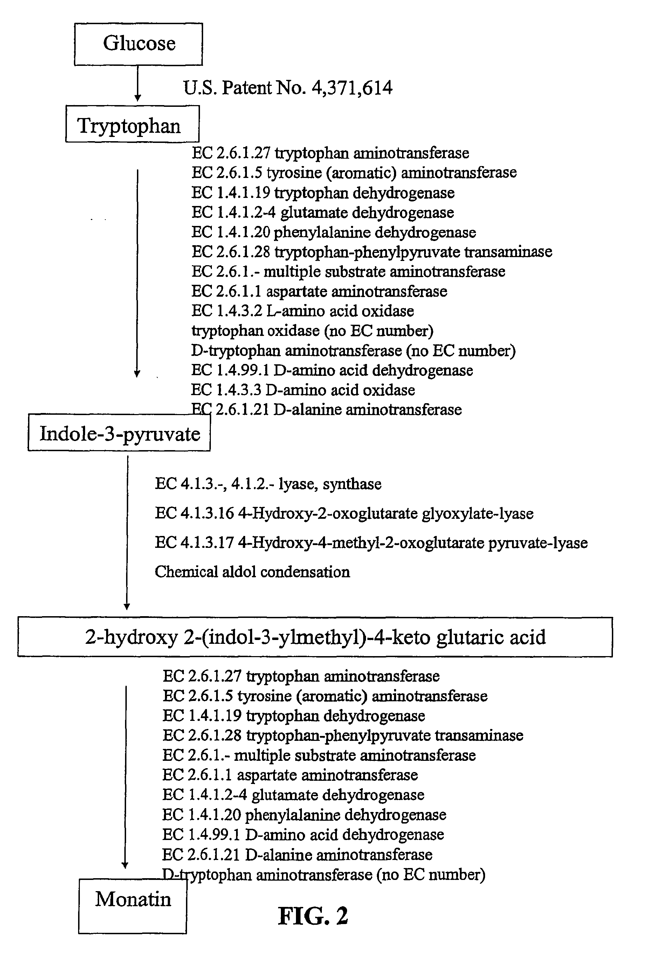

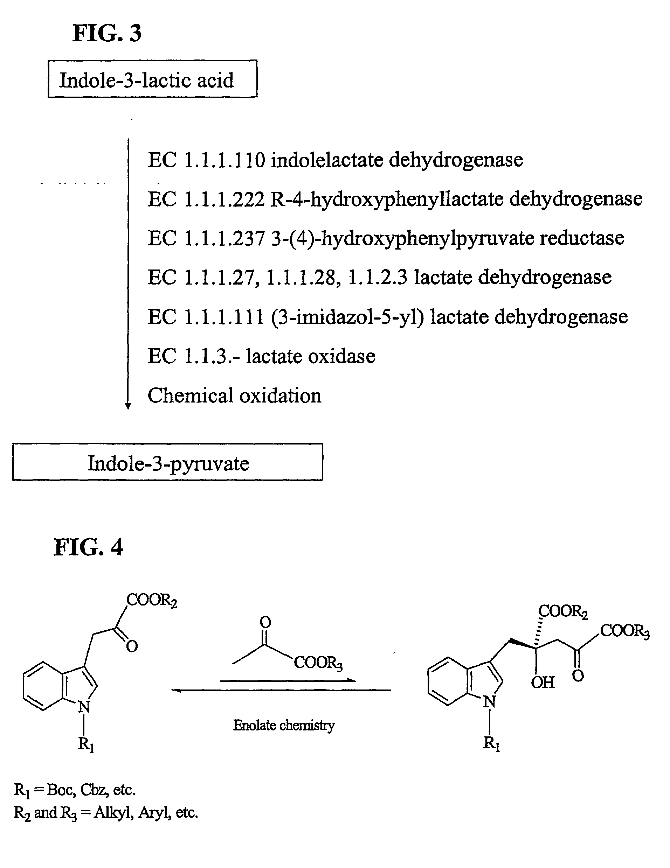

Monatin can be produced by methods that include contacting tryptophan and/or indole-3-lactic acid with a first polypeptide, wherein the first polypeptide converts tryptophan and/or indole-3-lactic acid to indole-3-pyruvate (either the D or the L form of tryptophan or indole-3-lactic acid can be used as the substrate that is converted to indole-3-pyruvate; one of skill in the art will appreciate that the polypeptides chosen for this step ideally exhibit the appropriate specificity), contacting the resulting indole-3-pyruvate with a second polypeptide, wherein the second polypeptide converts the indole-3-pyruvate to 2-hydroxy 2-(indol-3-ylmethyl)-4-keto glutaric acid (MP), and contacting the MP with a third polypeptide, wherein the third polypeptide converts MP to monatin. Exemplary polypeptides that can be used for these conversions are shown in FIGS. 2 and 3.

Producing monatin in a biosynthetic pathway via one or more biological conversions provides certain advantages. For example, by using specific polypeptides and/or certain substrates in the biosynthetic pathway, one can produce a mixture enriched in a specific stereoisomer, and/or produce a monatin mixture that is substantially free of one or more stereoisomers.

A monatin composition may include impurities as a consequence of the method used for monatin synthesis. Monatin compositions produced by purely synthetic means (i.e., not involving at least one biological conversion) will contain different impurities than monatin compositions produced via a biosynthetic pathway. For example, based on raw materials used, monatin compositions produced by purely synthentic means may include petrochemical, toxic and/or other hazardous contaminants inappropriate for human consumption. Examples of such contaminants are hazardous chemicals, such as LDA, hydrogen-Pd/C, diazomethane, KCN, Grignard's reagent and Na/Hg. On the other hand, it is expected that a monatin composition produced via a biosynthetic pathway may contain edible or potable impurities, but will not contain petrochemical, toxic and/or other hazardous material.

It is expected that a method for producing monatin in a biosynthetic pathway via one or more biological conversions produces fewer toxic or hazardous contaminants and/or can provide a higher percentage of a particular stereoisomer, as compared to purely synthetic means. For example, it is expected that when making monatin using D-amino acid dehydrogenases, D-alanine (aspartate) aminotransferases, D-aromatic aminotransferases or D-methionine aminotranferases, one can obtain at least 60% R,R monatin and less than 40 % S,S, S,R and/or R,S monatin. It is also expected, for example, that when making monatin using the above-mentioned D-enzymes, as well as at least one substrate (e.g., the monatin precursor) having a carbon in the R-stereoconfiguration, one can obtain at least 95 % R,R monatin and less than 5% S,S, S,R and/or R,S monatin. In contrast, it is expected that when making monatin by purely synthetic means, one obtains about 25%-50% of the desired stereoisomer.

In one embodiment, a method for producing monatin via a biosynthetic pathway, for example, involving one or more biological conversion, produces no petrochemical, toxic or hazardous contaminants. "Petrochemical, toxic or hazardous contaminants" means any material that is petrochemical, toxic, hazardous and/or otherwise inappropriate for human consumption, including those contaminants provided as raw material or created when producing monatin via purely synthetic means. In another embodiment, a method for producing monatin via a biosynthetic pathway, for example, involving one or more biological conversion, produces only edible or potable material. "Edible or potable material" means one or more compounds or material that are fit for eating or drinking by humans, or otherwise safe for human consumption. Examples of edible or potable material include monatin, tryptophan, pyruvate, glutamate, other amino acids, as well as other compounds or material that are naturally present in the body.

In certain embodiments, monatin sweetener compositions include tabletop pre-portioned packets and cubes of sweetener, as well as tabletop ready-to-use "spoon-for-spoon" sweeteners having approximately the same sweetness as sucrose (sugar) by volume, which can be used as a substitute for tabletop granulated sugar. Such tabletop sweeteners may be used to sweeten coffee and tea (both hot and iced), cereal, fruit and home baked goods (cookies, muffins, cakes, etc.) and desserts.

In one embodiment, a tabletop sweetener composition comprises monatin or salt thereof, wherein the composition provides a sweetness comparable to about 0.9 to about 9.0 grams of granulated sugar. In another embodiment, a 1 gram portion of the monatin tabletop sweetener composition provides a sweetness comparable to two teaspoons of granulated sugar. In another embodiment, a 1 gram portion of the monatin tabletop sweetener composition provides provides a sweetness comparable to about 0.9 to about 9.0 grams of granulated sugar, and contains less calories and carbohydrates than about 1 gram of granulated sugar.

In other embodiments, a tabletop sweetener composition comprising monatin or salt thereof comprises from about 0 to about 200 mg S,S monatin or salt thereof, and from about 0 to about 5 mg R,R monatin or salt thereof. For example, 1 gram of the tabletop sweetener composition may comprise from about 3 to about 200 mg S,S monatin or salt thereof, and from about 0 to about 5 mg R,R monatin or salt thereof. Alternatively, for example, 1 gram of the tabletop sweetener composition may comprise from about 0 to about 200 mg S,S monatin or salt thereof, and from about 3 to about 5 mg R,R monatin or salt thereof.

In other embodiments, 1 gram of the monatin tabletop sweetener composition comprises about 200 mg or less S,S monatin or salt thereof, and is substantially free of R,R, S,R or R,S monatin or salt thereof. In another embodiments, 1 gram of the monatin tabletop sweetener composition comprises about 5 mg or less R,R monatin or salt thereof, and is substantially free of S,S, S,R or R,S monatin or salt thereof.

In other embodiments, composition comprising monatin or salt thereof further comprise at least one ingredient chosen from bulking agents, carriers, fibers, sugar alcohols, oligosaccharides, sugars, non-monatin high intensity sweeteners, nutritive sweeteners, flavorings, flavor enhancers, flavor stablizers, acidulants, anti-caking agents, and free-flow agents. For example, the monatin tabletop sweetener compositions may further comprise agglomerated dextrose with maltodextrin

In one embodiment, a sweetener composition comprises monatin and erthritol. In other embodiments, a monatin composition comprises erythritol. In one embodiment, a monatin composition comprises up to 99.7% erythritol. In another embodiment, a monatin composition comprises trehalose. In another embodiment, a monatin composition comprises cyclamate.

In other embodiments, a tabletop sweetener composition comprises monatin or salt thereof, where the monatin or salt thereof consists essentially of R,R monatin or salt thereof. Alternatively, the tabletop sweetener composition comprises monatin or salt thereof, wherein the monatin or salt thereof consists essentially of S,S monatin or salt thereof. In other embodiments, a tabletop sweetener composition comprises monatin or salt thereof, where the the monatin or salt thereof is a stereoisomerically-enriched R,R or S,S monatin or salt thereof. For example, the monatin tabletop sweetener composition may comprises at least 95% R,R monatin or salt thereof.

In other embodiments, a tabletop sweetener composition comprises monatin or salt thereof, wherein the sweetness is provided by monatin or salt thereof produced in a biosynthetic pathway.

In other embodiments, a ready-to-use sweetener composition comprises monatin or salt thereof, wherein a volume of the composition provides a sweetness comparable to a same volume of granulated sugar. In another embodiment, 1 teaspoon of the monatin ready-to-use sweetener composition contains less calories and carbohydrates than about 1 teaspoon of granulated sugar.

In other embodiments, a ready-to-use sweetener composition comprises monatin or salt thereof, wherein 1 gram of the composition comprises about 3 to about 25 mg S,S monatin or salt thereof, and from about 0 to about 0.625 mg R,R monatin or salt thereof. Alternatively, for example, the monatin ready-to-use sweetener consists essentially of S,S monatin or salt thereof or R,R monatin or salt thereof. In other embodiments, 1 gram of a ready-to-use monatin sweetener composition comprises from about 5 to about 25 mg S,S monatin or salt thereof. Alternatively, for example, 1 gram of a ready-to-use monatin sweetener composition comprises from about 0.4 to about 0.625 R,R monatin or salt thereof, and is substantially free of S,S, S,R or R,S monatin or salt thereof. Alternatively, for example, 1 gram of a ready-to-use monatin sweetener composition comprises from about 0.5 to about 1 mg R,R monatin or salt thereof, and is substantially free of S,S, S,R or R,S monatin or salt thereof.

In other embodiments, a sweetener composition comprises a stereoisomerically-enriched monatin mixture, wherein the monatin mixture is produced via a biosynthetic pathway. In one embodiment, the biosynthetic pathway is a multi-step pathway and at least one step of the multi-step pathway is a chemical conversion. In another embodiment, the stereoisomerically-enriched monatin mixture is predominantly R,R monatin or salt thereof.

In other embodiments, a homogeneous tabletop sweetener composition comprises monatin or salt thereof, wherein a sample of the composition comprises monatin or salt thereof in an amount ranging from more than 2 mg to about 200 mg, and wherein the monatin or salt thereof in the sample provides a sweetness comparable to about 0.9 to about 9.0 grams of granulated sugar. For example, a sample of the homogeneous tabletop sweetener composition may provide a sweetness comparable to two teaspoons of granulated sugar. In another embodiment, a sample of the homogeneous tabletop sweetener composition weighs about 1 gram or has a volume of about 0.35 mL. In another embodiment, a sample of the homogeneous tabletop sweetener composition comprises an amount of monatin or salt thereof ranging from more than 2 mg to about 5 mg monatin or salt thereof. In another embodiment, the homogeneous tabletop sweetener composition is substantially free of S,S monatin or salt thereof, or substantially free of R,R monatin or salt thereof.

In other embodiments, a tabletop sweetener composition comprises monatin or salt thereof, wherein a sample of the composition comprises monatin or salt thereof in an amount ranging from more than 2 mg to about 105 mg monatin or salt thereof, and wherein the monatin or salt thereof in the sample provides a sweetness comparable to one teaspoon of granulated sugar. In another embodiment, a sample of the tabletop sweetener composition comprising monatin or salt thereof has a volume of about 0.35 ml, or is a cube of granulated material.

In other embodiments, a tabletop sweetener composition comprises a monatin composition produced in a biosynthetic pathway, wherein the monatin composition does not contain petrochemical, toxic or hazardous contaminants. For example, the monatin tabletop sweetener composition comprising monatin or salt thereof may be produced in a biosynthetic pathway and isolated from a recombinant cell, wherein the recombinant cell does not contain petrochemical, toxic or hazardous contaminants.

In other embodiments, a method for making a sweetener composition comprises monatin or salt thereof, wherein the method comprises producing monatin or salt thereof from at least one substrate chosen from glucose, tryptophan, indole-3-lactic acid, indole-3-pyruvate and the monatin precursor. In other embodiments, the method further comprises combining the monatin or salt thereof with erythritol. In other embodiments, the method further comprises combining the monatin or salt thereof with trehalose. In other embodiments, the method further comprises combining the monatin or salt thereof with cyclamate. In other embodiments, the method further comprises combining the monatin or salt thereof with at least one other ingredient that is not monatin or salt thereof. Such ingredients may include bulking agents, carriers, fibers, sugar alcohols, oligosaccharides, sugars, non-monatin high intensity sweeteners, nutritive sweeteners, flavorings, flavor enhancers, flavor stabilizers, acidulants, anti-caking, free-flow agents, and any combination thereof. In one embodiment, at least one other ingredient is chosen from maltodextrin, dextrose, erythritol and fiber.

In other embodiments, in a method for making a sweetener composition, a portion of the sweetener composition weighing about 1 gram comprises from about 0 mg to about 200 mg S,S monatin or salt thereof and from about 0 mg to about 5 mg R,R monatin or salt thereof, and the portion provides a sweetness comparable to two teaspoons of granulated sugar.

In other embodiments, in a method for making a sweetener composition, 1 gram of the sweetener composition comprises from about 0 to about 25 mg S,S monatin or salt thereof and from about 0 to about 0.625 mg R,R monatin or salt thereof, wherein a volume of the composition has a sweetness comparable to a same volume of granulated sugar. Alternatively, in a method for making a sweetener composition, 1 gram of the composition comprises from about 0 to about 25 mg S,S monatin or salt thereof and from about 0 to about 0.625 mg R,R monatin or salt thereof, wherein 1 gram of the composition has a sweetness comparable to about 0.9 to about 9.0 grams granulated sugar. Alternatively, in a method for making a sweetener composition, the amount of S,S monatin or salt thereof ranges from about 5 to about 200 mg S,S monatin or salt thereof per 1 gram of the composition.

In other embodiments, a method for making a sweetener composition further comprises combining S,S monatin or salt thereof with at least one other ingredient chosen from bulking agents, carriers, fibers, sugar alcohols, oligosaccharides, sugars, non-monatin high intensity sweeteners, nutritive sweeteners, flavorings, flavor enhancers, flavor stablizers, acidulants, anti-caking, free-flow agents, and any combination thereof, wherein the monatin or salt thereof comprises about 3 to about 200 mg of monatin or salt thereof per 1 gram of the composition. In other embodiments, a method for making a sweetener composition further comprises combining R,R monatin or salt thereof with at least one other ingredient chosen from bulking agents, carriers, fibers, sugar alcohols, oligosaccharides, sugars, non-monatin high intensity sweeteners, nutritive sweeteners, flavorings, flavor enhancers, flavor stablizers, acidulants, anti-caking, free-flow agents, and any combination thereof, wherein the amount of R,R monatin or salt thereof ranges from about 3 to about 5 mg of R,R monatin or salt thereof per 1 gram of the composition. In other embodiments, a method for making a sweetener composition comprises from about 0.4 to about 5 mg R,R monatin or salt thereof per 1 gram of the composition.

In other embodiments, a method for making a sweetener composition comprises combining monatin or salt thereof with at least one bulking agent chosen from dextrose and maltodextrin, and wherein the monatin or salt thereof comprises about 5 mg R,R monatin or salt thereof per 1 gram of the composition. In other embodiments, a method for making a sweetener composition comprises combining monatin or salt thereof with maltodextrin, and wherein the monatin or salt thereof comprises from about 0.5 to about 1 mg R,R monatin or salt thereof per 1 gram of the composition.

In other embodiments, in a method for making a sweetener composition comprising a monatin composition, the method comprises producing the monatin composition in a biosynthetic pathway, and wherein the monatin composition does not contain petrochemical, toxic or hazardous contaminants. Alternatively, the method comprises producing the monatin composition from a substrate in a multi-step pathway, wherein one or more steps in the multi-step pathway is a biological conversion, and wherein the monatin composition does not contain petrochemical, toxic or hazardous contaminants.

In other embodiments, in a method for making a sweetener composition comprising a monatin composition, the method comprises producing the monatin composition in a biosynthetic pathway, and wherein the monatin composition consists of monatin or salt thereof and other edible or potable material. Alternatively, the method comprises producing the monatin composition from a substrate in a multi-step pathway, wherein one or more steps in the multi-step pathway is a biological conversion, and wherein the monatin composition consists of monatin or salt thereof and other edible or potable material.

In other embodiments, in a method for making a sweetener composition comprising a monatin composition, the method comprises: (a) producing monatin or salt thereof in a biosynthetic pathway in a recombinant cell; (b) isolating the monatin composition from the recombinant cell, wherein the monatin composition consists of monatin or salt thereof and other edible or potable material.

It will be apparant to one of ordinary skill in the art from the teachings herein that specific embodiments of the present invention may be directed to one or a combination of the above-indicated aspects, as well as other aspects.

### BRIEF DESCRIPTION OF THE FIGURES

**FIG.1** shows biosynthetic pathways used to produce monatin and/or indole-3-pyruvate. One pathway produces indole-3-pyruvate via tryptophan, while another produces indole-3-pyruvate via indole-3-lactic acid. Monatin is subsequently produced via a MP intermediate.

Compounds shown in boxes are substrates and products produced in the biosynthetic pathways. Compositions adjacent to the arrows are cofactors, or reactants that can be used during the conversion of a substrate to a product. The cofactor or reactant used will depend upon the polypeptide used for the particular step of the biosynthetic pathway. The cofactor PLP (pyridoxal 5' - phosphate) can catalyze reactions independent of a polypeptide, and therefore, merely providing PLP can allow for the progression from substrate to product.

**FIG. 2** is a more detailed diagram of the biosynthetic pathway that utilizes the MP intermediate. The substrates for each step in the pathways are shown in boxes. The polypeptides allowing for the conversion between substrates are listed adjacent to the arrows between the substrates. Each polypeptide is described by its common name and an enzymatic class (EC) number.

**FIG. 3** shows a more detailed diagram of the biosynthetic pathway of the conversion of indole-3-lactic acid to indole-3-pyruvate. The substrates are shown in boxes, and the polypeptides allowing for the conversion between the substrates are listed adjacent to the arrow between the substrates. Each polypeptide is described by its common name and an EC number.

**FIG. 4** shows one possible reaction for making MP via chemical means.

**FIGS. 5A** and 5B are chromatograms showing the LC/MS identification of monatin produced enzymatically.

**FIG. 6** is an electrospray mass spectrum of enzymatically synthesized monatin.

**FIGS. 7A and 7B** are chromatograms of the LC/MS/MS daughter ion analyses of monatin produced in an enzymatic mixture.

**FIG. 8** is a chromatogram showing the high-resolution mass measurement of monatin produced enzymatically.

**FIGS. 9A-9C** are chromatograms showing the chiral separation of (A) R-tryptophan, (B) S-tryptophan, and (C) monatin produced enzymatically.

**FIG. 10** is a bar graph showing the relative amount of monatin produced in bacterial cells following IPTG induction. The (-) indicates a lack of substrate addition (no tryptophan or pyruvate was added).

**FIGS. 11-12** are schematic diagrams showing pathways used to increase the yield of monatin produced from tryptophan or indole-3-pyruvate.

**FIG. 13** is a schematic diagram showing a pathway that can be used to increase the yield of monatin produced from tryptophan or indole-3-pyruvate.

**FIG. 14** presents a dose response curve obtained with an R,R, stereoisomer of monatin.

**FIG. 15** presents a dose response curve obtained with an R,R/S,S stereoisomer mixture of monatin.

**FIG. 16** compares the dose response curve obtained with an R,R/S,S stereoisomer mixture of monatin to a dose response curve obtained with saccharin.

**FIG.17** shows reversed phase chromatography of standards of synthetically produced monatin.

**FIG. 18** shows chiral chromatography of monatin standards.

### DETAILED DESCRIPTION

### Overview of Biosynthetic Pathways for Monatin Production

The following explanations of terms and methods are provided to better describe the present disclosure and to guide those of ordinary skill in the art in the practice of the present disclosure. As used herein, "including" means "comprising." In addition, the singular forms "a" or "an" or "the" include plural references unless the context clearly dictates otherwise.

As shown in FIGS. 1-3 and 11-13, many biosynthetic pathways can be used to produce monatin or its intermediates such as indole-3-pyruvate or MP. For the conversion of each substrate (e.g., glucose, tryptophan, indole-3-lactic acid, indole-3-pyruvate, and MP) to each product (e.g., tryptophan, indole-3-pyruvate, MP and monatin), several different polypeptides can be used. Moreover, these reactions can be carried out *in vivo, in vitro,* or through a combination of *in vivo* reactions and *in vitro* reactions, such as *in vitro* reactions that include non-enzymatic chemical reactions. Therefore, FIGS. 1-3 and 11-13 are exemplary, and show multiple different pathways that can be used to obtain desired products.

### Glucose to Tryptophan

Many organisms can synthesize tryptophan from glucose. The construct(s) containing the gene(s) necessary to produce monatin, MP, and/or indole-3-pyruvate from glucose and/or tryptophan can be cloned into such organisms. It is shown herein that tryptophan can be converted into monatin.

In other examples, an organism can be engineered using known polypeptides to produce tryptophan, or overproduce tryptophan. For example, U.S. Patent No. 4,371,614 describes an *E. coli* strain transformed with a plasmid containing a wild type tryptophan operon.

Maximum titers of tryptophan disclosed in U.S. Patent No. 4,371,614 are about 230 ppm. Similarly, WO 8701130 describes an *E. coli* strain that has been genetically engineered to produce tryptophan and discusses increasing fermentative production of L-tryptophan. Those skilled in the art will recognize that organisms capable of producing tryptophan from glucose are also capable of utilizing other carbon and energy sources that can be converted to glucose or fructose-6-phosphate, with similar results. Exemplary carbon and energy sources include, but are not limited to, sucrose, fructose, starch, cellulose, or glycerol.

### Tryptophan to Indole-3-pyruvate

Several polypeptides can be used to convert tryptophan to indole-3-pyruvate. Exemplary polypeptides include, without limitation, members of the enzyme classes (EC) 2.6.1.27, 1.4.1.19, 1.4.99.1, 2.6.1.28, 1.4.3.2, 1.4.3.3, 2.6.1.5, 2.6.1.-, 2.6.1.1, and 2.6.1.21. These classes include, without limitation, polypeptides termed tryptophan aminotransferase (also termed L-phenylalanine-2-oxoglutarate aminotransferase, tryptophan transaminase, 5-hydroxytryptophan-ketoglutaric transaminase, hydroxytryptophan aminotransferase, L-tryptophan aminotransferase, L-tryptophan transaminase, and L-tryptophan:2-oxoglutarate aminotransferase) which converts L-tryptophan and 2-oxoglutarate to indole-3-pyruvate and L-glutamate; D-tryptophan aminotransferase which converts D-tryptophan and a 2-oxo acid to indole-3-pyruvate and an amino acid; tryptophan dehydrogenase (also termed NAD(P)-L-tryptophan dehydrogenase, L-tryptophan dehydrogenase, L-Trp-dehydrogenase, TDH and L-tryptophan:NAD(P) oxidoreductase (deaminating)) which converts L-tryptophan and NAD(P) to indole-3-pyruvate and NH₃ and NAD(P)H; D-amino acid dehydrogenase, which converts D-amino acids and FAD to indole-3-pyruvate and NH₃ and FADH₂; tryptophan-phenylpyruvate transaminase (also termed L-tryptophan-α-ketoisocaproate aminotransferase and L-tryptophan:phenylpyruvate aminotransferase) which converts L-tryptophan and phenylpyruvate to indole-3-pyruvate and L-phenylalanine; L-amino acid oxidase (also termed ophio-amino-acid oxidase and L-amino-acid:oxygen oxidoreductase (deaminating)) which converts an L-amino acid and H₂O and O₂ to a 2-oxo acid and NH₃ and H₂O₂; D-amino acid oxidase (also termed ophio-amino-acid oxidase and D-amino-acid:oxygen oxidoreductase (deaminating)) which converts a D-amino acid and H₂O and O₂ to a 2-oxo acid and NH₃ and H₂O₂; and tryptophan oxidase which converts L-tryptophan and H₂O and O₂ to indole-3-pyruvate and NH₃ and H₂O₂. These classes also contain tyrosine (aromatic) aminotransferase, aspartate aminotransferase, D-amino acid (or D-alanine) aminotransferase, and broad (multiple substrate) aminotransferase which have multiple aminotransferase activities, some of which can convert tryptophan and a 2-oxo acid to indole-3-pyruvate and an amino acid.

Eleven members of the aminotransferase class that have such activity are described below in Example 1, including a novel aminotransferase shown in SEQ ID NOS: 11 and 12. Therefore, this disclosure provides isolated nucleic acid and amino acid sequences having at least 80%, at least 85%, at least 90%, at least 95%, at least 98%, or even at least 99% sequence identity to the sequences set forth in SEQ ID NOS: 11 and 12, respectively. Also encompassed by this disclosure are fragments and fusions of the sequences set forth in SEQ ID NOS: 11 and 12 that encode a polypeptide having aminotransferase activity or retaining aminotransferase activity. Exemplary fragments include, but are not limited to, at least 10, 12, 15, 20, 25, 50, 100, 200, 500, or 1000 contiguous nucleotides of SEQ ID NO: 11 or at least 6, 10, 15, 20, 25, 50, 75, 100, 200, 300 or 350 contiguous amino acids of SEQ ID NO: 12. The disclosed sequences (and variants, fragments, and fusions thereof) can be part of a vector. The vector can be used to transform host cells, thereby producing recombinant cells which can produce indole-3-pyruvate from tryptophan, and in some examples can further produce MP and/or monatin.

L-amino acid oxidases (1.4.3.2) are known, and sequences can be isolated from several different sources, such as *Viperα lebetine* (sp P81375), *Ophiophagus hannah* (sp P81383), *Agkistrodon rhodostoma* (spP81382), *Crotalus atrox* (sp P56742), *Burkholderia cepacia, Arabidopsis thaliana, Caulobacter cresentus, Chlamydomonas reinhardtii, Mus musculus, Pseudomonas syringae,* and *Rhodococcus* str. In addition, tryptophan oxidases are described in the literature and can be isolated, for example, from *Coprinus* sp. SF-1, Chinese cabbage with club root disease, *Arabidopsis thaliana,* and mammalian liver. One member of the L-amino acid oxidase class that can convert tryptophan to indole-3-pyruvate is discussed below in Example 3, as well as alternative sources for molecular cloning. Many D-amino acid oxidase genes are available in databases for molecular cloning.

Tryptophan dehydrogenases are known, and can be isolated, for example, from spinach, *Pisum sativum, Prosopis juliflora,* pea, mesquite, wheat, maize, tomato, tobacco, *Chromobacterium violaceum,* and *Lactobacilli.* Many D-amino acid dehydrogenase gene sequences are known.

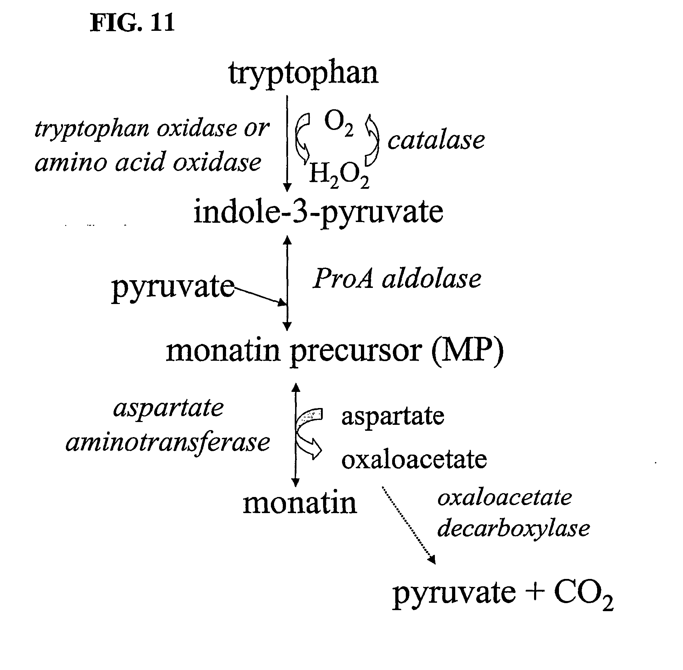

As shown in FIGS. 11-13, if an amino acid oxidase; such as tryptophan oxidase, is used to convert tryptophan to indole-3-pyruvate, catalase can be added to reduce or even eliminate the presence of hydrogen peroxide.

### Indole-3-lactate to Indole-3-pyruvate

The reaction that converts indole-3-lactate to indole-3-pyruvate can be catalyzed by a variety of polypeptides, such as members of the 1.1.1.110, 1:1.1.27, 1.1.1.28, 1.1.2.3, 1.1.1.222, 1.1.1.237, 1.1.3.-, or 1.1.1.111 classes of polypeptides. The 1.1.1.110 class of polypeptides includes indolelactate dehydrogenases (also termed indolelactic acid: NAD⁺ oxidoreductase). The 1.1.1.27, 1.1.1.28, and 1.1.2.3 classes include lactate dehydrogenases (also termed lactic acid dehydrogenases, lactate: NAD⁺ oxidoreductase). The 1.1.1.222 class contains (R)-4-hydroxyphenyllactate dehydrogenase (also termed D-aromatic lactate dehydrogenase, R-aromatic lactate dehydrogenase, and R-3-(4-hydroxyphenyl)lactate:NAD(P)⁺2-oxidoreductase) and the 1.1.1.237 class contains 3-(4-hydroxyphenylpyruvate) reductase (also termed hydroxyphenylpyruvate reductase and 4-hydroxyphenyllactate: NAD⁺ oxidoreductase). The 1.1.3.- class contains lactate oxidases, and the 1.1.1.111 class contains (3-imidazol-5-yl) lactate dehydrogenases (also termed (S)-3-(imidazol-5-yl)lactate:NAD(P)⁺ oxidoreductase). It is likely that several of the polypeptides in these classes allow for the production of indole-3-pyruvate from indole-3-lactic acid. Examples of this conversion are provided in Example 2.

Chemical reactions can also be used to convert indole-3-lactic acid to indole-3-pyruvate. Such chemical reactions include an oxidation step that can be accomplished using several methods, for example: air oxidation using a B2 catalyst (China Chemical Reporter, vol. 13, no. 28, pg. 18(1), 2002), dilute permanganate and perchlorate, or hydrogen peroxide in the presence of metal catalysts.

### Indole-3-pyruvate to 2-hydroxy 2-(indol-3ylmethyl)-4-keto glutaric acid (MP)

Several known polypeptides can be used to convert indole-3-pyruvate to MP. Exemplary polypeptide classes include 4.1.3.-, 4.1.3.16, 4.1.3.17, and 4.1.2.-. These classes include carbon-carbon synthases/lyases, such as aldolases that catalyze the condensation of two carboxylic acid substrates. Polypeptide class EC 4.1.3.- are synthases/lyases that form carbon-carbon bonds utilizing oxo-acid substrates (such as indole-3-pyruvate) as the electrophile, while EC 4.1.2.- are synthases/lyases that form carbon-carbon bonds utilizing aldehyde substrates (such as benzaldehyde) as the electrophile.

For example, the polypeptide described in EP 1045-029 (EC 4.1.3.16, 4-hydroxy-2-oxoglutarate glyoxylate-lyase also termed 4-hydroxy-2-oxoglutarate aldolase, 2-oxo-4-hydroxyglutarate aldolase or KHG aldolase) converts glyoxylic acid and pyruvate to 4-hydroxy-2-ketoglutaric acid, and the polypeptide 4-hydroxy-4-methyl-2-oxoglutarate aldolase (EC 4.1.3.17, also termed 4-hydroxy-4-methyl-2-oxoglutarate pyruvate-lyase or ProA aldolase), condenses two keto-acids such as two pyruvates to 4-hydroxy-4-methyl-2-oxoglutarate. Reactions utilizing these lyases are described herein.

FIGS. 1-2 and 11-13 show schematic diagrams of these reactions in which a 3-carbon (C3) molecule is combined with indole-3-pyruvate. Many members of EC 4.1.2.- and 4.1.3.-, particularly PLP-utilizing polypeptides, can utilize C3 molecules that are amino acids such as serine, cysteine, and alanine, or derivatives thereof. Aldol condensations catalyzed by representatives of EC 4.1.2.- and 4.1.3.- require the three carbon molecule of this pathway to be pyruvate or a derivative of pyruvate. However, other compounds can serve as a C3 carbon source and be converted to pyruvate. Alanine can be transaminated by many PLP-utilizing transaminases, including many of those mentioned above, to yield pyruvate. Pyruvate and ammonia can be obtained by beta-elimination reactions (such as those catalyzed by tryptophanase or β-tyrosinase) of L-serine, L-cysteine, and derivatives of serine and cysteine with sufficient leaving groups, such as O-methyl-L-serine, O-benzyl-L-serine, S-methylcysteine, S-benzylcysteine, S-alkyl-L-cysteine, O-acyl-L-serine, and 3-chloro-L-alanine. Aspartate can serve as a source of pyruvate in PLP-mediated beta-lyase reactions such as those catalyzed by tryptophanase (EC 4.1.99.1) and/or β-tyrosinase (EC 4.1.99.2, also termed tyrosine-phenol lyase). The rate of beta-lyase reactions can be increased by performing site-directed mutagenesis on the (4.1.99.1-2) polypeptides as described by Mouratou et al. (J. Biol. Chem 274:1320-5, 1999) and in Example 8. These modifications allow the polypeptides to accept dicarboxylic amino acid substrates. Lactate can also serve as a source of pyruvate, and is oxidized to pyruvate by the addition of lactate dehydrogenase and an oxidized cofactor or lactate oxidase and oxygen. Examples of these reactions are described below. For example, as shown in FIG. 2 and FIGS. 11-13, ProA aldolase can be contacted with indole-3-pyruvate when pyruvate is used as the C3 molecule.

The MP can also be generated using chemical reactions, such as the aldol condensations provided in Example 5.

### MP to Monatin

Conversion of MP to monatin can be catalyzed by one or more of: tryptophan aminotransferases (2.6.,1.27), tryptophan dehydrogenases (1.4.1.19), D-amino acid dehydrogenases (1.4.99.1), glutamate dehydrogenases (1.4.1.2-4), phenylalanine dehydrogenase (EC 1.4.1.20), tryptophan-phenylpyruvate transaminases (2.6.1.28), or more generally members of the aminotransferase family (2.6.1.-) such as aspartate aminotransferase (EC 2.6.1.1), tyrosine (aromatic) aminotransferase (2.6.1.5), D-tryptophan aminotransferase, or D-alanine (2.6.1.21) aminotransferase (FIG. 2). Eleven members of the aminotransferase class are described below (Example 1), including a novel member of the class shown in SEQ ID NOS: 11 and 12, and reactions demonstrating the activity of aminotransferase and dehydrogenase enzymes are provided in Example 7.

This reaction can also be performed using chemical reactions. Amination of the keto acid (MP) is performed by reductive amination using ammonia and sodium cyanoborohydride.

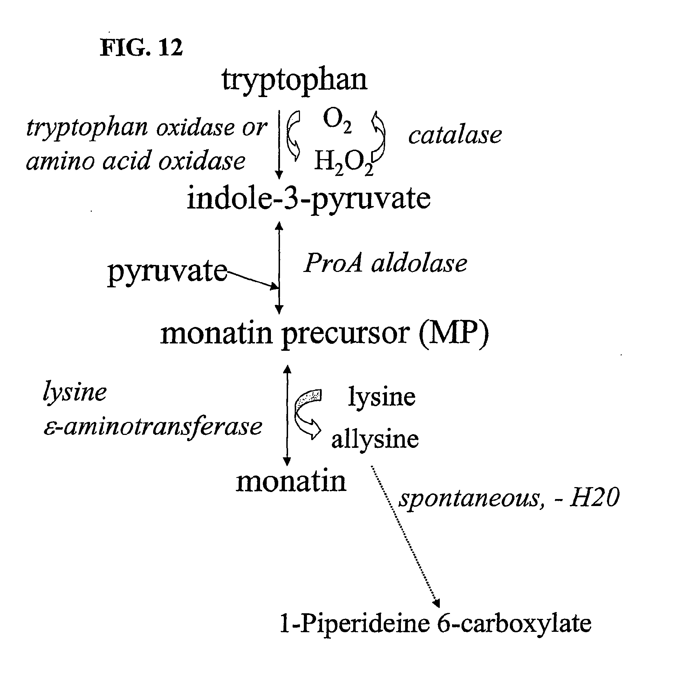

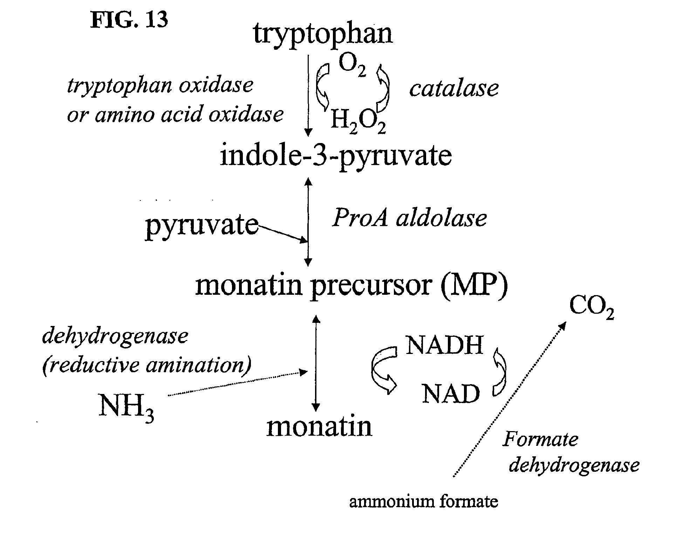

FIGS. 11-13 show additional polypeptides that can be used to convert MP to monatin, as well as providing increased yields of monatin from indole-3-pyruvate or tryptophan. For example, if aspartate is used as the amino donor, aspartate aminotransferase can be used to convert the aspartate to oxaloacetate (FIG. 11). The oxaloacetate is converted to pyruvate and carbon dioxide by a decarboxylase, such as oxaloacetate decarboxylase (FIG. 11). In addition, if lysine is used as the amino donor, lysine epsilon aminotransferase can be used to convert the lysine to allysine (FIG. 12). The allysine is spontaneously converted to 1-piperideine 6-carboxylate (FIG. 12). If a polypeptide capable of catalyzing reductive amination reactions (e.g., glutamate dehydrogenase) is used to convert MP to monatin, a polypeptide that can recycle NAD(P)H and/or produce a volatile product (FIG. 13) can be used, such as formate dehydrogenase.

### Additional Considerations in the Design of the Biosynthetic Pathways

Depending on which polypeptides are used to generate indole-3-pyruvate, MP, and/or monatin, cofactors, substrates, and/or additional polypeptides can be provided to the production cell to enhance product formation. In addition, genetic modification can be designed to enhance production of products such as indole-3-pyruvate, MP, and/or monatin. Similarly, a host cell used for monatin production can be optimized.

### Removal of Hydrogen Peroxide

Hydrogen peroxide (H₂O₂) is a product that, if generated, can be damaging to production cells, polypeptides or products (e.g., intermediates) produced. The L-amino acid oxidase described above generates H₂O₂ as a product. Therefore, if L-amino acid oxidase is used, the resulting H₂O₂ can be removed or its levels decreased to reduce potential injury to the cell or product.

Catalases can be used to reduce the level of H₂O₂ in the cell (FIGS. 11-13). The production cell can express a gene or cDNA sequence that encodes a catalase (EC 1.11.1.6), which catalyzes the decomposition of hydrogen peroxide into water and oxygen gas. For example, a catalase can be expressed from a vector transfected into the production cell. Examples of catalases that can be used include, but are not limited to: tr|Q9EV50 *(Staphylococcus xylosus),* tr|Q9KBE8 *(Bacillus halodurans),* trlQ9URJ7 (*Candida albicans*), tr|P77948 (*Streptomyces coelicolor),* tr|Q9RBJ5 *(Xanthomonas campestris)* (SwissProt Accession Nos.). Biocatalytic reactors utilizing L-amino acid oxidase, D-amino acid oxidase, or tryptophan oxidase can also contain a catalase polypeptide.

### Modulation of pyridoxal-5'-phosphate (PLP) Availability

As shown in FIG. 1, PLP can be utilized in one or more of the biosynthetic steps described herein. The concentration of PLP can be supplemented so that PLP does not become a limitation on the overall efficiency of the reaction.

The biosynthetic pathway for vitamin B₆ (the precursor of PLP) has been thoroughly studied in *E*. *coli,* and some of the proteins have been crystallized (Laber et al., FEBS Letters, 449:45-8, 1999). Two of the genes *(epd* or *gapB* and *serC*) are required in other metabolic pathways, while three genes (*pdxA, pdxB,* and *pdxJ*) are unique to pyridoxal phosphate biosynthesis. One of the starting materials in the *E*. *coli* pathway is 1-deoxy-D-xylulose-5-phosphate (DXP). Synthesis of this precursor from common 2 and 3 carbon central metabolites is catalyzed by the polypeptide 1-deoxy-D-xylulose-5-phosphate synthase (DXS). The other precursor is a threonine derivative formed from the 4-carbon sugar, D-erythrose 4-phosphate. The genes required for the conversion to phospho-4-hydroxyl-L threonine (HTP) are *epd, pdxB,* and *serC.* The last reaction for the formation of PLP is a complex intramolecular condensation and ring-closure reaction between DXP and HTP, catalyzed by the gene products of *pdxA* and *pdxJ.*

If PLP becomes a limiting nutrient during the fermentation to produce monatin, increased expression of one or more of the pathway genes in a production host cell can be used to increase the yield of monatin. A host organism can contain multiple copies of its native pathway genes or copies of non-native pathway genes can be incorporated into the organism's genome. Additionally, multiple copies of the salvage pathway genes can be cloned into the host organism.

One salvage pathway that is conserved in all organisms recycles the various derivatives of vitamin B₆ to the active PLP form. The polypeptides involved in this pathway are *pdxK* kinase, *pdxH* oxidase, and *pdxY* kinase. Over-expression of one or more of these genes can increase PLP availability.

Vitamin B₆ levels can be elevated by elimination or repression of the metabolic regulation of the native biosynthetic pathway genes in the host organism. PLP represses polypeptides involved in the biosynthesis of the precursor threonine derivative in the bacterium *Flavobacterium sp.* strain 238-7. This bacterial strain, freed of metabolic control, overproduces pyridoxal derivatives and can excrete up to 20 mg/L of PLP. Genetic manipulation of the host organism producing monatin in a similar fashion will allow the increased production PLP without over-expression of the biosynthetic pathway genes.

### Ammonium Utilization

Tryptophanase reactions can be driven toward the synthetic direction (production of tryptophan from indole) by making ammonia more available or by removal of water. Reductive amination reactions, such as those catalyzed by glutamate dehydrogenase, can also be driven forward by an excess of ammonium.

Ammonia can be made available as an ammonium carbonate or ammonium phosphate salt in a carbonate or phosphate buffered system. Ammonia can also be provided as ammonium pyruvate or ammonium formate. Alternatively, ammonia can be supplied if the reaction is coupled with a reaction that generates ammonia, such as glutamate dehydrogenase or tryptophan dehydrogenase. Ammonia can be generated by addition of the natural substrates of EC 4.1.99.- (tyrosine or tryptophan), which will be hydrolyzed to phenol or indole, pyruvate and NH₃. This also allows for an increased yield of synthetic product over the normal equilibrium amount by allowing the enzyme to hydrolyze its preferred substrate.

### Removal ofproducts and byproducts

The conversion of tryptophan to indole-3-pyruvate via a tryptophan aminotransferase can adversely affect the production rate of indole-3-pyruvate because the reaction produces glutamate and requires the co-substrate 2-oxoglutarate (α-ketoglutarate). Glutamate can cause inhibition of the aminotransferase, and the reaction can consume large amounts of the co-substrate. Moreover, high glutamate concentrations can be detrimental to downstream separation processes.

The polypeptide glutamate dehydrogenase (GLDH) converts glutamate to 2-oxoglutarate, thereby recycling the co-substrate in the reaction catalyzed by tryptophan aminotransferase. GLDH also generates reducing equivalents (NADH or NADPH) that can be used to generate energy for the cell (ATP) under aerobic conditions. The utilization of glutamate by GLDH also reduces byproduct formation. Additionally, the reaction generates ammonia, which can serve as a nitrogen source for the cell or as a substrate in a reductive amination for the final step shown in FIG. 1. Therefore, a production cell that over-expresses a GLDH polypeptide can be used to increase the yield and reduce the cost of media and/or separation processes.

In the tryptophan to monatin pathway, the amino donor of step three (e.g., glutamate or aspartate) can be converted back to the amino acceptor required for step 1 (e.g., 2-oxo-glutarate or oxaloacetate), if an aminotransferase from the appropriate enzyme classes is used. Utilization of two separate transaminases for this pathway, in which the substrate of one transaminase does not competitively inhibit the activity of the other transaminase, can increase the efficiency of this pathway.

Many of the reactions in the described pathways are reversible and can, therefore, reach an equilibrium between substrates and products. The yield of the pathway can be increased by continuous removal of the products from the polypeptides. For example, secretion of monatin into the fermentation broth using a permease or other transport protein, or selective crystallization of monatin from a biocatalytic reactor stream with concomitant recycle of substrates will increase the reaction yield.

Removal of byproducts via additional enzymatic reactions or via substitution of amino donor groups is another way to increase the reaction yield. Several examples are discussed in Example 13 and shown in FIGS. 11-13. For example, a byproduct can be produced that is unavailable to react in the reverse direction, either by phase change (evaporation) or by spontaneous conversion to an unreactive end product, such as carbon dioxide.

### Modulation of the Substrate Pools

The indole pool can be modulated by increasing production of tryptophan precursors and/or altering catabolic pathways involving indole-3-pyruvate and/or tryptophan.

For example, the production of indole-3-acetic acid from indole-3-pyruvate can be reduced or eliminated by functionally deleting the gene coding for EC 4.1.1.74 in the host cell. Production of indole from tryptophan can be reduced or eliminated by functionally deleting the gene coding for EC 4.1.99.1 in the host cell. Alternatively, an excess of indole can be utilized as a substrate in an *in vitro* or *in vivo* process in combination with increased amounts of the gene coding for EC 4.1.99.1 (Kawasaki et al., J. Ferm. and Bioeng., 82:604-6, 1996). In addition, genetic modifications can be made to increase the level of intermediates such as D-erythrose-4-phosphate and chorismate.

Tryptophan production is regulated in most organisms. One mechanism is via feedback inhibition of certain enzymes in the pathway; as tryptophan levels increase, the production rate of tryptophan decreases. Thus, when using a host cell engineered to produce monatin via a tryptophan intermediate, an organism can be used that is not sensitive to tryptophan concentrations. For example, a strain of *Catharanthus roseus* that is resistant to growth inhibition by various tryptophan analogs was selected by repeated exposure to high concentrations of 5-methyltryptophan (Schallenberg and Berlin, Z Naturforsch 34:541-5, 1979). The resulting tryptophan synthase activity of the strain was less effected by product inhibition, likely due to mutations in the gene. Similarly, a host cell used for monatin production can be optimized.

Tryptophan production can be optimized through the use of directed evolution to evolve polypeptides that are less sensitive to product inhibition. For example, screening can be performed on plates containing no tryptophan in the medium, but with high levels of non-metabolizable tryptophan analogs. U.S. Pat. Nos. 5,756,345; 4,742,007; and 4,371,614 describe methods used to increase tryptophan productivity in a fermentation organism. The last step of tryptophan biosynthesis is the addition of serine to indole; therefore the availability of serine can be increased to increase tryptophan production.

The amount of monatin produced by a fermentation organism can be increased by increasing the amount of pyruvate produced by the host organism. Certain yeasts, such as *Trichosporon cutaneum* (Wang et al., Lett. Appl. Microbiol. 35:338-42, 2002) and *Torulopsis glabrata* (Li et al., Appl Microbiol. Biotechnol. 57:451-9, 2001) overproduce pyruvate and can be used to practice the methods disclosed herein. In addition, genetic modifications can be made to organisms to promote pyruvic acid production, such as those in *E. coli* strain W1485*lip*2 (Kawasaki et al., J. Ferm. and Bioeng. 82:604-6, 1996).

### Controlling Chirality

The taste profile of monatin can be altered by controlling its stereochemistry (chirality). For example, different monatin isomers may be desired in different blends of concentrations for different food systems. Chirality can be controlled via a combination of pH and polypeptides.

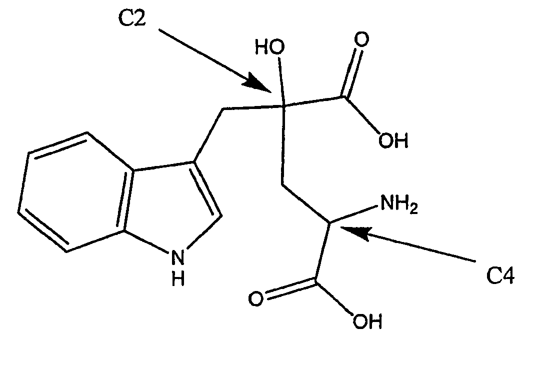

Racemization at the C-4 position of monatin (see numbered molecule above) can occur by deprotonation and reprotonation of the alpha carbon, which can occur by a shift in pH or by reaction with the cofactor PLP bound to an enzyme such as a racemase or free in solution. In a microorganism, the pH is unlikely to shift enough to cause the racemization, but PLP is abundant. Methods to control the chirality with polypeptides depend upon the biosynthetic route utilized for monatin production.

When monatin is formed using the pathway shown in FIG. 2, the following can be considered. In a biocatalytic reaction, the chirality of carbon-2 can be determined by an enzyme that converts indole-3-pyruvate to MP. Multiple enzymes (e.g., from EC 4.1.2.-, 4.1.3.-) can convert indole-3-pyruvate to MP, thus, the enzyme that forms the desired isomer can be chosen. Alternatively, the enantiospecificity of the enzyme that converts indole-3-pyruvate to MP can be modified through the use of directed evolution, or catalytic antibodies can be engineered to catalyze the desired reaction.

Once MP is produced (either enzymatically or by chemical condensation), the amino group can be added stereospecifically using a transaminase, such as those described herein. Either the R or S configuration of carbon-4 can be generated depending on whether a D- or L- aromatic acid aminotransferase is used. Most aminotransferases are specific for the L-isomer; however, D-tryptophan aminotransferases exist in certain plants (Kohiba and Mito, Proceedings of the 8th International Symposium on Vitamin B₆ and Carbonyl Catalysis, Osaka, Japan 1990). Moreover, D-alanine aminotransferases (2.6.1.21), D-methionine-pyruvate aminotransferases (2.6.1.41), and both (R)-3-amino-2-methylpropanoate aminotransferase (2.6.1.61) and (S)-3-amino-2-methylpropanoate aminotransferase (2.6.1.22) have been identified. Certain aminotransferases may only accept the substrate for this reaction with a particular configuration at the C2 carbon. Therefore, even if the conversion to MP is not stereospecific, the stereochemistry of the final product can be controlled through the appropriate selection of a transaminase. Since the reactions are reversible, the unreacted MP (undesired isomer) can be recycled back to its constituents, and a racemic mixture of MP can be reformed.

### Activating Substrates

Phosphorylated substrates, such as phosphoenolpyruvate (PEP), can be used in the reactions disclosed herein. Phosphorylated substrates can be more energetically favorable and, therefore, can be used to increase the reaction rates and/or yields. In aldol condensations, the addition of a phosphate group stabilizes the enol tautomer of the nucleophilic substrate, making it more reactive. In other reactions, a phosphorylated substrate can provide a better leaving group. Similarly, substrates can be activated by conversion to CoA derivatives or pyrophosphate derivatives.

### Use of monatin in a sweetener composition

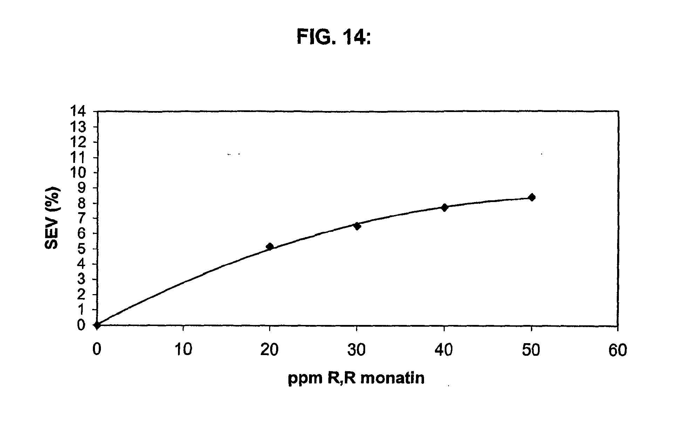

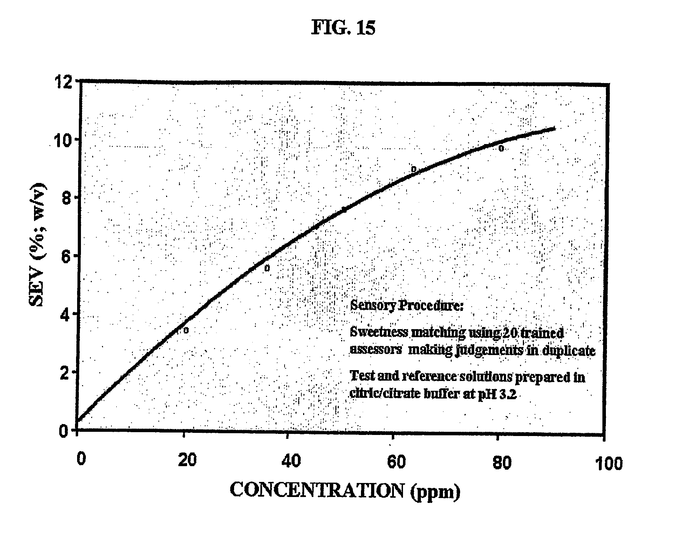

The S,S stereoisomer of monatin is approximately 50-200 times sweeter than sucrose by weight. The R,R stereoisomer of monatin is approximately 2000-2400 times sweeter than sucrose by weight. As discussed above, the sweetness of the monatin is calculated using experienced sensory evaluators in a sweetness comparison procedure, where a test sweetener solution is matched for sweetness intensity against one of a series of reference solutions. The solutions may be prepared, for example, using a buffer comprising 0.16% (v/w) citric acid and 0.02% (v/w) sodium citrate at ~pH 3.0. The intensity sweetness is calculated as the slope in a dose response curve, where the % sucrose is divided by the % monatin. *See e.g.,* FIG. 15 (R,R/S,S monatin dose response curve); FIG. 14 (R,R monatin dose response curve). The above-mentioned monatin sweetness, as compared to sucrose sweetness, is obtained by measuring the slope at 8% sucrose equivalence values ("SEV").

Monatin is soluble in aqueous solutions in concentrations that are appropriate for consumption. Various blends of monatin stereoisomers may be qualitatively better in certain matrices, or in blending with other sweeteners. Blends of monatin with other sweeteners may be used to maximize the sweetness intensity and/or profile, and minimize cost. Monatin may be used in combination with other sweeteners and/or other ingredients to generate a temporal profile similar to sucrose, or for other benefits.

For example, monatin may be blended with other nutritive and nonnutritive sweeteners to achieve particular flavor profiles or calorie targets. Thus, sweetener compositions can include combinations of monatin with one or more of the following sweetener types: (1) sugar alcohols (such as erythritol, sorbitol, maltitol, mannitol, lactitol, xylitol, isomalt, low glycemic syrups, etc.); (2) other high intensity sweeteners (such as aspartame, sucralose, saccharin, acesulfame-K, stevioside, cyclamate, neotame, thaumatin, alitame, dihydrochalcone, monellin, glycyrrihizin, mogroside, phyllodulcin, mabinlin, brazzein, circulin, pentadin, etc.) and (3) nutritive sweeteners (such as sucrose, tagatose, invert sugar, fructose, corn syrup, high fructose corn syrup (HFCS), glucose/dextrose, trehalose, isomaltulose, etc.). Monatin may be used in such blends as a taste modifier to suppress aftertaste, enhance other flavors such as lemon, or improve the temporal flavor profile. Data also indicate that monatin is quantitatively synergistic with cyclamates (which are used in Europe), but no significant quantitative synergy was noted with aspartame, saccharin, acesulfame-K, sucralose, or carbohydrate sweeteners. Because monatin is not a carbohydrate, monatin can be used to partially or fully replace carbohydrate-containing sweeteners.

Monatin is stable in a dry form, and has a desirable taste profile alone or when mixed with carbohydrates. It does not appear to irreversibly break down, but rather forms lactones and/or lactams at low pHs (in aqueous buffers) and reaches an equilibrium.
It can racemize at the 4 position slowly over time in solution, but typically this occurs at high pHs. In general, the stability of monatin is comparable to or better than aspartame (Equal®) and the taste profile of monatin is comparable to or better than other quality sweeteners, such aspartame (Equal®), alitame, and sucralose (Splenda®). Monatin does not have the undesirable aftertaste associated with some other high intensity sweeteners such as saccharin and stevioside.

Formulations of monatin sweeteners may be used as tabletop sugar substitutes. Generally, when making tabletop sugar substitutes, one also employs bulking agents and/or carries to dilute the monatin and allow it to be easily measured.

In one embodiment, one may prepare convenient single-serving packets formulated to provide a sweetness comparable to that in 2 teaspoons (~8 grams) of granulated sugar. Because S,S is 50-200 times sweeter than sucrose, 40-160 mg of S,S monatin delivers a sweetness comparable to that in 8 grams of granulated sugar. Thus, in one embodiment, allowing for +/- 25% sweetness optimization, single-serving packet 1 gram formulations of monatin may comprise approximately 40-200 mg of S,S monatin.

Likewise, because R,R is 2000-2400 times sweeter than sucrose, 3.3-4.0 mg of R,R monatin delivers a sweetness comparable to that in 8 grams of sugar. Thus, in another embodiment, allowing for +/- 25% sweetness optimization, single-serving packet 1 gram formulations of monatin may comprise approximately 3.3-5.0 mg of R,R monatin. In another embodiment, packet formulations may comprise 40-200 mg of S,S monatin, 3.3-5.0 mg of R,R monatin or a combination thereof in the same or lesser amounts per gram total weight, to provide a sweetness comparable to that in 2 teaspoons of granulated sugar.

Tabletop sweetener packets often contain a total of 1 gram and a mixture of high-intensity sweetener and one or more bulking agents or carriers. A number of bulking agents or combinations of agents may be used in preparing the formulations. For example, in some embodiments, monatin can be spray dried with maltodextrin and/or dextrose. Dextrose, for example, provides greater density and still allows for one packet (~1 g) of sweetener to round down to 0 Calories per serving.

In an embodiment, a formulation for a monatin-containing packet (1 g total) includes:
dextrose (nutritive) 0-99.7 wt %
maltodextrin 0-99.7 wt %
3.3-5.0 mg R,R monatin, 40-200 mg S,S monatin or a combination thereof in the same or lesser amounts.

In other embodiments, ready-to-use formulations of tabletop sweeteners are designed to have a sweetness and volume comparable to that of granulated sugar (sucrose). Such formulations can be used "spoon-for-spoon" in place of granulated sugar, which is especially useful in baking recipes. Compared to packet (~1 g) formulations, the ready-to-use "spoon-for-spoon" formulations generally contain more dilutant materials, such as bulking agents and/or carriers, which allow for common household measurements, such as by teaspoon, tablespoon or cup. These formulations typically have a less dense and less granular appearance than the packet versions. Thus, the ready-to-use "spoon-for-spoon" formulations may include different ingredients to reduce the density and allow the formulation to be used as an equal replacement for sugar.

For example, because dextrose is more dense, one may want to use maltodextrin alone when preparing the ready-to-use "spoon-for-spoon" formulations. The light density of maltodextrin allows the sweetener formulation to be used in equal volumes to sugar without accumulating the same (high) level of calories. This approach is especially useful when the monatin sweetener is used by the spoonful or cupful, such as in baking applications.

Because S,S is 50-200 times sweeter than sucrose, 5-20 mg of S,S monatin delivers a sweetness comparable to that in 1 gram of granulated sugar. Thus, in one embodiment, allowing for +/- 25% sweetness optimization, ready-to-use "spoon-for-spoon" formulations may comprise about 5-25 mg of S,S monatin/gram total weight. Likewise, because R,R is 2000-2400 times sweeter than sucrose, 0.4-0.5 mg of R,R monatin delivers a sweetness comparable to that in 1 gram of sugar. Thus, in another embodiment, allowing for +/- 25% sweetness optimization, ready-to-use "spoon-for-spoon" formulations may comprise about 0.4-0.625 mg of R,R monatin. In another embodiment, the ready-to-use formulations may comprise 5-25 mg of S,S monatin, 0.4-0.625 mg of R,R monatin or a combination thereof in the same or lesser amounts per gram total weight, to provide a sweetness comparable to that in granulated sugar.

In another embodiment, a formulation for a ready-to-use sweetener contains approximately 0.2-13 mg monatin per every half gram serving size, spray-dried onto approximately 500 mg maltodextrin.

In other embodiments, one can make monatin compositions in the form of cubes for use, for example, in restaurants. The cubes weigh approximately 8 grams and are of equivalent size to a standard cube of granulate sugar, which is 2.2 cm x 2.2 cm x 1 cm. These cube formulations contain monatin in amounts similar to those described above for the ready-to-use formulations, so that the cubes contain a sweetness comparable to that in the standard sugar cube. Alternatively, one may also make ½ size cubes (4 grams, 1.1 cm x 2.2 cm x 1 cm). These formulations may be prepared to deliver a sweetness comparable to that in a standard sugar cube (and therefore contain approximately two times the sweetness of sucrose by weight).

Monatin tabletop formulations, such as those for packets or for the ready-to-use compositions, may also include other bulking agents or carriers. For instance, the formulations may include one or more fibers, such as inulin, arabinogalactan, hydrolyzed guar gum, polydextrose, microcrystalline cellulose, solka floc, starch, modified starch, resistant starch, resistant maltodextrin, etc. Many fibers are highly soluble in water, have low viscosity, and bland flavor. Fibers are especially useful as a bulking agent because they are less caloric than other bulking agents.

For example, inulin delivers only 1.3 Calories per gram compared to 4 Calories per gram for dextrose. De-sugared inulin, which contains <2% mono- and disaccharides delivers only 1.1 Calories per gram is a particularly good choice. Certain fibers, such as inulin, have the potential to impart a more granular sugar-like appearance to the formulation than maltodextrin, which is commonly used in cup-for-cup sugar substitutes. Fibers also provide the added benefits of fiber fortification, improved gut health, improved calcium absorption, etc. Use of non-digestable carbohydrates, such as fibers or resistant starch derivatives, also results in less sugar content for those concerned with glycemic modulation (e.g., diabetics). For example, one may use resistant starch, resistant maltodextrin and inulin to obtain lower calorie, low glycemic and low insulinogenic carriers or dilutants.

Likewise, monatin formulations may include one or more sugar alcohols, such as erythritol, sorbitol, xylitol, maltitol, mannitol and lactitol. In one embodiment, one may use erythritol in place of other carriers or bulking agents. Erythritol provides certain advantages over dextrose or maltodextrin. For example, erythritol provides little to no calories, as compared to dextrose and maltodextrin-erythritol provides 0-0.2 Calories per gram, while dextrose provides 4 Calories per gram, and maltodextrin provides 2.8-3.2 Calories per gram. See ALTERNATIVE SWEETENERS, 3^{rd} Ed., edited by Lyn O'Brien Nabors, Chapter 13 "Erythritol" by M.E. Embuscado and S. K. Patil (Marcel Dekker, Inc, New York 2001). Also, when maltodextrin is sprayed dried, it looks like a powder rather than granular sugar. Erythritol, on the other hand, is monocrystalized and therefore looks like sugar. Thus, one can add monatin directly on top of erythritol.

In addition, the formulations may also include oligosaccharides, such as fructooligosaccharides, maltooligosaccharide, isomaltooligosaccharides, galatooligsaccharides, soybean oligosaccharides, and lactooligosaccharides. The formulations also may include sugars, such as sucrose, invert sugar, trehalose, isomerized sugar, glucose, fructose, lactose, malt sugar, D-xylose and isomerized lactose, etc. If tablets are made, lactose can be added to increase bulk and shape the tablets.

The monatin and bulking agent combination may be produced by any means, including dry-mixed, co-spray dried, co-freeze dried, agglomerated, blended, co-dried, extruded or other process.

One also may add flavorings and acidulants, such as cream of tartar, to the formulation mixtures for improved flavor, stability, and/or baking performance. One may also add flavor enhancers or stabilizers, such as Sucramask™.

The formulations may also include anti-caking or free-flow agents, such as silicon dioxide (silica), calcium silicate, magnesium silicate, calcium carbonate, sodium aluminosilicate, calcium aluminosilicate, potassium aluminosilicate, monocalcium phosphate, dicalcium phosphate, tricalcium phosphate, talc, mannitol, etc.

In some embodiments, monatin is used in baking. In certain embodiments, honey or molasses is included in baking recipes to promote browning and good texture. For example, certain recipes may call for the addition of a tablespoon of molasses to imitate the coloration due to normal browning of sugars.

In another embodiments, monatin is used to replace many of the polyols that are currently used in candies and other no sugar foods. These polyols have a laxation effect, and in the case of erythritol, also have a cooling effect. Erythritol has substantially less laxation effect than other polyols. Other polyols have cooling effect as much as erythritol. Erythritol, as compared to traditional polyols, such as maltitol, contains fewer calories and a lower glycemic index. Monatin will even further reduce the caloric value and the glycemic index, without significantly increasing the cariogenicity. However, when replacing polyols or other traditional sweeteners (such as sugars) with high intensity sweeteners, bulking agents are required to maintain both the volume and mouthfeel of the product. The most common bulking agents include inulin, maltodextrin, polydextrose, and sorbitol. Inulin can also improve uptake of dietary calcium by the body. Resistant starches and slowly digestible starches can also be utilized as bulking agents or diluents of high intensity sweeteners. Monatin can be used in combination with a number of sweeteners, carbohydrates, and bulking agents.

It is expected that monatin tabletop blends, as compared to other sweeteners, will have a longer shelf-life, greater heat and acid stability, as well as better taste characteristics and marketing advantages.

The present invention as described herein comprises thus the following embodiments:

A tabletop sweetener composition comprising monatin or salt thereof, wherein the composition provides a sweetness comparable to about 0.9 to about 9.0 grams of granulated sugar, preferably wherein a 1 gram portion of the composition provides a sweetness comparable to two teaspoons of granulated sugar, wherein the sweetness may be provided by monatin or salt thereof produced in a biosynthetic pathway, or wherein 1 gram of the composition contains less calories and carbohydrates than about 1 gram of granulated sugar, or wherein 1 gram of the composition comprises from about 0 to about 200 mg S,S monatin or salt thereof, and from about 0 to about 5 mg R,R monatin or salt thereof, or wherein 1 gram of the composition comprises from about 3 to about 200 mg S,S monatin or salt thereof, and from about 0 to about 5 mg R,R monatin or salt thereof, or wherein 1 gram of the composition comprises from about 0 to about 200 mg S,S monatin or salt thereof, and from about 3 to about 5 mg R,R monatin or salt thereof, or wherein 1 gram of the composition comprises about 200 mg or less S,S monatin or salt thereof, and wherein the monatin or salt thereof is substantially free of R,R, S,R or R,S monatin or salt thereof, or wherein 1 gram of the composition comprises about 5 mg of less R,R monatin or salt thereof, and wherein the monatin or salt thereof is substantially fee of S,S, S,R or R,S monatin or salt thereof.

The tabletop sweetener as described above may further comprise at least one ingredient chosen from bulking agents, carriers, fibers, sugar alcohols, oligosaccharides, sugars, non-monatin high intensity sweeteners, nutritive sweeteners, flavorings, flavour enhancers, flavour stabilizers, acidulants, anti-caking agents, and free-flow agents, or may further comprise erythritol, preferably the composition comprises up to 99.7% erythritol.

The tabletop sweetener as described above may also further comprise trehalose, or may further comprise cyclamate, or may further comprise agglomerated dextrose with maltodextrin.

The tabletop sweetener as described above may comprise monatin, wherein the monatin or salt thereof consists essentially of R,R monatin or salt thereof, or wherein the monatin or salt thereof consists essentially of S,S monatin or salt thereof, or wherein the monatin or salt thereof is a stereoisomerically-enriched R,R monatin or salt thereof, preferably at least 95%, or wherein the monatin or salt thereof is a stereoisomerically-enriched S,S monatin or salt thereof.

A ready-to-use sweetener composition comprising monatin or salt thereof, wherein a volume of the composition provides a sweetness comparable to a same volume of granulated sugar, preferably wherein 1 teaspoon of the composition contains less calories and carbohydrates than about 1 teaspoon of granulated sugar, or wherein 1 gram of the composition comprises about 3 to about 25 mg S,S monatin or salt thereof, and from about 0 to about 0.625 mg R,R monatin or salt thereof, or wherein the monatin or salt thereof consists essentially of S,S monatin or salt thereof or R,R monatin or salt thereof, or wherein 1 gram of the composition comprises from about 5 to about 25 mg S,S monatin or salt thereof, or wherein 1 gram of the composition comprises from about 0.4 to about 0.625 R,R monatin or salt thereof, and wherein the monatin or salt thereof is substantially free of S,S, S,R or R,S monatin or salt thereof, or wherein 1 gram of the composition comprises from about 0.5 to about 1 mg R,R monatin or salt thereof, and wherein the monatin or salt thereof is substantially free of S,S, S,R or R,S monatin or salt thereof.

The ready-to-use sweetener as described above may further comprise erythritol. Preferably, the ready-to-use sweetener composition comprises up to 99.7% erythritol.

The ready to use sweetener composition may further comprise trehalose, or further comprise cyclamate.

A sweetener composition comprising a stereoisomerically-enriched monatin mixture, wherein the monatin mixture is produced via a biosynthetic pathway, preferably wherein the biosynthetic pathway is a multi-step pathway and at least one step of the multi-step pathway is a chemical conversion. The mixture of above may be predominantly R,R monatin or salt thereof.

A homogeneous tabletop sweetener composition comprising monatin or salt thereof, wherein a sample of the composition comprises monatin or salt thereof in an amount ranging from more than 2 mg to about 200 mg, and wherein the monatin or salt thereof in the sample provides a sweetness comparable to about 0.9 to about 9.0 grams of granulated sugar, preferably wherein the monatin or salt thereof in the sample provides a sweetness comparable to two teaspoons of granulated sugar. The sample material above may weigh about 1 gram, or comprise an amount of monatin or salt thereof ranging from more than 2 mg to about 5 mg monatin or salt thereof. This composition may be substantially free of S,S monatin or salt thereof. The tabletop sweetener mentioned above may be substantially free of R,R monatin or salt thereof.

A tabletop sweetener composition comprising monatin or salt thereof, wherein a sample of the composition comprises monatin or salt thereof in an amount ranging from more than 2 mg to about 105 mg monatin or salt thereof, and wherein the monatin or salt thereof in the sample provides a sweetness comparable to one teaspoon of granulated sugar.

In the tabletop sweetener described above, the sample may have a volume of about 0.35 ml. The sample may be a cube of granulated material.

A tabletop sweetener composition comprising a monatin composition produced in a biosynthetic pathway, and wherein the monatin composition does not contain petrochemical, toxic or hazardous contaminants.

A tabletop sweetener composition comprising monatin or salt thereof, wherein the monatin or salt thereof is produced in a biosynthetic pathway and isolated from a recombinant cell, and wherein the recombinant cell does not contain petrochemical, toxic or hazardous contaminants.

A method for making a sweetener composition comprising monatin or salt thereof, wherein the method comprises producing monatin or salt thereof from at least one substrate chosen from glucose, tryptophan, indole-3-lactic acid, indole-3-pyruvate and the monatin precursor, preferably the method further comprises combining the monatin or salt thereof with at least one bulking agent chosen from dextrose and maltodextrin, and wherein the monatin or salt thereof comprises about 5 mg R,R monatin or salt thereof per 1 gram of the composition, or further comprises combining the monatin or salt thereof with maltodextrin, and wherein the monatin or salt thereof comprises from about 0.5 to about 1 mg R,R monatin or salt thereof per 1 gram of the composition.

The method may further comprise combining the monatin or salt thereof with erythritol, or combining the monatin or salt thereof with trehalose, or combining the monatin or salt thereof with cyclamate, or combining the monatin or salt thereof with at least one other ingredient that is not monatin or salt thereof.
The at least one other ingredient may be chosen from bulking agents, carriers, fibers, sugar alcohols, oligosaccharides, sugars, non-monatin high intensity sweetners, sutritive sweeteners, falvorings, flavour enhancers, flavour stabilizers, acidulatns, anti-caking, free-flow agents, and any combination thereof.
The at least one other ingredient may be chosen from maltodextrin, dextrose, erythritol and fiber.

A portion of the sweetener composition weighing about 1 gram may comprise from about 0 mg to about 200 mg S,S monatin or salt thereof and from about 0 mg to about 5 mg R,R monatin or salt thereof, and the portion provides a sweetness comparable to two teaspoons of granulated sugar, and preferably the amount of S,S monatin or salt thereof ranges from about 5 to about 200 mg S,S monatin or salt thereof per 1 gram of the composition.
1 gram of the sweetener composition may comprise from about 0 to about 25 mg S,S monatin or salt thereof and from about 0 to about 0.625 mg R,R monatin or salt thereof, and a volume of the composition has a sweetness comparable to a same volume of granulated sugar.
1 gram of the composition may comprise from about 0 to about 25 mg S,S monatin or salt thereof and from about 0 to about 0.625 mg R,R monatin or salt thereof, and 1 gram of the composition has a sweetness comparable to about 0.9 to about 9.0 grams granulated sugar.

The method as described above may further comprise combining S,S monatin or salt thereof with at least one other ingredient chosen from bulking agents, carriers, fibers, sugar alcohols, oligosaccharides, sugars, non-monatin high intensity sweeteners, nutritive sweeteners, flavorings, flavour enhancers, flavour stabilizers, acidulants, anti-caking, free-flow agents, and any combination thereof, wherein the monatin or salt thereof comprises about 3 to about 200 mg of monatin or salt thereof per 1 gram of the composition, or the method may further comprise combining R,R monatin or salt thereof with at least one other ingredient chosen from bulking agents, carriers, fibers, sugar alcohols, oligosaccharides, sugars, non-monatin high intensity sweeteners, nutritive sweeteners, flavorings, flavour enhancers, flavour stabilizers, acidulants, anti-caking, free-flow agents, an any combination thereof, wherein the amount of R,R monatin or salt thereof ranges from about 3 to about 5 mg of R,R monatin or salt thereof per 1 gram of the composition.

In the method described above, the monatin or salt thereof may comprise from about 0.4 to about 5 mg R,R monatin or salt thereof per 1 gram of the composition.

A method for making a sweetener composition comprising a monatin composition, wherein the method comprises: (a) producing monatin or salt thereof in a biosynthetic pathway in a recombinant cell; (b) isolating the monatin composition from the recombinant cell, wherein the monatin composition consists of monatin or salt thereof and other edible or potable material.

A monatin composition comprising monatin and erythritol.

### EXAMPLES

### EXAMPLE 1

### Cloning and Expression of Tryptophan Aminotransferases

This example describes methods that were used to clone tryptophan aminotransferases, which can be used to convert tryptophan to indole-3-pyruvate.

### Experimental Overview

Eleven genes encoding aminotransferases were cloned into *E. coli.* These genes were *Bacillus subtilis* D-alanine aminotransferase (*dat,* Genbank Accession No. Y14082.1 bp 28622-29470 and Genbank Accession No: NP_388848.1, nucleic acid sequence and amino acid sequence, respectively), *Sinorhizobium meliloti* (also termed *Rhizobium meliloti*) tyrosine aminotransferase *(tatA,* SEQ ID NOS: 1 and 2, nucleic acid sequence and amino acid sequence, respectively), *Rhodobacter sphaeroides* strain 2.4.1 tyrosine aminotransferase (*tatA* asserted by homology, SEQ ID NOS: 3 and 4, nucleic acid sequence and amino acid sequence, respectively), *R. sphaeroides* 35053 tyrosine aminotransferase (asserted by homology, SEQ ID NOS: 5 and 6, nucleic acid sequence and amino acid sequence, respectively), *Leishmania major* broad substrate aminotransferase (*bsat,* asserted by homology to peptide fragments from *L. mexicana,* SEQ ID NOS: 7 and 8, nucleic acid sequence and amino acid sequence, respectively), *Bacillus subtilis* aromatic aminotransferase (*araT,* asserted by homology, SEQ ID NOS: 9 and 10, nucleic acid sequence and amino acid sequence, respectively), *Lactobacillus amylovorus* aromatic aminotransferase (*araT* asserted by homology, SEQ ID NOS: 11 and 12, nucleic acid sequence and amino acid sequence, respectively), *R. sphaeroides* 35053 multiple substrate aminotransferase (asserted by homology, SEQ ID NOS: 13 and 14, nucleic acid sequence and amino acid sequence, respectively), *Rhodobacter sphaeroides* strain 2.4.1 multiple substrate aminotransferase (*msa* asserted by homology, Genbank Accession No. AAAE01000093.1, bp 14743-16155 and Genbank Accession No. ZP00005082.1, nucleic acid sequence and amino acid sequence, respectively), *Escherichia coli* aspartate aminotransferase (*aspc,* Genbank Accession No. AE000195.1 bp 2755-1565 and Genbank Accession No. AAC74014.1, nucleic acid sequence and amino acid sequence, respectively), and *E. coli* tyrosine aminotransferase (*tyrB,* SEQ ID NOS: 31 and 32, nucleic acid sequence and amino acid sequence, respectively).

The genes were cloned, expressed, and tested for activity in conversion of tryptophan to indole-3-pyruvate, along with commercially available enzymes. All eleven clones had activity.

### Identification of Bacterial Strains that Can Contain Polypeptides with the Desired Activity

No genes in the NCBI (National Center for Biotechnology Information) database were designated as tryptophan aminotransferases. However, organisms having this enzymatic activity have been identified. L-tryptophan aminotransferase (TAT) activity has been measured in cell extracts or from purified protein from the following sources: Rhizobacterial isolate from *Festuca octoflora,* pea mitochondria and cytosol, sunflower crown gall cells, *Rhizobium leguminosarum* biovar *trifoli, Erwinia herbicola* pv gypsophilae, *Pseudomonas syringae* pv. savastanoi, *Agrobacterium tumefaciens, Azospirillum lipferum & brasilense, Enterobacter cloacae, Enterobacter agglomerans, Bradyrhizobium elkanii, Candida maltosa, Azotobacter vinelandii,* rat brain, rat liver, *Sinorhizobium meliloti, Pseudomonas fluorescens* CHA0, *Lactococcus lactis, Lactobacillus casei, Lactobacillus helveticus,* wheat seedlings, barley, *Phaseolus aureus* (mung bean), *Saccharomyces uvarum* (carlsbergensis), *Leishmania* sp., maize, tomato shoots, pea plants, tobacco, pig, *Clostridium sporogenes,* and *Streptomyces griseus.*

### EXAMPLE 2

### Conversion of Indole-3-lactate to Indole-3-pyruvate

As shown in FIGS. 1 and 3, indole-3-lactic acid can be used to produce indole-3-pyruvate. Conversion between lactic acid and pyruvate is a reversible reaction, as is conversion between indole-3-pyruvate and indole-3-lactate. The oxidation of indolelactate was typically followed due to the high amount of background at 340 nm from indole-3-pyruvate.

The standard assay mixture contained 100 mM potassium phosphate, pH 8.0, 0.3 mM NAD⁺, 7 units of lactate dehydrogenase (LDH) (Sigma-L2395, St. Louis, MO), and 2 mM substrate in 0.1 mL. The assay was performed in duplicate in a UV-transparent microtiter plate, using a Molecular Devices SpectraMax Plus platereader. Polypeptide and buffer were mixed and pipetted into wells containing the indole-3-lactic acid and NAD⁺ and the absorbance at 340 nm of each well was read at intervals of 9 seconds after brief mixing. The reaction was held at 25°C for 5 minutes. The increase in absorbance at 340 nm follows the production of NADH from NAD⁺. Separate negative controls were performed without NAD⁺ and without substrate. D-LDH from *Leuconostoc mesenteroides* (Sigma catalog number L2395) appeared to exhibit more activity with the indole-derivative substrates than did L-LDH from *Bacillus stearothermophilus* (Sigma catalog number L5275).

Similar methods were utilized with D-lactic acid and NAD+ or NADH and pyruvate, the natural substrates of D-LDH polypeptides. The Vₘₐₓ for the reduction of pyruvate was 100-1000 fold higher than the Vₘₐₓ for the oxidation of lactate. The Vₘₐₓ for the oxidation reaction of indole-3-lactic with D-LDH was approximately one-fifth of that with lactic acid. The presence of indole-3-pyruvate was also measured by following the change in absorbance at 327 (the enol-borate derivative) using 50 mM sodium borate buffer containing 0.5 mM EDTA and 0.5 mM sodium arsenate. Small, but repeatable, absorbance changes were observed, as compared to the negative controls for both L and D-LDH polypeptides.

Additionally, broad specificity lactate dehydrogenases (enzymes with activity associated with EC 1.1.1.27, EC 1.1.1.28, and/or EC 1.1.2.3) can be cloned and used to make indole-3-pyruvate from indole-3-lactic acid. Sources of broad specificity dehydrogenases include *E. coli, Neisseria gonorrhoeae,* and *Lactobacillus plantarum.*

Alternatively, indole-3-pyruvate can be produced by contacting indole-3-lactate with cellular extracts from *Clostridium sporogenes* which contain an indolelactate dehydrogenase (EC 1.1.1.110); or *Trypanosoma cruzi epimastigotes* cellular extracts which contain p-hydroxyphenylactate dehydrogenase (EC 1.1.1.222) known to have activity on indole-3-pyruvate; or *Pseudomonas acidovorans* or *E. coli* cellular extracts, which contain an imidazol-5-yl lactate dehydrogenase (EC 1.1.1.111); or *Coleus blumei,* which contains a hydroxyphenylpyruvate reductase (EC 1.1.1.237); or *Candida maltosa* which contains a D-aromatic lactate dehydrogenase (EC 1.1.1.222). References describing such activities include, Nowicki et al. (FEMS Microbiol Lett 71:119-24, 1992), Jean and DeMoss (Canadian J. Microbiol. 14 1968, Coote and Hassall (Biochem. J. 111: 237-9, 1969), Cortese et al. (C.R. Seances Soc. Biol. Fil. 162 390-5,1968), Petersen and Alfermann (Z Naturforsch. C: Biosci. 43 501-4, 1988), and Bhatnagar et al. (J. Gen Microbiol 135:353-60, 1989). In addition, a lactate oxidase such as the one from *Pseudomonas sp.* (Gu et al. J. Mol. Catalysis B: Enzymatic: 18:299-305, 2002), can be utilized for oxidation of indole-3-lactic to indole-3-pyruvate.

### EXAMPLE 3

### Conversion of L-tryptophan to Indole-3-pyruvate utilizing L-amino acid oxidase

This example describes methods used to convert tryptophan to indole-3-pyruvate via an oxidase (EC 1.4.3.2), as an alternative to using a tryptophan aminotransferase as described in Example 1. L-amino acid oxidase was purified from *Crotalus durissus* (Sigma, St. Louis, MO, catalog number A-2805). The accession numbers of L-amino acid oxidases for molecular cloning include: CAD21325.1, AAL14831, NP_490275, BAB78253, A38314, CAB71136, JE0266, T08202, S48644, CAC00499, P56742, P81383, 093364, P81382, P81375, S62692, P23623, AAD45200, AAC32267, CAA88452, AP003600, and Z48565.

Reactions were performed in microcentrifuge tubes in a total volume of 1 mL, incubated for 10 minutes while shaking at 37°C. The reaction mix contained 5 mM L-tryptophan, 100 mM sodium phosphate buffer pH 6.6, 0.5 mM sodium arsenate, 0.5 mM EDTA, 25 mM sodium tetraborate, 0.016 mg catalase (83 U, Sigma C-3515), 0.008 mg FAD (Sigma), and 0.005-0.125 Units of L-amino acid oxidase. Negative controls contained all components except tryptophan, and blanks contained all components except the oxidase. Catalase was used to remove the hydrogen peroxide formed during the oxidative deamination. The sodium tetraborate and arsenate were used to stabilize the enol-borate form of indole-3-pyruvate, which shows a maximum absorbance at 327 nm. Indole-3-pyruvate standards were prepared at concentrations of 0.1-1 mM in the reaction mix.
The purchased L-amino acid oxidase had a specific activity of 540 µg indole-3-pyruvate formed per minute per mg protein. This is the same order of magnitude as the specific activity of tryptophan aminotransferase enzymes.

### EXAMPLE 4

### Converting Indole-3-pyruvate to 2-hydroxy 2-(indol-3-ylmethyl)-4-keto glutaric acid with an Aldolase

This example describes methods that can be used to convert indole-3-pyruvate to MP using an aldolase (lyase) (FIG. 2). Aldol condensations are reactions that form carbon-carbon bonds between the β-carbon of an aldehyde or ketone and the carbonyl carbon of another aldehyde or ketone. A carbanion is formed on the carbon adjacent to the carbonyl group of one substrate, and serves as a nucleophile attacking the carbonyl carbon of the second substrate (the electrophilic carbon). Most commonly, the electrophilic substrate is an aldehyde, so most aldolases fall into the EC 4.1.2.-category. Quite often, the nucleophilic substrate is pyruvate. It is less common for aldolases to catalyze the condensation between two keto-acids or two aldehydes.

However, aldolases that catalyze the condensation of two carboxylic acids have been identified. For example, EP 1045-029 describes the production of L-4-hydroxy-2-ketoglutaric acid from glyoxylic acid and pyruvate using a *Pseudomonas* culture (EC 4.1.3.16). In addition, 4-hydroxy-4-methyl-2-oxoglutarate aldolase (4-hydroxy-4-methyl-2-oxoglutarate pyruvate lyase, EC 4.1.3.17) can catalyze the condensation of two keto acids. Therefore, similar aldolase polypeptides were used to catalyze the condensation of indole-3-pyruvate with pyruvate.

### Cloning

4-Hydroxy-4-methyl-2-oxoglutarate pyruvate lyases (ProA aldolase, EC 4.1.3.17) and 4-hydroxy-2-oxoglutarate glyoxylate-lyase (KHG aldolase, EC 4.1.3.16) catalyze reactions very similar to the aldolase reaction of FIG. 2. Primers were designed with compatible overhangs for the pET30 Xa/LIC vector (Novagen, Madison, WI).

### Activity Results with proA gene products

Both the C. *testosteroni proA* and *S. meliloti SMc00502* gene constructs had high levels of expression when induced with IPTG. The recombinant proteins were highly soluble, as determined by SDS-PAGE analysis of total protein and cellular extract samples. The C. *testosteroni* gene product was purified to > 95% purity. Because the yield of the *S*. *meliloti* gene product was very low after affinity purification using a His-Bind cartridge, cellular extract was used for the enzymatic assays.

Both recombinant aldolases catalyzed the formation of MP from indole-3-pyruvate and pyruvate. The presence of both divalent magnesium and potassium phosphate were required for enzymatic activity. No product was apparent when indole-3-pyruvate, pyruvate, or potassium phosphate was absent. A small amount of the product was also formed in the absence of enzyme (typically one order of magnitude less than when enzyme was present).

The product peak eluted from the reverse phase C18 column slightly later than the indole-3-pyruvate standard, the mass spectrum of this peak showed a collisionally-induced parent ion ([M + H]+) of 292.1, the parent ion expected for the product MP. The major daughter fragments present in the mass spectrum included those with m/z =158 (1*H-*indole-3-carbaldehyde carbonium ion), 168 (3-buta-1,3-dienyl-1*H*-indole carbonium ion), 274 (292 - H₂O), 256 (292 - 2 H₂O), 238 (292 - 3 H2O), 228 (292 - CH4O3), and 204 (loss of pyruvate). The product also exhibited a UV spectrum characteristic of other indole-containing compounds such as tryptophan, with the λₘₐₓ of 279-280 and a small shoulder at approximately 290 nm.

The amount of MP produced by the C. *testosteroni* aldolase increased with an increase in reaction temperature from room temperature to 37°C, amount of substrate, and amount of magnesium. The synthetic activity of the enzyme decreased with increasing pH, the maximum product observed was at pH 7. Based on tryptophan standards, the amount of MP produced under a standard assay using 20 µg of purified protein was approximately 10-40 µg per one mL reaction.

Due to the high degree of homology of the *S. meliloti* and C. *testosteroni* ProA aldolase coding sequences with the other genes described above, it is expected that all of the recombinant gene products can catalyze this reaction. Moreover, it is expected that aldolases that have threonine (T) at positions 59 and 87, arginine (R) at 119, aspartate (D) at 120, and histidine (H) at 31 and 71, (based on the numbering system of C. *testosteroni)* will have similar activity.

### Activity Results with khg gene products

Both the *B. subtilis* and *E. coli* khg gene constructs had high levels of expression of protein when induced with IPTG, while the *S. meliloti* khg had a lower level of expression. The recombinant proteins were highly soluble, as judged by SDS-PAGE analysis of total proteins and cellular extracts. The *B. subtilis* and *E. coli khg* gene products were purified to > 95% purity; the yield of the *S*. *meliloti* gene product was not as high after affinity purification using a His-Bind cartridge.

There is no evidence that magnesium and phosphate are required for activity for this enzyme. However, the literature reports performing the assays in sodium phosphate buffer, and the enzyme reportedly is bifunctional and has activity on phosphorylated substrates such as 2-keto-3-deoxy-6-phosphogluconate (KDPG). The enzymatic assays were performed as described above, and in some instances the phosphate was omitted. The results indicate that the recombinant KHG aldolases produced MP, but were not as active as the ProA aldolases. In some cases the level of MP produced by KHG was almost identical to the amount produced by magnesium and phosphate alone. Phosphate did not appear to increase the KHG activities. The *Bacillus* enzyme had the highest activity, approximately 20-25% higher activity than the magnesium and phosphate alone, as determined by SRM (see Example 10). The *Sinorhizobium* enzyme had the least amount of activity, which can be associated with folding and solubility problems noted in the expression. All three enzymes have the active site glutamate (position 43 in *B. subtilis* numbering system) as well as the lysine required for Sniff base formation with pyruvate (position 130); however, the *B. subtilis* enzyme contains a threonine in position 47, an active site residue, rather than arginine. The *B*. *subtilis* KHG is smaller and appears to be in a cluster distinct from the *S. meliloti* and *E. coli* enzymes, with other enzymes having the active site threonine. The differences in the active site may be the reason for the increased activity of the *B. subtilis* enzyme.

### Improvement of Aldolase Activity

Catalytic antibodies can be as efficient as natural aldolases, accept a broad range of substrates, and can be used to catalyze the reaction shown in FIG. 2.

Aldolases can also be improved by directed evolution, for example as previously described for a KDPG aldolase (highly homologous to KHG described above) evolved by DNA shuffling and error-prone PCR to remove the requirement for phosphate and to invert the enantioselectivity. The KDPG aldolase polypeptides are useful in biochemical reactions since they are highly specific for the donor substrate (herein, pyruvate), but are relatively flexible with respect to the acceptor substrate (i.e. indole-3-pyruvate) (Koeller & Wong, Nature 409:232-9, 2001). KHG aldolase has activity for condensation of pyruvate with a number of carboxylic acids. Mammalian versions of the KHG aldolase are thought to have broader specificity than bacterial versions, including higher activity on 4-hydroxy 4-methyl 2-oxoglutarate and acceptance of both stereoisomers of 4-hydroxy-2-ketoglutarate. Bacterial sources appear to have a 10-fold preference for the R isomer. There are nearly 100 KHG homologs available in genomic databases, and activity has been demonstrated in *Pseudomonas, Paracoccus, Providencia, Sinorhizobium, Morganella, E. coli,* and mammalian tissues. These enzymes can be used as a starting point for tailoring the enantiospecificity that is desired for monatin production.

Aldolases that utilize pyruvate and another substrate that is either a keto acid and/or has a bulky hydrophobic group like indole can be "evolved" to tailor the polypeptide's specificity, speed, and selectivity. In addition to KHG and ProA aldolases demonstrated herein, examples of these enzymes include, but are not limited to: KDPG aldolase and related polypeptides (KDPH); transcarboxybenzalpyruvate hydratase-aldolase from *Nocardioides* st; 4-(2-carboxyphenyl)-2-oxobut-3-enoate aldolase (2'-carboxybenzalpyruvate aldolase) which condenses pyruvate and 2-carboxybenzaldehyde (an aromatic ring-containing substrate); trans-O-hydroxybenzylidenepyruvate hydratase-aldolase from *Pseudomonas putida* and *Sphingomonas aromaticivorans,* which also utilizes pyruvate and an aromatic-containing aldehyde as substrates; 3-hydroxyaspartate aldolase (erythro-3-hydroxy-L-aspartate glyoxylate lyase), which uses 2-oxo acids as the substrates and is thought to be in the organism *Micrococcus denitrificans;* benzoin aldolase (benzaldehyde lyase), which utilizes substrates containing benzyl groups; dihydroneopterin aldolase; L-threo-3-phenylserine benzaldehyde-lyase (phenylserine aldolase) which condenses glycine with benzaldehyde; 4-hydroxy-2-oxovalerate aldolase; 1,2-dihydroxybenzylpyruvate aldolase; and 2-hydroxybenzalpyruvate aldolase.

A polypeptide having the desired activity can be selected by screening clones of interest using the following methods. Tryptophan auxotrophs are transformed with vectors carrying the clones of interest on an expression cassette and are grown on a medium containing small amounts of monatin or MP. Since aminotransferases and aldolase reactions are reversible, the cells are able to produce tryptophan from a racemic mixture of monatin. Similarly, organisms (both recombinant and wildtype) can be screened by ability to utilize MP or monatin as a carbon and energy source. One source of target aldolases is expression libraries of various *Pseudomonas* and rhizobacterial strains. Pseudomonads have many unusual catabolic pathways for degradation of aromatic molecules and they also contain many aldolases; whereas the rhizobacteria contain aldolases, are known to grow in the plant rhizosphere, and have many of the genes described for construction of a biosynthetic pathway for monatin.

### EXAMPLE 5

### Chemical Synthesis of the Monatin Precursor

Example 4 described a method of using an aldolase to convert indole-3-pyruvate to MP. This example describes an alternative method of chemically synthesizing MP. MP can be formed using a typical aldol-type condensation (FIG. 4). Briefly, a typical aldol-type reaction involves the generation of a carbanion of the pyruvate ester using a strong base, such as LDA (lithium diisopropylamide), lithium hexamethyldisilazane or butyl lithium. The carbanion that is generated reacts with the indole-pyruvate to form the coupled product.

Protecting groups that can be used for protecting the indole nitrogen include, but are not limited to: t-butyloxycarbonyl (Boc), and benzyloxycarbonyl (Cbz). Blocking groups for carboxylic acids include, but are not limited to, alkyl esters (for example, methyl, ethyl, benzyl esters). When such protecting groups are used, it is not possible to control the stereochemistry of the product that is formed. However, if R2 and/or R3 are chiral protecting groups (FIG. 4), such as (S)-2-butanol, menthol, or a chiral amine, this can favor the formation of one MP enantiomer over the other.

### EXAMPLE 6

### Conversion of Tryptophan or Indole-3-Pyruvate to Monatin

An *in vitro* process utilizing two enzymes, an aminotransferase and an aldolase, produced monatin from tryptophan and pyruvate. In the first step alpha-ketoglutarate was the acceptor of the amino group from tryptophan in a transamination reaction generating indole-3-pyruvate and glutamate. An aldolase catalyzed the second reaction in which pyruvate was reacted with indole-3-pyruvate, in the presence of Mg²⁺ and phosphate, generating the alpha-keto derivative of monatin (MP), 2-hydroxy-2-(indol-3-ylinethyl)-4-ketoglutaric acid. Transfer of the amino group from the glutamate formed in the first reaction produced the desired product, monatin. Purification and characterization of the product established that the isomer formed was S,S-monatin. Alternative substrates, enzymes, and conditions are described as well as improvements that were made to this process.

### Enzymes

The aldolase, 4-hydroxy-4-methyl-2-oxoglutarate pyruvate lyase (ProA aldolase, *proA* gene) (EC 4.1.3.17) from *Comamonas testosteroni* was cloned, expressed and purified as described in Example 4. The 4-hydroxy-2-oxoglutarate glyoxylate lyases (KHG aldolases) (EC 4.1.3.16) from *B. subtilis, E. coli,* and *S. meliloti* were cloned, expressed and purified as described in Example 4.

The aminotransferases used in conjunction with the aldolases to produce monatin were L-aspartate aminotransferase encoded by the *E. coli aspC* gene, the tyrosine aminotransferase encoded by the *E. coli tyrB* gene, the *S*. *meliloti* TatA enzyme, the broad substrate aminotransferase encoded by the *L. major bsat* gene, or the glutamic-oxaloacetic transaminase from pig heart (Type IIa). The cloning, expression and purification of the non-mammalian proteins are described in Example 1. Glutamic-oxaloacetic transaminase from pig heart (type IIa) was obtained from Sigma (# G7005).

### Method using ProA aldolase and L-aspartate aminotransferase

The reaction mixture contained 50 mM ammonium acetate, pH 8.0, 4 mM MgCl₂, 3 mM potassium phosphate, 0.05 mM pyridoxal phosphate, 100 mM ammonium pyruvate, 50 mM tryptophan, 10 mM alpha-ketoglutarate, 160 mg of recombinant C. *testosteroni* ProA aldolase (unpurified cell extract, ~30% aldolase), 233 mg of recombinant *E. coli* L-aspartate aminotransferase (unpurified cell extract, ~40% aminotransferase) in one liter. All components except the enzymes were mixed together and incubated at 30°C until the tryptophan dissolved. The enzymes were then added and the reaction solution was incubated at 30°C with gentle shaking (100 rpm) for 3.5 hours. At 0.5 and 1 hour after the addition of the enzymes aliquots of solid tryptophan (50 mmoles each) were added to the reaction. All of the added tryptophan did not dissolve, but the concentration was maintained at 50 mM or higher. After 3.5 hours, the solid tryptophan was filtered off. Analysis of the reaction mixture by LC/MS using a defined amount of tryptophan as a standard showed that the concentration of tryptophan in the solution was 60.5 mM and the concentration of monatin was 5.81 mM (1.05 g).

The following methods were used to purify the final product. Ninety percent of the clear solution was applied to a column of BioRad AG50W-X8 resin (225 mL; binding capacity of 1.7 meq/mL). The column was washed with water, collecting 300 mL fractions, until the absorbance at 280 nm was <5% of the first flow through fraction. The column was then eluted with 1 M ammonium acetate, pH 8.4, collecting 4 300-mL fractions. All 4 fractions contained monatin and were evaporated to 105 mL using a roto-evaporator with a tepid water bath. A precipitate formed as the volume reduced and was filtered off over the course of the evaporation process.

Analysis of the column fractions by LC/MS showed that 99% of the tryptophan and monatin bound to the column. The precipitate that formed during the evaporation process contained >97% tryptophan and <2% of monatin. The ratio of tryptophan to product in the supernatant was approximately 2:1.

The supernatant (7 ml) was applied to a 100 mL Fast Flow DEAE Sepharose (Amersham Biosciences) column previously converted to the acetate form by washing with 0.5 L 1 M NaOH, 0.2 L water, 1.0 L of 1.0 M ammonium acetate, pH 8.4, and 0.5 L water. The supernatant was loaded at <2 mL/min and the column was washed with water at 3-4 mL/min until the absorbance at 280 nm was ~0. Monatin was eluted with 100 mM ammonium acetate; pH 8.4, collecting 4 100-mL fractions.

Analysis of the fractions showed that the ratio of tryptophan to monatin in the flow through fractions was 85:15 and the ratio in the eluent fractions was 7:93. Assuming the extinction coefficient at 280 nm of monatin is the same as tryptophan, the eluent fractions contained 0.146 mmole of product. Extrapolation to the total 1L reaction would produce ~2.4 mmoles (~710 mg) of monatin, for a recovery of 68%.

The eluent fractions from the DEAE Sepharose column were evaporated to <20 mL. An aliquot of the product was further purified by application to a C₈ preparative reversed-phase column using the same chromatographic conditions as those described in Example 10 for the analytical-scale monatin characterization. Waters Fractionlynx™ software was employed to trigger automated fraction collection of monatin based on detection of the *mlz* = 293 ion. The fraction from the C₈ column with the corresponding protonated molecular ion for monatin was collected, evaporated to dryness, and then dissolved in a small volume of water. This fraction was used for characterization of the product.

### The resulting product was characterized using the following methods.

**UV/Visible Spectroscopy.** UV/visible spectroscopic measurements of monatin produced enzymatically were carried out using a Cary 100 Bio UV/visible spectrophotometer. The purified product, dissolved in water, showed an absorption maximum of 280 nm with a shoulder at 288 nm, characteristics typical of indole containing compounds.

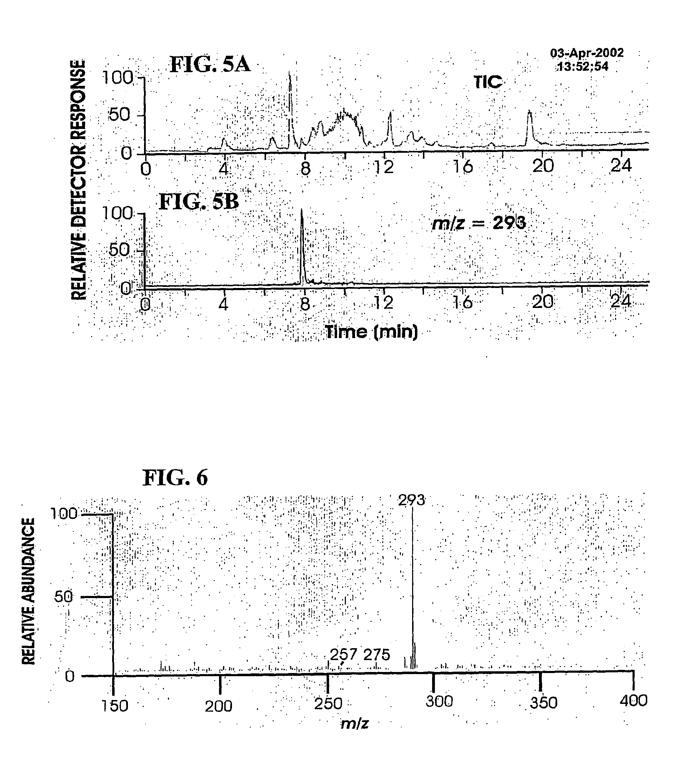

**LC/MS Analysis.** Analyses of mixtures for monatin derived from the *in vitro* biochemical reactions were carried out as described in Example 10. A typical LC/MS analysis of monatin in an *in vitro* enzymatic synthetic mixture is illustrated in FIG. 5. The lower panel of FIG. 5 illustrates a selected ion chromatogram for the protonated molecular ion of monatin at m/z = 293. This identification of monatin in the mixture was corroborated by the mass spectrum illustrated in FIG. 6. Analysis of the purified product by LC/MS showed a single peak with a molecular ion of 293 and absorbance at 280 nm. The mass spectrum was identical to that shown in FIG. 6.

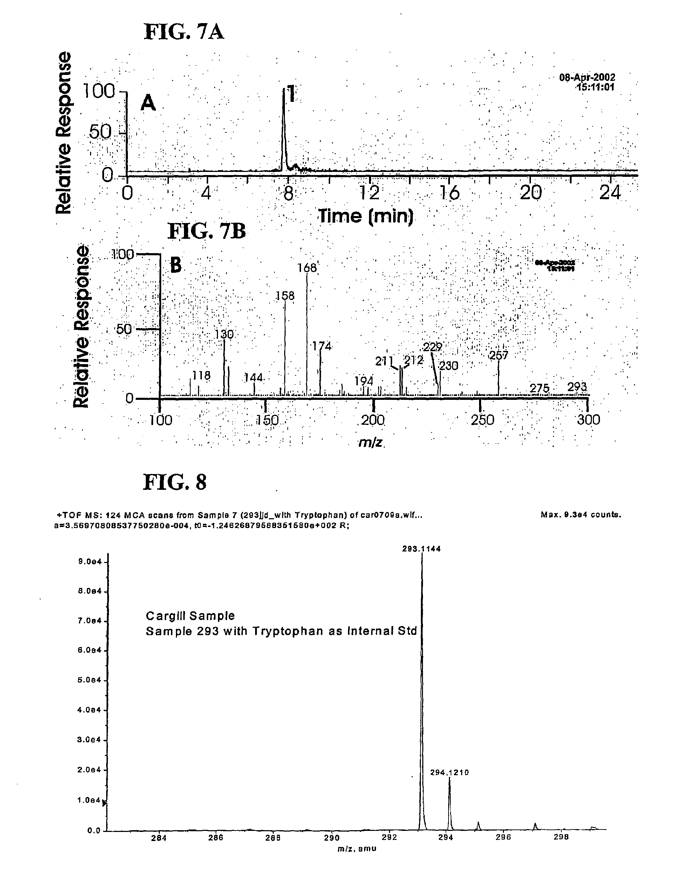

**MS/MS Analysis.** LC/MS/MS daughter ion experiments, as described in Example 10, were also performed on monatin. A daughter ion mass spectrum of monatin is illustrated in FIG. 7. Tentative structural assignments of all fragment ions labeled in FIG. 7 were made. These include fragment ions of *mlz* = 275 (293 - H₂O), 257 (293-(2 x H₂O)), 230 (275-COOH), 212 (257-COOH), 168 (3-buta-1,3-dienyl-1*H-*indole carbonium ion), 158 (1*H-*indole-3-carbaldehyde carbonium ion), 144 (3-ethyl-1*H-*indole carbonium ion), 130 (3-methylene-1*H-*indole carbonium ion), and 118 (indole carbonium ion). Many of these are the same as those obtained for MP (Example 4), as expected if derived from the indole portion of the molecule. Some are 1 mass unit higher than those seen for MP, due to the presence of an amino group instead of a ketone.

**Accurate Mass Measurement of Monatin.** FIG. 8 illustrates the mass spectrum obtained for purified monatin employing an Applied Biosystems-Perkin Elmer Q-Star hybrid quadrupole/time-of-flight mass spectrometer. The measured mass for protonated monatin using tryptophan as an internal mass calibration standard was 293.1144. The calculated mass of protonated monatin, based on the elemental composition C₁₄H₁₇N₂O₅ is 293.1137. This is a mass measurement error of less than 2 parts per million (ppm), providing conclusive evidence of the elemental composition of monatin produced enzymatically.

**NMR Spectroscopy.** The NMR experiments were performed on a Varian Inova 500 MHz instrument. The sample of monatin (∼3 mg) was dissolved in 0.5 ml of D₂O. Initially, the solvent (D₂O) was used as the internal reference at 4.78 ppm. Since the peak for water was large, the ¹H-NMR was run with suppression of the peak for water. Subsequently, due to the broadness of the water peak, the C-2 proton of monatin was used as the reference peak, and set at the published value of 7.192 ppm.

For ¹³C-NMR, an initial run of several hundred scans indicated that the sample was too dilute to obtain an adequate ¹³C spectrum in the allotted time. Therefore, a heteronuclear multiple quantum coherence (HMQC) experiment was performed, which enabled the correlation of the hydrogens and the carbons to which they were attached, and also providing information on the chemical shifts of the carbons.

A summary of the ¹H and HMQC data is shown in Tables 2 and 3. By comparison to published values, the NMR data indicated that the enzymatically produced monatin was either (S,S), (R,R), or a mixture of both.

**Chiral LC/MS Analysis.** To establish that the monatin produced *in vitro* was one isomer, and not a mixture of the (R,R) and (S,S) enantiomers, chiral LC/MS analyses were carried out using the instrumentation described in Example 10.

Chiral LC separations were made using an Chirobiotic T (Advanced Separations Technology) chiral chromatography column at room temperature. Separation and detection, based on published protocols from the vendor, were optimized for the R-(D) and S- (L) isomers of tryptophan. The LC mobile phase consisted of A) water containing 0.05% (v/v) trifluoroacetic acid; B) Methanol containing 0.05% (v/v) trifluoroacetic acid. The elution was isocratic at 70% A and 30% B. The flow rate was 1.0 mL/min, and PDA absorbance was monitored from 200 nm to 400 nm. The instrumental parameters used for chiral LC/MS analysis of tryptophan and monatin are identical to those described in Example 10 for LC/MS analysis. Collection of mass spectra for the region *m*/*z* 150-400 was utilized. Selected ion chromatograms for protonated molecular ions ([M + H]⁺ = 205 for both R- and S-tryptophan and [M + H]⁺ = 293 for monatin) allowed direct identification of these analytes in the mixtures.

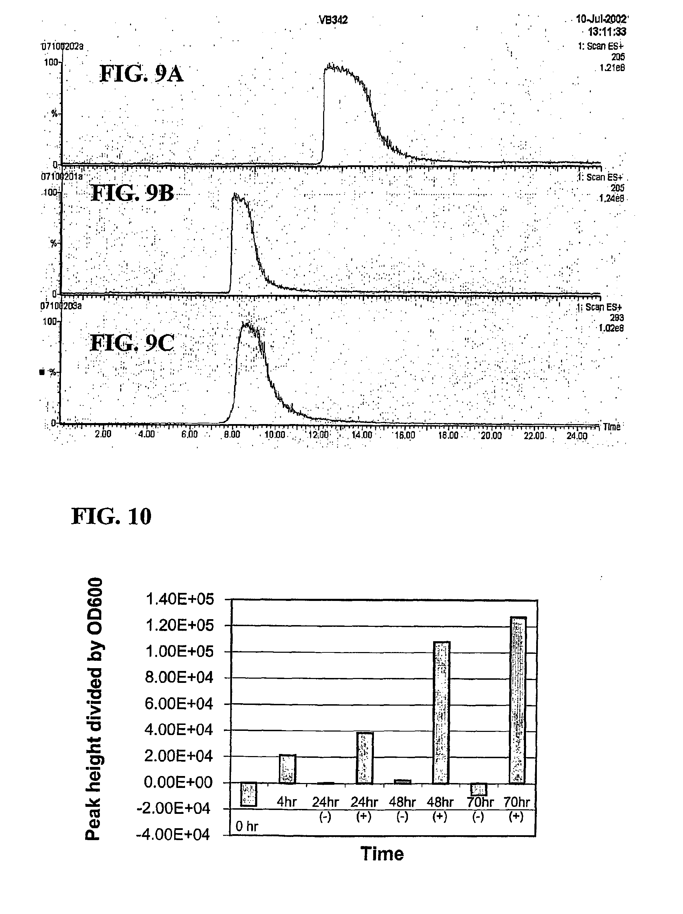

The chromatograms of R- and S-tryptophan and monatin, separated by chiral chromatography and monitored by MS, are shown in FIG. 9. The single peak in the chromatogram of monatin indicates that the compound is one isomer, with a retention time almost identical to S-tryptophan.

**TABLE 2**

| **¹H NMR data** | | | | | | |
|---|---|---|---|---|---|---|
| 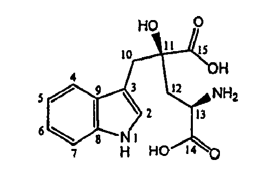 | | | | | | |

| | Cargill | | Vleggaar et al.¹ | | Takeshi et al.² | |
|---|---|---|---|---|---|---|
| **Atom** | δ**_{H}** | **J(HH) Hz** | δ**_{H}** | **J(HH) Hz** | δ**_{H}** | **J(HH) Hz** |
| 2 | 7.192 (1H, s) | | 7.192 (s) | | 7.18 (s) | |
| 4 | 7.671 (d) | 7.99 | 7.686 (d) | 7.9 | 7.67 (d) | 8.0 |
| 5 | 7.104 (dd) | 7.99 | 7.102 (dd) | 8.0,8.0 | 7.11 (dd) | 7.5,7.5 |
| 6 | 7.178 (dd) | * | 7.176 (dd) | 8.0,8.0 | 7.17 (dd) | 7.5,7.5 |
| 7 | 7.439 (d) | 7.99 | 7.439 (d) | 8.1 | 7.43 (d) | 8.0 |
| 10a | 3.242(d) | 14.5 | 3.243 (d) | 14.3 | 3.24 (d) | 14.5 |
| 10b | 3.033 (d) | 14.5 | 3.051 (d) | 14.3 | 3.05 (d) | 14.5 |
| 12 | 2.626 (dd) | 15.5, 1.5 | 2.651 (dd) | 15.3, 1.7 | 2.62 (dd) | 15.5, 1.8 |
| | 2.015 (dd) | 15.0, 12.0 | 2.006 (dd) | 15.3, 11.7 | 2.01 (dd) | 15.5, 12.0 |
| 13 | 3.571 (dd) | 10.75*, 1.5 | 3.168 (dd) | 11.6, 1.8 | 3.57 (dd) | 12.0, 1.8 |

| | | | | | | |
|---|---|---|---|---|---|---|
| ¹ Vleggaar et al. (J.C.S. Perkin Trans. 1:3095-8, 1992). ² Takeshi and Shusuke (JP2002060382, 2002-02-26). | | | | | | |

**TABLE 3**

| **¹³C NMR data (from HMQC spectrum)** | | |
|---|---|---|
| | **Cargill** | **Vleggaar et al.¹** |
| **Atom** | δ**_{C}** | δ**_{C}** |
| 2 | 126.1 | 126.03 |
| 3 | * | 110.31 |
| 4 | 120.4 | 120.46 |
| 5 | 120.2 | 120.25 |
| 6 | 122.8 | 122.74 |
| 7 | 112.8 | 112.79 |
| 8 | * | 137.06 |
| 9 | * | 129.23 |
| 10a | 36.4 | 36.53 |
| 12 | 39.5 | 39.31 |
| 13 | 54.9 | 54.89 |
| 14 | * | 5.30 |
| 15 | * | 181.18 |

| | | |
|---|---|---|
| ¹ Vleggaar et al. (J.C.S Perkin Trans. 1:3095-8, 1992). | | |

**Polarimetry.** The optical rotation was measured on a Rudolph Autopol III polarimeter. The monatin was prepared as a 14.6 mg/mL solution in water. The expected specific rotation ([α]_{D}²⁰) for S,S monatin (salt form) is -49.6 for a 1 g/mL solution in water (Vleggaar *et al*). The observed [α]_{D}²⁰ was -28.1 for the purified, enzymatically produced monatin indicating that it was the S, S isomer.

### Improvements

The reaction conditions, including reagent and enzyme concentrations, were optimized and yields of 5-10 mg/mL were produced using the following reagent mix: 50 mM ammonium acetate pH 8.3, 2 mM MgCl₂, 200 mM pyruvate (sodium or ammonium salt), 5 mM alpha-ketoglutarate (sodium salt), 0.05 mM pyridoxal phosphate, deaerated water to achieve a final volume of 1 mL after the addition of the enzymes, 3 mM potassium phosphate, 50 µg/mL of recombinant ProA aldolase (cell extract; total protein concentration of 167 µg/mL), 1000 µg/mL of L-aspartate aminotransferase encoded by the *E. coli aspC* gene (cell extract; total protein concentration of 2500 µg/mL), and solid tryptophan to afford a concentration of> 60 mM (saturated; some undissolved throughout the reaction). The mixture was incubated at 30°C for 4 hours with gentle stirring or mixing.

### Substitutions

The concentration of alpha-ketoglutarate can be reduced to 1 mM and supplemented with 9 mM aspartate with an equivalent yield of monatin. Alternative amino acid acceptors can be utilized in the first step, such as oxaloacetate.

When recombinant *L. major* broad substrate aminotransferase was used in place of the *E. coli* L-aspartate aminotransferase, similar yields of monatin were achieved. However, a second unidentified product (3-10% of the major product) with a molecular mass of 292 was also detected by LC-MS analysis. Monatin concentrations of 0.1-0.5 mg/mL were produced when the *E. coli tyrB* encoded enzyme, the *S. meliloti tat A* encoded enzyme or the glutamic-oxaloacetic transaminase from pig heart (type IIa) was added as the aminotransferase. When starting the reaction from indole-3-pyruvate, a reductive amination can be done for the last step with glutamate dehydrogenase and NADH (as in Example 7).

The KHG aldolases from *B. subtilis, E. coli,* and *S. meliloti* were also used with the *E. coli* L-aspartate aminotransferase to produce monatin enzymatically. The following reaction conditions were used: 50 mM NH₄-OAc pH 8.3, 2 mM MgCl₂, 200 mM pyruvate, 5 mM glutamate, 0.05 mM pyridoxal phosphate, deaerated water to achieve a final volume of 0.5 mL after the addition of the enzymes, 3 mM potassium phosphate, 20 µg/mL of recombinant *B. subtilis* KHG aldolase (purified), ca. 400 µg/mL of *E. coli* L-aspartate aminotransferase (AspC) unpurified from cell extract, and 12 mM indole-3-pyruvate. The reactions were incubated at 30°C for 30 minutes with shaking. The amount of monatin produced using the *B. subtilis* enzyme was 80 ng/mL, and increased with increasing amounts of aldolase. If indole-3-pyruvate and glutamate were replaced by saturating amounts of tryptophan and 5 mM alpha-ketoglutarate, the production of monatin was increased to 360 ng/mL. Reactions were repeated with 30 µg/mL of each of the three KHG enzymes in 50 mM Tris pH 8.3, with saturating amounts of tryptophan, and were allowed to proceed for an hour in order to increase detection. The *Bacillus* enzyme had the highest activity as in Example 4, producing approximately 4000 ng/mL monatin. The *E. coli* KHG produced 3000 ng/mL monatin, and the *S. meliloti* enzyme produced 2300 ng/mL.

### EXAMPLE 7

### Interconversion between MP and Monatin

The amination of MP to form monatin can be catalyzed by aminotransferases such as those identified in Examples 1 and 6, or by dehydrogenases that require a reducing cofactor such as NADH or NADPH. These reactions are reversible and can be measured in either direction. The directionality, when using a dehydrogenase enzyme, can be largely controlled by the concentration of ammonium salts.

Dehydrogenase activity. The oxidative deamination of monatin was monitored by following the increase in absorbance at 340 nm as NAD(P)+ was converted to the more chromophoric NAD(P)H. Monatin was enzymatically produced and purified as described in Example 6.

A typical assay mixture contained 50 mM Tris-HCl, pH 8.0 to 8.9, 0.33 mM NAD⁺ or NADP⁺, 2 to 22 units of glutamate dehydrogenase (Sigma), and 10-15 mM substrate in 0.2 mL. The assay was performed in duplicate in a UV-transparent microtiter plate, on a Molecular Devices SpectraMax Plus platereader. A mix of the enzyme, buffer, and NAD(P)⁺ were pipetted into wells containing the substrate and the increase in absorbance at 340 nm was monitored at 10 second intervals after brief mixing. The reaction was incubated at 25°C for 10 minutes. Negative controls were carried out without the addition of substrate, and glutamate was utilized as a positive control. The type III glutamate dehydrogenase from bovine liver (Sigma # G-7882) catalyzed the conversion of the monatin to the monatin precursor at a rate of conversion approximately one-hundredth the rate of the conversion of glutamate to alpha-ketoglutarate.

**Transamination activity.** Monatin aminotransferase assays were conducted with the aspartate aminotransferase (AspC) from *E. coli,* the tyrosine aminotransferase (TyrB) from *E. coli,* the broad substrate aminotransferase (BSAT) from *L. major,* and the two commercially available porcine glutamate-oxaloacetate aminotransferases described in Example 1. Both oxaloacetate and alpha-ketoglutarate were tested as the amino acceptor. The assay mixture contained (in 0.5 mL) 50 mM Tris-HCl, pH 8.0, 0.05 mM PLP, 5 mM amino acceptor, 5 mM monatin, and 25 µg of aminotransferase. The assays were incubated at 30°C for 30 minutes, and the reactions were stopped by addition of 0.5 mL isopropyl alcohol. The loss of monatin was monitored by LC/MS (Example 10). The highest amount of activity was noted with *L. major* BSAT with oxaloacetate as the amino acceptor, followed by the same enzyme with alpha-ketoglutarate as the amino acceptor. The relative activity with oxaloacetate was: BSAT > AspC > porcine type IIa > porcine type I =TyrB. The relative activity with alpha-ketoglutarate was: BSAT > AspC > porcine type I > porcine type IIa > TyrB.

### EXAMPLE 8

### Production of Monatin from Tryptophan and C3 Sources Other than Pyruvate

As described above in Example 6, indole-3-pyruvate or tryptophan can be converted to monatin using pyruvate as the C3 molecule. However, in some circumstances, pyruvate may not be a desirable raw material. For example, pyruvate may be more expensive than other C3 carbon sources, or may have adverse effects on fermentations if added to the medium. Alanine can be transaminated by many PLP-enzymes to produce pyruvate.
Tryptophanase-like enzymes perform beta-elimination reactions at faster rates than other PLP enzymes such as aminotransferases. Enzymes from this class (4.1.99.-) can produce ammonia and pyruvate from amino acids such as L-serine, L-cysteine, and derivatives of serine and cysteine with good leaving groups such as O-methyl-L-serine, O-benzyl-L-serine, S-methylcysteine, S-benzylcysteine, S-alkyl-L-cysteine, O-acyl-L-serine, 3-chloro-L-alanine.

Processes to produce monatin using EC 4.1.99.- polypeptides can be improved by mutating the β-tyrosinase (TPL) or tryptophanase according to the method of Mouratou et al. (J. Biol. Chem 274:1320-5, 1999). Mouratou *et al.* describe the ability to covert the β-tyrosinase into a dicarboxylic amino acid β-lyase, which has not been reported to occur in nature. The change in specificity was accomplished by converting valine (V) 283 to arginine (R) and arginine (R) 100 to threonine (T).
These amino acid changes allow for the lyase to accept a dicarboxylic amino acid for the hydrolytic deamination reaction (such as aspartate). Aspartate, therefore, can also be used as a source of pyruvate for subsequent aldol condensation reactions.

Additionally, cells or enzymatic reactors can be supplied with lactate and an enzyme that converts lactate to pyruvate. Examples of enzymes capable of catalyzing this reaction include lactate dehydrogenase and lactate oxidase.

The reaction mixture consisted of 50 mM Tris-Cl pH 8.3, 2 mM MgCl₂, 200 mM C3 carbon source, 5 mM alpha-ketoglutarate, sodium salt, 0.05 mM pyridoxal phosphate, deaerated water to achieve a final volume of 0.5 mL after the addition of the enzymes, 3 mM potassium phosphate pH 7.5, 25 µg of crude recombinant *C. testosteroni* ProA aldolase as prepared as in Example 4, 500 µg of crude L-aspartate aminotransferase (AspC) as prepared in Example 1, and solid tryptophan to afford a concentration of> 60 mM (saturated; some undissolved throughout the reaction). The reaction mix was incubated at 30°C for 30 minutes with mixing. Serine, alanine, and aspartate were supplied as 3-carbon sources. Assays were performed with and without secondary PLP enzymes (purified) capable of performing beta-elimination and beta-lyase reactions (tryptophanase (TNA), double mutant tryptophanase, β-tyrosinase (TPL)). The results are shown in Table 4:

**TABLE 4**

| Production of monatin utilizing alternative C3-carbon sources | | |
|---|---|---|
| **C3-carbon source** | **Additional PLP Enzyme** | **Relative Activity** |
| none | None | 0% |
| pyruvate | None | 100% |
| serine | None | 3% |
| serine | 11 µg wildtype TNA (1 U) | 5.1% |
| serine | 80 µg double mutant TNA | 4.6% |
| alanine | None | 32% |
| alanine | 11 µg wildtype TNA | 41.7% |
| alanine | 80 µg mutant TNA | 43.9% |
| aspartate | 110 µg wildtype TNA (10 U) | 7.7% |
| aspartate | 5 U wildtype TPL (crude) | 5.1% |
| aspartate | 80 µg mutant TNA | 3.3% |

The monatin produced from alanine and serine as 3-carbon sources was verified by LC/MS/MS daughter scan analysis, and was identical to the characterized monatin produced in Example 6. Alanine was the best alternative tested, and was transaminated by the AspC enzyme. The amount of monatin produced was increased by addition of the tryptophanase, which is capable of transamination as a secondary activity. The amount of monatin produced with serine as a carbon source nearly doubled with the addition of the tryptophanase enzymes, even though only one-fifth of the amount of tryptophanase was added in comparison to the aminotransferase. AspC is capable of some amount of beta-elimination activity alone. The results with aspartate indicate that the tryptophanase activity on aspartate does not increase with the same site-directed mutations as previously suggested for β-tyrosinase. It is expected that the mutant β-tyrosinase will have higher activity for production of monatin.

### EXAMPLE 9

### Chemical Synthesis of Monatin

The addition of alanine to indole-3-pyruvic acid produces monatin, and this reaction can be performed synthetically with a Grignard or organolithium reagent.

For example, to 3-chloro- or 3-bromo-alanine which has been appropriately blocked at the carboxyl and amino groups, is added magnesium under anhydrous conditions. Indole-3-pyruvate (appropriately blocked) is then added to form the coupled product followed by removal of the protecting groups to form monatin. Protecting groups that are particularly useful include THP (tetrahydropyranyl ether) which is easily attached and removed.

### EXAMPLE 10

### Detection of Tryptophan, Monatin, and MP

This example describes methods used to detect the presence of monatin, or its precursor 2-hydroxy 2-(indol-3-ylmethyl)-4-keto glutaric acid.

### LC/MS Analysis

Analyses of mixtures for monatin, MP, and/or tryptophan derived from *in vitro* or *in vivo* biochemical reactions were performed using a Waters/Micromass liquid chromatography-tandem mass spectrometry (LC/MS/MS) instrument including a Waters 2690 liquid chromatograph with a Waters 996 Photo-Diode Array (PDA) absorbance monitor placed in series between the chromatograph and a Micromass Quattro Ultima triple quadrupole mass spectrometer. LC separations were made using a Supelco Discovery C₁₈ reversed-phase chromatography column, 2.1mm x 150 mm, or an Xterra MS C₈ reversed-phase chromatography column, 2.1 mm x 250 mm, at room temperature. The LC mobile phase consisted of A) water containing 0.05% (v/v) trifluoroacetic acid and B) methanol containing 0.05% (v/v) trifluoroacetic acid.

The gradient elution was linear from 5% B to 35% B, 0-9 min, linear from 35% B to 90% B, 9-16 min, isocratic at 90% B, 16-20 min, linear from 90% B to 5% B, 20-22 min, with a 10 min re-equilibration period between runs. The flow rate was 0.25 mL/min, and PDA absorbance was monitored from 200 nm to 400 nm. All parameters of the ESI-MS were optimized and selected based on generation of protonated molecular ions ([M + H]⁺) of the analytes of interest, and production of characteristic fragment ions.

The following instrumental parameters were used for LC/MS analysis of monatin: Capillary: 3.5 kV; Cone: 40 V; Hex 1: 20 V; Aperture: 0 V; Hex 2: 0 V; Source temperature: 100°C; Desolvation temperature: 350°C; Desolvation gas: 500 L/h; Cone gas: 50 L/h; Low mass resolution (Q1): 15.0; High mass resolution (Q1): 15.0; Ion energy: 0.2; Entrance: 50V; Collision Energy: 2; Exit: 50V; Low mass resolution (Q2): 15; High mass resolution (Q2): 15; Ion energy (Q2): 3.5; Multiplier: 650. Uncertainties for reported mass/charge ratios (m/z) and molecular masses are ± 0.01 %. Initial detection of the alpha-keto acid form of monatin (MP) and monatin in the mixtures was accomplished by LC/MS monitoring with collection of mass spectra for the region *m*/*z* 150-400. Selected ion chromatograms for protonated molecular ions ([M + H]⁺ = 292 for MP, [M + H]⁺ = 293 for monatin) allowed direct identification of these analytes in the mixtures.

### MS/MS Analysis

LC/MS/MS daughter ion experiments were performed on monatin as follows. A daughter ion analysis involves transmission of the parent ion (e.g., *m*/*z* = 293 for monatin) of interest from the first mass analyzer (Q1) into the collision cell of the mass spectrometer, where argon is introduced and chemically dissociates the parent into fragment (daughter) ions. These fragment ions are then detected with the second mass analyzer (Q2), and can be used to corroborate the structural assignment of the parent. Tryptophan was characterized and quantified in the same way via transfmission and fragmentation of *m*/*z* = 205.

### The following instrumental parameters were used for LC/MS/MS analysis of monatin:

Capillary: 3.5 kV; Cone: 40 V; Hex 1: 20 V; Aperture: 0 V; Hex 2: 0 V; Source temperature: 100 °C; Desolvation temperature: 350 °C; Desolvation gas: 500 L/h; Cone gas: 50 L/h; Low mass resolution (Q1): 13.0; High mass resolution (Q1): 13.0; Ion energy: 0.2; Entrance: -5 V; Collision Energy: 14; Exit: 1V; Low mass resolution (Q2): 15; High mass resolution (Q2): 15; Ion energy (Q2): 3.5; Multiplier: 650.

### High-Throughput Determination of Monatin and Tryptophan

High-throughput analyses (< 5 min/sample) of mixtures for monatin and tryptophan derived from *in vitro* or *in vivo* reactions were carried out using instrumentation described above, and the same parameters as described for LC/MS/MS. LC separations were made using a 4.6 mm x 50 mm Advanced Separation Technologies Chirobiotic T column at room temperature. The LC mobile phase consisted of A) water containing 0.25% acetic acid; B) Methanol containing 0.25% acetic acid. The isocratic elution was at 50% B, 0-5 min. The flow rate was 0.6 mL/min. All parameters of the ESI-MS/MS system were optimized and selected based on optimal in-source generation of the protonated molecular ion of tryptophan and the internal standard ²H₅-tryptophan, as well as collision-induced production of amino acid-specific fragment ions for multiple reaction monitoring (MRM) experiments (Table 1). The following instrumental parameters were used for LC/MS/MS analysis of monatin and tryptophan in the positive ion multiple reaction monitoring (mrm) mode: Capillary: 3.5 kV; Cone: 20 V; Hex 1: 15 V; Aperture: 1 V; Hex 2: 0 V; Source temperature: 100 °C; Desolvation temperature: 350 °C; Desolvation gas: 500 L/h; Cone gas: 40 L/h; Low mass resolution (Q1): 12.0; High mass resolution (Q1): 12.0; Ion energy: 0.2; Entrance: - 5 V; Collision Energy: 14; Exit: 1 V; Low mass resolution (Q2): 15; High mass resolution (Q2): 15; Ion energy (Q2): 0.5; Multiplier: 650. MRM parameters: Interchannel delay: 0.03 s; Interscan delay: 0.03 s; Dwell: 0.05 s.

### Accurate Mass Measurement of Monatin.

High resolution MS analysis was carried out using an Applied Biosystems-Perkin Elmer Q-Star hybrid quadrupole/time-of-flight mass spectrometer. The measured mass for protonated monatin used tryptophan as an internal mass calibration standard. The calculated mass of protonated monatin, based on the elemental composition C₁₄H₁₇N₂O₅ is 293.1137. Monatin produced using the biocatalytic process described in Example A showed a measured mass of 293.1144. This is a mass measurement error of less than 2 parts per million (ppm), providing conclusive evidence of the elemental composition of monatin produced enzymatically.

### EXAMPLE 11

### Production of Monatin in Bacteria

This example describes methods used to produce monatin in *E. coli* cells. One skilled in the art will understand that similar methods can be used to produce monatin in other bacterial cells. In addition, vectors containing other genes in the monatin synthesis pathway (FIG. 2) can be used.

Trp-1 + glucose medium, a minimal medium that has been used for increased production of tryptophan in *E. coli* cells (Zeman et al. Folia Microbiol. 35:200-4, 1990), was prepared as follows. To 700 mL nanopure water the following reagents were added: 2 g (NH₄)₂SO₄, 13.6 g KH₂PO₄, 0.2 g MgSO_{4*}7H₂0, 0.01 g CaCl_{2*}2H₂0, and 0.5 mg FeSO_{4*}7H₂0. The pH was adjusted to 7.0, the volume was increased to 850 mL, and the medium was autoclaved. A 50% glucose solution was prepared separately, and sterile-filtered. Forty mL was added to the base medium (850 mL) for a 1 L final volume.

A 10 g/L L-tryptophan solution was prepared in 0.1 M sodium phosphate pH 7, and sterile-filtered. One-tenth volume was typically added to cultures as specified below. A 10% sodium pyruvate solution was also prepared and sterile-filtered. A 10 mL aliquot was typically used per liter of culture. Stocks of ampicillin (100 mg/mL), kanamycin (25 mg/mL) and IPTG (840 mM) were prepared, sterile-filtered, and stored at -20°C before use. Tween 20 (polyoxyethylene 20-Sorbitan monolaurate) was utilized at a 0.2% (vol/vol) final concentration. Ampicillin was used at non-lethal concentrations, typically 1-10 µg/mL final concentration.

Fresh plates of *E. coli* BL21(DE3)::*C*. *testosteroni proAl*pET 30 Xa/LIC (described in Example 4) were prepared on LB medium containing 50 µg/mL kanamycin. Overnight cultures (5 mL) were inoculated from a single colony and grown at 30°C in LB medium with kanamycin. Typically a 1 to 50 inoculum was used for induction in trp-1 + glucose medium. Fresh antibiotic was added to a final concentration of 50 mg/L. Shake flasks were grown at 37°C prior to induction.

Cells were sampled every hour until an OD₆₀₀ of 0.35-0.8 was obtained. Cells were then induced with 0.1 mM IPTG, and the temperature reduced to 34 °C. Samples (1 ml) were collected prior to induction (zero time point) and centrifuged at 5000 x g. The supernatant was frozen at -20°C for LC/MS analysis. Four hours post-induction, another 1 mL sample was collected, and centrifuged to separate the broth from the cell pellet. Tryptophan, sodium pyruvate, ampicillin, and Tween were added as described above.

The cells were grown for 48 hours post-induction, and another 1 mL sample was taken and prepared as above. At 48 hours, another aliquot of tryptophan and pyruvate were added. The entire culture volume was centrifuged after approximately 70 hours of growth (post-induction), for 20 minutes at 4°C and 3500 rpm. The supernatant was decanted and both the broth and the cells were frozen at -80°C. The broth fractions were filtered and analyzed by LC/MS. The heights and areas of the [M+H]⁺ = 293 peaks were monitored as described in Example 10. The background level of the medium was subtracted. The data was also normalized for cell growth by plotting the height of the [M+H]⁺ = 293 peak divided by the optical density of the culture at 600 nm.

Higher levels of monatin were produced when pyruvate, ampicillin, and Tween were added 4 hours post induction rather than at induction. Other additives such as PLP, additional phosphate, or additional MgCl₂ did not increase the production of monatin. Higher titers of monatin were obtained when tryptophan was utilized instead of indole-3-pyruvate, and when the tryptophan was added post-induction rather than at inoculation, or at induction. Prior to induction, and 4 hours post-induction (at time of substrate addition), there was typically no detectable level of monatin in the fermentation broth or cellular extracts. Negative controls were done utilizing cells with pET30a vector only, as well as cultures where tryptophan and pyruvate were not added. A parent MS scan demonstrated that the compound with (m+1)/z = 293 was not derived from larger molecules, and daughter scans (performed as in Example 10) were similar to monatin made *in vitro.*

The effect of Tween was studied by utilizing 0,0.2% (vol/vol), and 0.6% final concentrations of Tween-20. The highest amount of monatin produced by shake flasks was at 0.2% Tween. The ampicillin concentration was varied between 0 and 10 µg/mL. The amount of monatin in the cellular broth increased rapidly (2.5 X) between 0 and 1 µg/mL, and increased 1.3 X when the ampicillin concentration was increased from 1 to 10 µg/mL.

A time course experiment showing typical results is shown in FIG. 10. The amount of monatin secreted into the cell broth increased, even when the values are normalized for cell growth. By using the molar extinction coefficient of tryptophan, the amount of monatin in the broth was estimated to be less than 10 µg/mL. The same experiment was repeated with the cells containing vector without *proA* insert. Many of the numbers were negative, indicating the peak height at m/z=293 was less in these cultures than in the medium alone (FIG. 10). The numbers were consistently lower when tryptophan and pyruvate were absent, demonstrating that monatin production is a result of an enzymatic reaction catalyzed by the aldolase enzyme.

The *in vivo* production of monatin in bacterial cells was repeated in 800 mL shake flask experiments and in fermentors. A 250 mL sample of monatin (in cell-free broth) was purified by anion exchange chromatography and preparative reverse-phase liquid chromatography. This sample was evaporated, and submitted for high resolution mass analysis (described in Example 6). The high resolution MS indicated that the metabolite being produced is monatin.

*In vitro* assays indicate that aminotransferase needs to be present at higher levels than aldolase (see Example 6), therefore the aspartate aminotransferase from *E. coli* was overexpressed in combination with the aldolase gene to increase the amount of monatin produced. Primers were designed to introduce *C*. *testosteroni proA* into an operon with *aspC*/pET30 Xa/LIC, as follows: 5' primer: ACTCGGATCCGAAGGAGATATACATATGTACGAACTGGGACT (SEQ ID NO: 67) and 3' primer: CGGCTGTCGACCGTTAGTCAATATATTTCAGGC (SEQ ID NO: 68). The 5' primer contains a BamHI site, the 3' primer contains a SalI site for cloning. PCR was performed as described in Example 4, and gel purified. The *aspCl*pET30 Xa/LIC construct was digested with BamHI and S_{A}lI, as was the PCR product. The digests were purified using a Qiagen spin column. The *proA* PCR product was ligated to the vector using the Roche Rapid DNA Ligation kit (Indianapolis, IN) according to manufacturer's instructions. Chemical transformations were done using Novablues Singles (Novagen) as described in Example 1. Colonies were grown up in LB medium containing 50 mg/L kanamycin and plasmid DNA was purified using the Qiagen spin miniprep kit. Clones were screened by restriction digest analysis and sequence was confirmed by Seqwright (Houston, TX). Constructs were subcloned into BLR(DE3), BLR(DE3)pLysS, BL21(DE3) and BL21(DE3)pLysS (Novagen). The *proA*/pET30 Xa/LIC construct was also transformed into BL21(DE3)pLysS.

Initial comparisons of BLR(DE3) shake flask samples under the standard conditions described above demonstrated that the addition of the second gene (*aspC)* improved the amount of monatin produced by seven-fold. To hasten growth, BL21(DE3)-derived host strains were used. The *proA* clones and the two gene operon clones were induced in Trp-1 medium as above, the pLysS hosts had chloramphenicol (34 mg/L) added to the medium as well. Shake flask experiments were performed with and without the addition of 0.2% Tween-20 and 1 mg/L ampicillin. The amount of monatin in the broth was calculated using *in vitro* produced purified monatin as a standard. SRM analyses were performed as described in Example 10. Cells were sampled at zero, 4 hours, 24 hours, 48 hours, 72 hours, and 96 hours of growth.

The results are shown in Table 5 for the maximum amounts produced in the culture broths. In most instances, the two gene construct gave higher values than the *proA* construct alone. The pLysS strains, which should have leakier cell envelopes, had higher levels of monatin secreted, even though these strains typically grow at a slower rate. The additions of Tween and ampicillin were beneficial.

**Table 5**

| Amount of Monatin Produced by *E. coli* Bacteria | | | | |
|---|---|---|---|---|
| **Construct** | **Host** | **Tween + Amp** | **µg/mL monatin** | **time** |
| *proA* | BL21(DE3) | - | 0.41 | 72 hr |
| *proA* | BL21 (DE3) | + | 1.58 | 48 hr |
| *proA* | BL21(DE3)pLysS | - | 1.04 | 48 hr |
| *proA* | BL21(DE3)pLysS | + | 1.60 | 48 hr |
| *aspC:proA* | BL21(DE3) | - | 0.09 | 48 hr |
| *aspC:proA* | BL21(DE3) | + | 0.58 | 48 hr |
| *aspC:proA* | BL21(DE3)pLysS | - | 1.39 | 48 hr |
| *aspC:proA* | BL21(DE3)pLysS | + | 6.68 | 48 hr |

### EXAMPLE 12

### Production of Monatin in Yeast

This example describes methods used to produce monatin in eukaryotic cells. One skilled in the art will understand that similar methods can be used to produce monatin in any cell of interest. In addition, other genes can be used (e.g., those listed in FIG. 2) in addition to, or alternatively to those described in this example.

The pESC Yeast Epitope Tagging Vector System (Stratagene, La Jolla, CA) was used to clone and express the *E. coli aspC* and *C. testosteroni proA* genes into *Saccharomyces cerevisiae.* The pESC vectors contain both the GAL 1 and the GAL10 promoters on opposite strands, with two distinct multiple cloning sites, allowing for expression of two genes at the same time. The pESC-His vector also contains the *His3* gene for complementation of histidine auxotrophy in the host (YPH500). The GAL1 and GAL10 promoters are repressed by glucose and induced by galactose; a Kozak sequence is utilized for optimal expression in yeast. The pESC plasmids are shuttle vectors, allowing the initial construct to be made in *E. coli* (with the *bla* gene for selection); however, no bacterial ribosome binding sites are present in the multiple cloning sites.

The following primers were designed for cloning into pESC-His (restriction sites are underlined, Kozak sequence is in bold): *aspC* (*Bam*HI/*Sal*I), GAL1: 5'-CGCGGATCC**ATAATGG**TTGAGAACATTACCG-3'(SEQ ID NO: 69) and 5'-ACGCGTCGACTTACAGCACTGCCACAATCG-3' (SEQ ID NO: 70). *proA* (*Eco*RI/*Not*I), GAL10: 5'-CCGGAATTC**ATAATGG**TCGAACTGGGAGTTGT-3' (SEQ ID NO: 71) and 5'-GAATGCGGCCGCTTAGTCAATATATTTCAGGCC-3' (SEQ ID NO: 72).

The second codon for both mature proteins was changed from an aromatic amino acid to valine due to the introduction of the Kozak sequence. The genes of interest were amplified using pET30 Xa/LIC miniprep DNA from the clones described in Examples 1 and Example 4 as template. PCR was performed using an Eppendorf Master cycler gradient thermocycler and the following protocol for a 50 µL reaction: 1.0 µL template, 1.0 µM of each primer, 0.4 mM each dNTP, 3.5 U Expand High Fidelity Polymerase (Roche, Indianapolis, IN), and 1X Expand^{™} buffer with Mg. The thermocycler program used consisted of a hot start at 94°C for 5 minutes, followed by 29 repetitions of the following steps: 94°C for 30 seconds, 50°C for 1 minute 45 seconds, and 72°C for 2 minutes 15 seconds. After the 29 repetitions the sample was maintained at 72°C for 10 minutes and then stored at 4°C. The PCR products were purified by separation on a 1% TAE-agarose gel followed by recovery using a QIAquick Gel Extraction Kit (Qiagen, Valencia, CA).

The pESC-His vector DNA (2.7 µg) was digested with *Bam*HI/*Sal*I and gel-purified as above. The *aspC* PCR product was digested with *Bam*HI/*Sal*I and purified with a QIAquick PCR Purification Column. Ligations were performed with the Roche Rapid DNA Ligation Kit following the manufacturer's protocols. Desalted ligations were electroporated into 40 µl Electromax DH10B competent cells (Invitrogen) in a 0.2 cm Biorad disposable cuvette using a Biorad Gene Pulser II with pulse controller plus, according to the manufacturer's instructions. After 1 hour of recovery in 1 mL of SOC medium, the transformants were plated on LB medium containing 100 µg/mL ampicillin. Plasmid DNA preparations for clones were done using QIAprep Spin Miniprep Kits. Plasmid DNA was screened by restriction digest, and sequenced (Seqwright) for verification using primers designed for the vector.

The *aspC* /pESC-His clone was digested with *Eco*RI and *Not*I, as was the *proA* PCR product. DNA was purified as above, and ligated as above. The two gene construct was transformed into DH10B cells and screened by restriction digest and DNA sequencing.

The construct was transformed into S. *cerevisiae* strain YPH500 using the S.c. EasyComp™ Transformation Kit (Invitrogen). Transformation reactions were plated on SC-His minimal medium (Invitrogen pYES2 manual) containing 2% glucose. Individual yeast colonies were screened for the presence of the *proA* and *aspC* genes by colony PCR using the PCR primers above. Pelleted cells (2 µl) were suspended in 20 µL of Y-Lysis Buffer (Zymo Research) containing 1 µl of zymolase and heated at 37°C for 10 minutes. Four µL of this suspension was then used in a 50 µL PCR reaction using the PCR reaction mixture and program described above.

Five mL cultures were grown overnight on SC-His + glucose at 30°C and 225 rpm. The cells were gradually adjusted to growth on raffinose in order to minimize the lag period prior to induction with galactose. After approximately 12 hours of growth, absorbance measurements at 600 nm were taken, and an appropriate volume of cells was spun down and resuspended to give an OD of 0.4 in the fresh SC-His medium. The following carbon sources were used sequentially: 1% raffinose + 1 % glucose, 0.5% glucose + 1.5% raffinose, 2% raffinose, and finally 1% raffinose + 2% galactose for induction.

After approximately 16 hours of growth in induction medium, the 50 mL cultures were divided into duplicate 25 mL cultures, and the following were added to only one of the duplicates: (final concentrations) 1 µ/L L-tryptophan, 5 mM sodium phosphate pH 7.1, 1 g/L sodium pyruvate, 1 mM MgCl₂. Samples of broths and cell pellets from the non-induction medium, and from the 16 hour cultures prior to addition of substrates for the monatin pathway, were saved as negative controls. In addition, constructs containing only a functional *aspC* gene (and a truncated *proA* gene) were utilized as another negative control. The cells were allowed to grow for a total of 69 hours post-induction. Occasionally the yeast cells were induced at a lower OD, and only grown for 4 hours prior to addition of tryptophan and pyruvate. However, these monatin substrates appear to inhibit growth and the addition at higher OD was more effective.

The cell pellets from the cultures were lysed with 5 mL of YeastBuster™ + 50 µl THP (Novagen) per gram (wet weight) of cells following manufacturer's protocols, with the addition of protease inhibitors and benzonase nuclease as described in previous examples. The culture broth and cell extracts were filtered and analyzed by SRM as described in Example 10. Using this method, no monatin was detected in the broth samples, indicating that the cells could not secrete monatin under these conditions. The proton motive force may be insufficient under these conditions or the general amino acid transporters may be saturated with tryptophan. Protein expression was not at a level that allowed for detection of changes using SDS-PAGE.

Monatin was detectable (approximately 60 ng/mL) transiently in cell extracts of the culture with two functional genes, when tryptophan and pyruvate were added to the medium. Monatin was not detected in any of the negative control cell extracts. *In vitro* assays for monatin were performed in duplicate with 4.4 mg/mL of total protein (about double what is typically used for *E. coli* cell extracts) using the optimized assay described in Example 6. Other assays were performed with the addition of either 32 µg/mL C. *testosteroni* ProA aldolase or 400 µg/mL AspC aminotransferase, to determine which enzyme was limiting in the cell extract. Negative controls were performed with no addition of enzyme, or the addition of only AspC aminotransferase (the aldol condensation can occur to some extent without enzyme). Positive controls were performed with partially pure enzymes (30-40%), using 16 µg/mL aldolase and 400 µg/mL aminotransferase.

*In vitro* results were analyzed by SRM. The analysis of cell extracts showed that tryptophan was effectively transported into the cells when it was added to the medium post-induction, resulting in tryptophan levels two orders of magnitude higher than those in which no additional tryptophan was added. The results for *in vitro* monatin analysis are shown in Table 6 (numbers indicate ng/mL).

**Table 6**

| Monatin production with yeast cell extracts | | | | | | |
|---|---|---|---|---|---|---|
| | ***aspC* construct** | **+ aldolase** | **+ AspC** | **two-gene construct** | **+ aldolase** | **+ AspC** |
| repressed (glucose medium) | 0 | 888.3 | 173.5 | 0 | 465.2 | 829 |
| 24 hr induced | 0 | 2832.8 | 642.4 | 0 | 1375.6 | 9146.6 |
| 69 hr induced | 0 | 4937.3 | 340.3 | 71.9 | 1652.8 | 23693.5 |
| 69 hr + subs. | 0 | 556.9 | 659.1 | 21.9 | 755.6 | 16688.2 |
| + control (purified enzymes) | 21853 | | | 21853 | | |
| -control (no enzymes) | 0 | | 254.3 | 0 | | 254.3 |

Positive results were obtained with the full two-gene construct cell extracts with and without substrate added to the growth medium. These results, in comparison to the positive controls, indicate that the enzymes were expressed at levels of close to 1% of the total protein in yeast. The amount of monatin produced when the cell extract of the *aspC* construct (with truncated *proA*) was assayed with aldolase was significantly greater than when cell extracts were assayed alone, and indicates that the recombinant AspC aminotransferase comprises approximately 1-2% of the yeast total protein. The cell extracts of uninduced cultures had a small amount of activity when assayed with aldolase due to the presence of native aminotransferases in the cells. When assayed with AspC aminotransferase, the activity of the extracts from uninduced cells increased to the amount of monatin produced by the negative control with AspC (ca. 200 ng/ml). In contrast, the activity observed when assaying the two gene construct cell extract increases more when aminotransferase is supplemented than when aldolase is added. Since both genes should be expressed at the same level, this indicates that the amount of monatin produced is maximized when the level of aminotransferase is higher than that of aldolase, in agreement with results shown in Example 6.

The addition of pyruvate and tryptophan not only inhibits cellular growth, but apparently inhibits protein expression as well. The addition of the pESC-Trp plasmid can be used to correct for tryptophan auxotrophy of the YPH500 host cells, to provide a means of supplying tryptophan with fewer effects on growth, expression, and secretion.

### EXAMPLE 13

### Improvement of Enzymatic Processes using Coupled Reactions

In theory, if no side reactions or degradation of substrates or intermediates occurs, the maximum amount of product formed from the enzymatic reaction illustrated in FIG. 1 is directly proportional to the equilibrium constants of each reaction, and the concentrations of tryptophan and pyruvate. Tryptophan is not a highly soluble substrate, and concentrations of pyruvate greater than 200 mM appear to have a negative effect on the yield (see Example 6).

Ideally, the concentration of monatin is maximized with respect to substrates, in order to decrease the cost of separation. Physical separations can be performed such that the monatin is removed from the reaction mixture, preventing the reverse reactions from occuring. The raw materials and catalysts can then be regenerated. Due to the similarity of monatin in size, charge, and hydrophobicity to several of the reagents and intermediates, physical separations will be difficult unless there is a high amount of affinity for monatin (such as an affinity chromatography technique). However, the monatin reactions can be coupled to other reactions such that the equilibrium of the system is shifted toward monatin production. The following are examples of processes for improving the yield of monatin obtained from tryptophan or indole-3-pyruvate.

### Coupled reactions using oxaloacetate decarboxylase (EC 4.1.1.3)

FIG. 11 is an illustration of the reaction. Tryptophan oxidase and catalase are utilized to drive the reaction in the direction of indole-3-pyruvate production. Catalase is used in excess such that hydrogen peroxide is not available to react in the reverse direction or to damage the enzymes or intermediates. Oxygen is regenerated during the catalase reaction. Alternatively, indole-3-pyruvate can be used as the substrate.

Aspartate is used as the amino donor for the amination of MP, and an aspartate aminotransferase is utilized. Ideally, an aminotransferase that has a low specificity for the tryptophan/indole-3-pyruvate reaction in comparison to the MP to monatin reaction is used so that the aspartate is not utilized to reaminate the indole-3-pyruvate. Oxaloacetate decarboxylase (from *Pseudomonas sp.*) can be added to convert the oxaloacetate to pyruvate and carbon dioxide. Since CO₂ is volatile, it is not available for reaction with the enzymes, decreasing or even preventing the reverse reactions. The pyruvate produced in this step can also be utilized in the aldol condensation reaction. Other decarboxylase enzymes can be used, and homologs are known to exist in *Actinobacillus actinomycetemcomitans, Aquifex aeolicus, Archaeoglobus fulgidus, Azotobacter vinelandii, Bacteroides fragilis,* several *Bordetella* species, *Campylobacter jejuni, Chlorobium tepidum, Chloroflexus aurantiacus, Enterococcus faecalis, Fusobacterium nucleatum, Klebsiella pneumoniae, Legionella pneumophila, Magnetococcus MC-1, Mannheimia haemolytica, Methylobacillus flagellatus KT, Pasteurella multocida* Pm70, *Petrotoga miotherma, Porphyromonas gingivalis,* several *Pseudomonas* species, several *Pyrococcus* species, *Rhodococcus,* several *Salmonella* species, several *Streptococcus* species, *Thermochromatium tepidum, Thermotoga maritima, Treponema pallidum,* and several *Vibrio* species.

Tryptophan aminotransferase assays were performed with the aspartate aminotransferase (AspC) from *E. coli,* the tyrosine aminotransferase (TyrB) from *E. coli,* the broad substrate aminotransferase (BSAT) from *L. major,* and the two commercially available porcine glutamate-oxaloacetate aminotransferases as described in Example 1. Both oxaloacetate and alpha-ketoglutarate were tested as the amino acceptor. The ratio of activity using monatin (Example 7) versus activity using tryptophan was compared, to determine which enzyme had the highest specificity for the monatin aminotransferase reaction. These results indicated that the enzyme with the highest specificity for the monatin reaction verses the tryptophan reaction is the Porcine type II-A glutamate-oxaloacetate aminotransferase, GOAT (Sigma G7005). This specificity was independent of which amino acceptor was utilized. Therefore, this enzyme was used in the coupled reactions with oxaloacetate decarboxylase.

A typical reaction starting from indole-3-pyruvate included (final concentrations) 50 mM Tris-Cl pH 7.3, 6 mM indole-3-pyruvate, 6 mM sodium pyruvate, 6 mM aspartate, 0.05 mM PLP, 3 mM potassium phosphate, 3 mM MgCl₂, 25 µg/mL aminotransferase, 50 µg/mL *C*. *testosteroni* ProA aldolase, and 3 Units/mL of decarboxylase (Sigma 04878). The reactions were allowed to proceed for 1 hour at 26°C. In some cases, the decarboxylase was omitted or the aspartate was substituted with alpha-ketoglutarate (as negative controls). The aminotransferase enzymes described above were also tested in place of the GOAT to confirm earlier specificity experiments. Samples were filtered and analyzed by LC/MS as described in Example 10. The results demonstrate that the GOAT enzyme produced the highest amount of monatin per mg of protein, with the least amount of tryptophan produced as a byproduct. In addition, there was a 2-3 fold benefit from having the decarboxylase enzyme added. The *E. coli* AspC enzyme also produced large amounts of monatin in comparison to the other aminotransferases.

Monatin production was increased by: 1) periodically adding 2 mM additions of indole-pyruvate, pyruvate, and aspartate (every half hour to hour), 2) performing the reactions in an anaerobic environment or with degassed buffers, 3) allowing the reactions to proceed overnight, and 4) using freshly prepared decarboxylase that has not been freeze-thawed multiple times. The decarboxylase was inhibited by concentrations of pyruvate greater than 12 mM. At concentrations of indole-3-pyruvate higher than 4 mM, side reactions with indole-3-pyruvate were hastened. The amount of indole-3-pyruvate used in the reaction could be increased if the amount of aldolase was also increased. High levels of phosphate (50 mM) and aspartate (50 mM) were found to be inhibitory to the decarboxylase enzyme. The amount of decarboxylase enzyme added could be reduced to 0.5 U/mL with no decrease in monatin production in a one hour reaction. The amount of monatin produced increased when the temperature was increased from 26°C to 30°C and from 30°C to 37°C; however, at 37°C the side reactions of indole-3-pyruvate were also hastened. The amount of monatin produced increased with increasing pH from 7 to 7.3, and was relatively stable from pH 7.3-8.3.

A typical reaction starting with tryptophan included (final concentrations) 50 mM Tris-Cl pH 7.3, 20 mM tryptophan, 6 mM aspartate, 6 mM sodium pyruvate, 0.05 mM PLP, 3 mM potassium phosphate, 3 mM MgCl₂, 25 µg/mL aminotransferase, 50 µg/mL C. *testosteroni* ProA aldolase, 4 Units/mL of decarboxylase, 5-200 mU/mL L-amino acid oxidase (Sigma A-2805), 168 U/mL catalase (Sigma C-3515), and 0.008 mg FAD. Reactions were carried out for 30 minutes at 30°C. Improvement was observed with the addition of decarboxylase. The greatest amount of monatin was produced when 50 mU/mL of oxidase was used. Improvements were similar to those observed when indole-3-pyruvate was used as the substrate. In addition, the amount of monatin produced increased when 1) the tryptophan level was low (i.e., below the Kₘ of the aminotransferase enzyme and therefore unable to compete with MP in the active site), and 2) the ratio of oxidase to aldolase and aminotransferase was maintained at a level such that indole-3-pyruvate could not accumulate.

Whether starting with either indole-3-pyruvate or tryptophan, the amount of monatin produced in assays with incubation times of 1-2 hours increased when 2-4 times the amounts of all the enzymes were used while maintaining the same enzyme ratio. Using either substrate, concentrations of approximately 1 mg/mL of monatin were achieved. The amount of tryptophan produced if starting from indole-pyruvate was typically less than 20% of the amount of product, which shows the benefit of utilizing coupled reactions. With further optimization and control of the concentrations of intermediates and side reactions, the productivity and yield can be improved greatly.

### Coupled reactions using lysine epsilon aminotransferase (EC 2.6.1.36)

Lysine epsilon aminotransferase (L-Lysine 6-transaminase) is found in several organisms, including *Rhodococcus, Mycobacterium, Streptomyces, Nocardia, Flavobacterium, Candida utilis,* and *Streptomyces.* It is utilized by organisms as the first step in the production of some beta-lactam antibiotics (Rius and Demain, J. Microbiol. Biotech., 7:95-100, 1997). This enzyme converts lysine to L-2-aminoadipate 6-semialdehyde (allysine), by a PLP-mediated transamination of the C-6 of lysine, utilizing alpha-ketoglutarate as the amino acceptor. Allysine is unstable and spontaneously undergoes an intramolecular dehydration to form 1-piperideine 6-carboxylate, a cyclic molecule. This effectively inhibits any reverse reaction from occuring. The reaction scheme is depicted in FIG. 12. An alternative enzyme, lysine-pyruvate 6-transaminase (EC 2.6.1.71), can also be used.

A typical reaction contained in 1 mL: 50 mM Tris-HCl pH 7.3, 20 mM indole-3-pyruvate, 0.05 mM PLP, 6 mM potassium phosphate pH 8, 2-50 mM sodium pyruvate, 1.5 mM MgCl₂, 50 mM lysine, 100 µg aminotransferase (lysine epsilon aminotransferase LAT-101, BioCatalytics Pasadena, CA), and 200 µg C. *testosteroni* ProA aldolase. The amount of monatin produced increased with increasing concentrations of pyruvate. The maximum amount using these reaction conditions (at 50 mM pyruvate) was 10-fold less than what was observed with coupled reactions using oxaloacetate decarboxylase (approximately 0.1 mg/mL).

A peak with [M+H]⁺ = 293 eluted at the expected time for monatin and the mass spectrum contained several of the same fragments observed with other enzymatic processes. A second peak with the correct mass to charge ratio (293) eluted slightly earlier than what is typically observed for the S,S monatin produced in Example 6, and may indicate the presence of another isomer of monatin. Very little tryptophan was produced by this enzyme. However, there is likely some activity on pyruvate (producing alanine as a byproduct). Also, the enzyme is known to be unstable. Improvements can be made by performing directed evolution experiments to increase stability, reduce the activity with pyruvate, and increase the activity with MP. These reactions can also be coupled to L-amino acid oxidase/catalase as described above.

### Other coupled reactions

Another coupling reaction that can improve monatin yield from tryptophan or indole-pyruvate is shown in FIG. 13. Formate dehydrogenase (EC 1.2.1.2 or 1.2.1.43) is a common enzyme. Some formate dehydrogenases require NADH while others can utilize NADPH. Glutamate dehydrogenase catalyzed the interconversion between the monatin precursor and monatin in previous examples, using ammonium based buffers. The presence of ammonium formate and formate dehydrogenase is an efficient system for regeneration of cofactors, and the production of carbon dioxide is an efficient way to decrease the rate of the reverse reactions (Bommarius et al., Biocatalysis 10:37, 1994 and Galkin et al. Appl. Environ. Microbiol. 63:4651-6, 1997). In addition, large amounts of ammonium formate can be dissolved in the reaction buffer. The yield of monatin produced by glutamate dehydrogenase reactions (or similar reductive aminations) can be improved by the addition of formate dehydrogenase and ammonium formate.

Other processes can be used to drive the equilibrium toward monatin production. For instance, if aminopropane is utilized as the amino acid donor in the conversion of MP to monatin with an omega-amino acid aminotransferase (EC 2.6.1.18) such as those described by in US patents 5,360,724 and 5,300,437, one of the resulting products would be acetone, a more volatile product than the substrate, aminopropane. The temperature can be raised periodically for short periods to flash off the acetone, thereby alleviating equilibrium. Acetone has a boiling point of 47°C, a temperature not likely to degrade the intermediates if used for short periods of time. Most aminotransferases that have activity on alpha-ketoglutarate also have activity on the monatin precursor. Similarly, if a glyoxylate/aromatic acid aminotransferase (EC 2.6.1.60) is used with glycine as the amino donor, glyoxylate is produced which is relatively unstable and has a highly reduced boiling point in comparison to glycine.

### EXAMPLE 14: Packet Formulations Comprising Monatin

Packet formulations comprising monatin are prepared to deliver the sweetness of about 2 teaspoons of sugar (approximately 8 grams).

### A. Packet formulation with S,S monatin (per gram):

787 mg Dextrose
200 mg S,S monatin
10 mg Cream of Tartar
3 mg Calcium Silicate

### B. Packet formulation with R,R and S,S monatin (per gram)

700 mg Dextrose
292 mg Maltodextrin
4 mg R,R monatin
4 mg S, S monatin

### C. Packet formulation with R,R and S,S monatin (per gram)

992mg agglomerated dextrose with maltodextrin*
4mg R,R monatin
4mg S,S monatin
* For example, Unidex® Agglomerated Dextrose 02540 (2034) from CPC International, Inc.

### D. Packet formulation with R,R monatin (per gram):

500 mg Dextrose
495 mg Maltodextrin
5 mg R,R monatin

### E. Half-sized cube with R,R monatin (per gram):

999 mg Maltodextrin
1 mg R,R monatin

### EXAMPLE 15: Recipes for Packet Formulations Comprising Monatin

The following are examples of how monatin packet formulations, such as those disclosed above, may be used as sugar substitutes in baking and other recipes. The monatin-containing products produced using the following recipes are proposed to be acceptable and of good quality compared to the same products prepared with sugar.

### Lemonade:

Mix 2 tablespoons of lemon juice and 3 packets (3 g) of a monatin packet formulation with ¾ cup of water in a tall glass until dissolved. Add ice. The monatin-sweetened lemonade will be nearly equivalent in sweetness and equally preferred to the lemonade sweetened with 6 teaspoons (24 g) sucrose and will have significantly fewer calories (about 0 Calories versus 96 Calories).

### Whipped Topping

1/3 cup ice water
1¼ teaspoon lemon juice
½ teaspoon vanilla
1/3 cup nonfat dry milk powder
3 packets monatin sugar substitute (per Example C)

Combine water, lemon juice and vanilla. Stir in nonfat dry milk powder. Beat 10 minutes or until stiff. Add monatin sugar substitute packets and beat 2 minutes.

### Sucrose-free sponge cake data sheet

| Ingredients | % w/w |
|---|---|
| cake flour | 20.42 |
| water | 18.62 |
| whole egg | 18.2 |
| polydextrose | 17.23 |
| High Ratio Shortening | 13.44 |
| Sorbitol Powder | 8.62 |
| Skimmed Milk Powder | 1.66 |
| Baking Powder | 1.24 |
| Salt | 0.31 |
| R,R Monatin (to desired taste) | 0.010-0.040 |

For every 100 g of cake, 10-40 mg of R,R monatin are used (provided by, for example, 3-10 packets of tabletop monatin sweetener).

### EXAMPLE 16: Ready-to-use Formulations Comprising Monatin

"Spoon for spoon" ready-to-use formulations are prepared to be used in place of granulated sugar. Because monatin formulations may have the same volume of sugar, one may add these formulations straight to beverages or food, or use them directly in baking as a direct and equal substitute for granulated sugar.

### A. Ready-to-use formulation with S,S monatin (per gram):

188 mg Hydrolyzed Starch
800 mg Maltodextrin
10 mg S,S monatin
2 mg Sodium Gluconate

### B. Ready-to-use formulation with R,R monatin (per gram):

999.5 mg Maltodextrin
0.5 mg R,R monatin

### C. Ready-to-use formulation with S,S/R,R blend (per gram):

972.5 mg Maltodextrin
20 mg Cream of Tartar
4 mg Calcium Silicate
3.1 mg S,S monatin
0.4 mg R,R monatin

### EXAMPLE 17: Recipes for Ready-to-use Formulations Comprising Monatin

The following are examples of how monatin "spoon for spoon" ready-to-use formulations, such as those disclosed above, may be used as sugar substitutes in baking and other recipes. The monatin-containing products produced using the following recipes are proposed to be acceptable and of good quality compared to the same products prepared with sugar.

### French Silk Pie

### Crust:

1 cup crushed graham crackers
1 cup chopped pecans
1 stick butter, melted

Mix crust ingredients and pat into 9" pie plate. Bake at 300° for 30 minutes.

### Filling:

2 squares unsweetened chocolate
2 sticks butter
1 ½ cups monatin ready-to-use formulation (per Example 16B)
2 teaspoons vanilla
4 pasteurized eggs

Melt the unsweetened chocolate and cool to room temperature. Cream butter and monatin sugar substitute. Add vanilla and melted chocolate to the creamed mixture. Add eggs one at a time beating each egg 4 minutes. Pour over cool crust and refrigerate overnight.

### Blueberry Muffins:

Note: Sugar can be important in baked goods for texture, browning, as well as sweetening. In this formula, a small amount of honey is used to compensate for the lack of sugar in the formula and promote browning and good texture.
2 cups all-purpose flour
2 tsp baking powder
¾ tsp salt
½ cup light margarine, softened
1 cup monatin ready-to-use formulation
¼ cup honey
2 whole large eggs
1 tsp vanilla
½ cup skim milk
1 cup blueberries, fresh or frozen

Preheat oven to 350°F. Line 10 muffin cups with paper liners. Sift together flour, baking powder, salt; set aside. Beat together margarine, monatin sweetener and honey with an electric mixer until light and fluffy. Add eggs one at a time beating well after each addition. Stir in vanilla. Alternately stir in flour mixture and milk, beginning and ending with flour mixture. Fold in berries. Spoon batter into paper lined muffin cups, and bake until golden brown and a toothpick inserted in middle comes out clean, about 25-30 minutes. Cool in pan 10 minutes on wire rack. Remove muffins from pan. Cool completely on wire rack. Makes 10 muffins.

### Strawberry Banana Smoothie:

1 cup orange juice
1 cup fat-free plain yogurt
1 frozen banana
1 cup frozen strawberries
6 packets monatin formulation or ¼ cup monatin ready-to-use formulation

Place all items in a blender and blend until smooth. Makes 2 servings. This smoothie has about 33% fewer Calories than the same formula prepared with ¼ cup sugar

### Pineapple Orange Sherbet

1 15¼-ounce can crushed pineapple
1 6-ounce can frozen orange juice concentrate, thawed
3 cups skim milk
¾ cup evaporated skim milk
1/3 cup monatin ready-to-use formulation (per Example B)
½ teaspoon vanilla

Stir together skim milk, undrained pineapple, evaporated skim milk, orange juice concentrate, monatin sugar substitute and vanilla in a large bowl until the monatin sugar substitute dissolves. Freeze in 4- or 5-quart ice cream freezer according to manufacturer's directions. Makes 15 (½ cup) servings.

### Lemon Mousse

1 12-ounce can evaporated milk
2 Tablespoons grated lemon rind
Juice from 2 lemons
1 cup monatin ready-to-use formulation (per Example A)
12 graham crackers, crushed

Pour milk on jelly roll pan and place in freezer until a sliver of ice forms, about 2 hours. Transfer milk to chilled bowl and whip. Add lemon rind and juice slowly while mixing. Add monatin sugar substitute and continue whipping until soft peaks form. Transfer to serving dish(es) and sprinkle with graham cracker crumbs. May be served chilled or frozen.

### EXAMPLE 18: Dessert and Confections Products Comprising Monatin

Ready-to-use monatin compositions may also be used commercially in the production of consumer packaged goods.

### Instant chocolate pudding data sheet

| Ingredients | % w/w |
|---|---|
| Cold Swelling Starch (Ultratex 4) | 5.00 |
| Skimmed Milk Powder | 14.00 |
| Cocoa Powder | 2.5 |
| Maltodextrin | 3.5 |
| Chocolate flavoring | 0.4 |
| Xanthan Gum | 0.20 |
| Salt | 0.15 |
| Lecithin Powder | 0.25 |
| Disodium Phosphate | 0.17 |
| R,R Monatin (to desired taste) | 0.005-0.010 |
| Water to | 100 |

For every 100 g of pudding, this corresponds to 5-10 mg of R,R monatin, (provided by, for example, 2-3 packets of tabletop monatin sweetener).

### Sugar-free chocolate coating

### Ingredients

4.0-10% milk solids
15.0-20% chocolate flavoring or chocolate liquors
0-10% cocoa butter
0-2% cocoa
5-10% mannitol
0.3-0.5% lecithin
12-25% polydextrose (such as polydextrose K)
0.10-0.5% S,S monatin OR 0.007-0.015% R,R monatin or blends thereof
20-60% vegetable oil

For every 100 mg of coating, approximately 2-4 packets of tabletop sweetener are used.

### Sugar-free chocolate

### Ingredients

2-3 tablespoons cocoa
2 tablespoons butter (no substitutes)
2 tablespoons liquid heavy whipping cream
1/4 teaspoons pure vanilla extract
1 tablespoon peanut butter (crunchy or creamy)
6 packets tabletop monatin

### EXAMPLE 19: Evaluation of monatin in table-top sweetener applications.

Monatin table-top formulations, including R,R monatin or R,R monatin/erythritol combinations, were assessed relative to other known sweeteners (aspartame and sucralose) in coffee and iced tea. The key sensory parameters assessed included sweetness quality, aftertaste, bitter taste and its aftertaste. Qualitative evaluation has been carried out.

### Product Formulations

### (i) Coffee

Standard coffee was used in which to evaluate sweetener performance (Table 7).

**Table 7. Coffee formulation**

| **Ingredient** | **Supplier** | **Concentration (%; w/w)** | **g/700ml** |
|---|---|---|---|
| Classic Roast Coffee | Folger® | 5.41 | 37.87 |
| Water | | 94.59 | 662.13 |

Sweeteners were added to coffee at the following concentrations:

| | |
|---|---|
| Aspartame | 0.025% (w/v) |
| Sucralose | 0.0082% (w/v) |
| R,R monatin* | 0.0020, 0.0025, 0.0030% (w/v) plus 1 g maltodextrin |
| R,R monatin/erythritol | 0.0020, 0.0025, 0.0030% (w/v) plus 1 g erythritol |

### (ii) Iced Tea

An ice tea formulation was developed to evaluate sweetener performance (Table 8).

**Table 8. Iced Tea formulation**

| **Ingredient** | **Supplier** | **Concentration (w/v)** |
|---|---|---|
| Citric acid | | 0.200 |
| Sodium citrate | | 0.020 |
| Tea extract 'Assam' 285002 | Plantextrakt | 0.150 |
| Natural black tea flavour extract 31108304010000 | Rudolph Wild | 0.050 |
| Sodium benzoate (20% w/w) | | 0.075 |
| Sweetener | | As required |
| Water | | To volume |

Sweeteners were added to tea at the following concentrations:

| | |
|---|---|
| Aspartame | 0.0450% (w/v) |
| Sucralose | 0.0170% (w/v) |
| R,R monatin | 0.0030, 0.0035, 0.0040% (w/v) plus 1 g maltodextrin |
| R,R monatin/erythritol | 0.0030, 0.0035, 0.0040% (w/v) plus 1 g erythritol |

### Sensory Evaluation

The evaluation of these coffee and tea drinks was carried out by a small (n = 6) panel of experienced sensory evaluators who evaluated the coffee products on one tasting occasion and the tea products on a subsequent occasion. The results of these evaluations are summarized in Table 9.

**Table 9. Sensory evaluation of coffee and tea (200 ml serving size)**

| **Product** | **Sweetener/concentration** | **Comments** |
|---|---|---|
| Coffee | Aspartame/250ppm | Balanced sweetness profile. Very low level of bitterness, probably due to inhibition by APM. Flat, even coffee flavor delivery. Typical APM aftertaste that is perceived at the back of the tongue. |
| | Sucralose/82ppm | Slow sweetness onset allows stronger coffee notes to be perceived. Bitter coffee notes quite clearly apparent in the aftertaste, although balanced somewhat by the lingering sweet character of sucralose. |
| | Monatin (25ppm) + Maltodextrin (1 g) (0.5%) | Balanced sweetness profile. Clear coffee flavor in the aftertaste. Stronger coffee flavor overall than with either of the other sweeteners, although this may be (at least in part) due to the limited bitterness inhibiting capacity of monatin. |
| | Monatin (25ppm) + Erythritol (1 g) (0.5%) | More coffee flavor in monatin sample. Sweetness is less delayed with monatin/erythritol combination than with monatin/maltodextrin. Erythritol smoothes out the coffee flavor and makes the sweetness onset a little faster. |
| Iced Tea | Aspartame/450ppm | Good temporal characteristics although the typical aspartame flavor is clearly apparent. Balanced, though quite subtle tea flavour. No evidence of flavor enhancement. |
| | Sucralose/170ppm | Delay in sweetness onset means first impressions are of acidity. Product flavor and overall impression somewhat out of balance because of sweetness profile not matching acidity or flavor profiles. |
| | Monatin (40ppm) + Maltodextrin (1 g) (0.5%) | Sweetness and flavor profiles very balanced. The lemon flavor notes are clearly enhanced over those of the other sweeteners. |
| | Monatin (40ppm) + Erythritol (1 g) (0.5%) | Sweetness and flavor profiles balanced. Lemon flavor notes even more enhanced than monatin/maltodextrin alone. The astringency in the aftertaste is greatly reduced/eliminated. |

### Discussion

Monatin delivers unexpected performance benefits, including clear sensory benefits, in table-top sweetener formulations. When used in a table-top formulation added to coffee, a clear increase in the level of coffee flavor is perceived. This benefit is further enhanced through addition of low concentrations of erythritol, which are able to balance and round the flavor and to speed up sweetness onset times. In iced-tea, and particularly acidified acid tea (i.e., with lemon), monatin enhances the lemon flavor notes. Again, erythritol blending with monatin confers additional flavor benefits.

Monatin delivers improved sensory properties (e.g., less aftertaste, less off-taste), and/or improved solubility and stability characteristics.

Monatin sweetened coffee contains close to 0 Calories, as compared to 32 Calories in coffee sweetened with 2 teaspoons (∼8 g) of sucrose.

### EXAMPLE 20: Sweetness dose response curve of monatin and saccharin

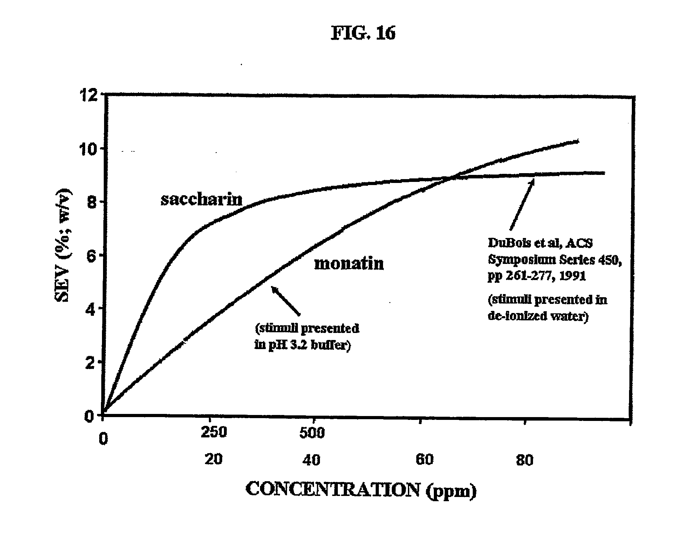

Sweetness of monatin and saccharine was assessed using 20 trained sensory evaluators, making judgements in duplicate. Test and reference solutions were prepared in citric/citrate buffer at pH 3.2. *See* FIG. 16. The more linear response of R,R/S,S monatin, as compared to saccharin, is consistent with the delivery of a more sugar-like taste character. The plateau above 10% SEV indicates absence/low levels of "mixture-suppressing" off-tastes and aftertastes. The shape of monatin's dose-response curve is similar to those of aspartame, sucralose and alitame, all of which are "quality" sweeteners.

With R,R/S,S monatin as a sole sweetener in the model system (pH 3.2), the following characteristics were observed: (1) slight delay in sweet taste onset; (2) sweet taste decay was quite rapid; (3) slight "aspartame-like" aftertaste, slightly sweet aftertaste, no bitterness in the aftertaste; and (4) residual cooling sensation in un-flavored systems.

### EXAMPLE 21: Stability of monatin at pH 3 with increasing temperatures

A sample of synthetic monatin was subjected to pH 3 at temperatures of 25°C, 50°C and 100°C. At room temperature and pH 3, a 14% loss in monatin was observed over a period of 48 hours. This loss was attributed to lactone formation. At 50°C and pH 3, a 23% loss in monatin was observed over a period of 48 hours. This loss was attributed to lactone formation and the buildup of an unknown compound after about 15.5 minutes. At 100°C and pH 3, nearly all monatin was lost after 24 hours. The major detectable component was an unknown at 15.5 minutes.

### EXAMPLE 22: Sensory stability of monatin and aspartame at pH 2.5, 3.0, 4.0 at 40°C

The sensory stability of monatin solutions prepared at pH 2.5, 3.0 and 4.0 and stored at 40°C was monitored for 100 days. Loss of sweetness from these solutions was compared with the losses of sweetness from aspartame solutions prepared and stored under identical conditions.

The sensory stability of monatin (8% SEV, ∼55 ppm, synthetic blend containing approximately 96% of the 2R,4R/2S, 4S enantiometric pair and 4% of the 2R,4S/2S,4R enantiometric pair) in phosphate/citrate buffers having a pH of 2.5, 3.0, and 4.0 was examined after storage at 40°C. The stability of monatin was compared to that of aspartame (400 ppm) in the same buffers. Three sucrose reference solutions were prepared in the same phosphate/citrate buffers as the monatin and aspartame solutions. All prepared solutions were stored in the dark.

| | | |
|---|---|---|
| Buffer compositions: | pH2.5 | Phosphoric acid (75% solution) 0.127% (w/v) |
| | | Tri-sodium citrate monohydrate 0.005% (w/v) |
| | pH3.0 | Phosphoric acid (75% solution) 0.092% (w/v) |
| | | Tri-sodium citrate monohydrate 0.031 % (w/v) |
| | pH4.0 | Phosphoric acid (75% solution) 0.071% (w/v) |
| | | Tri-sodium citrate monohydrate 0.047% (w/v) |

The sweetness of each sweetener relative to sucrose was assessed in duplicate by a small panel (n = 8) of trained sensory evaluators experienced in the sweetness estimation procedure. All samples (in the same buffers) were served in duplicate at a temperature of 22°C ± 1°C. Monatin (test) solutions, coded with 3 digit random number codes were presented individually to panelists, in random order. Sucrose reference standards, ranging from 4.0 - 10.0% (w/v) sucrose, increasing in steps of 0.5% (w/v) sucrose were also provided. Panelists were asked to estimate sweetness by comparing the sweetness of the test solution to the sucrose standards. This was carried out by taking 3 sips of the test solution, followed by a sip of water, followed by 3 sips of sucrose standard followed by a sip of water, etc. Panelists were encouraged to estimate the sweetness to one decimal place, e.g., 6.8, 8.5. A five minute rest period was imposed between evaluating the test solutions. Panelists were also asked to rinse well and eat a cracker to reduce any potential carry over effects.

Tables 10 and 11 present results of the stability studies in the phosphate citrate buffers. At each pH and after 100 days' storage at 40°C in the dark, the percentage retention of monatin sweetness was greater than that retained with aspartame. At pH 4.0, the loss of sweetness of the monatin solution appeared almost to have stabilized since there was very little change in measured sweetness intensity between Days 17 and 100, whereas the aspartame solution continued to lose sweetness.

**TABLE 10**

| Sensory Stability of Monatin: Sweetness after 100 Days Storage at 40°C | | | | | |
|---|---|---|---|---|---|
| A. | | | | | |
| pH | Time (days) | SEV Monatin (% sucrose) | Retention of Monatin Sweetness (%) | SEV Aspartame (% sucrose) | Retention of Aspartame Sweetness (%) |
| 2.5 | 0 | 7.35 | | 7.34 | |
| | 1 | 6.86 | 93.3 | 6.90 | 94.0 |
| | 2 | 6.70 | 91.2 | 6.80 | 92.6 |
| | 3 | 6.50 | 88.4 | 6.60 | 89.9 |
| | 4 | 6.26 | 85.2 | 6.29 | 85.7 |
| | 7 | 6.08 | 82.7 | 6.01 | 81.9 |
| | 8 | 5.98 | 81.4 | 5.98 | 81.5 |
| | 9 | 5.89 | 80.1 | 5.97 | 81.3 |
| | 11 | 5.78 | 78.6 | 5.86 | 79.8 |
| | 50 | 4.61 | 62.7 | 4.19 | 57.1 |
| | 100 | 2.10 | 28.6 | 0.80 | 10.9 |

| B. | | | | | |
|---|---|---|---|---|---|
| pH | Time (days) | SEV Monatin (% sucrose) | Retention of Monatin Sweetness (%) | SEV Aspartame (% sucrose) | Retention of Aspartame Sweetness (%) |
| 3.0 | 0 | 7.08 | | 7.15 | |
| | 1 | 7.05 | 99.6 | 6.90 | 96.5 |
| | 2 | 6.60 | 93.2 | 6.87 | 96.1 |
| | 3 | 6.47 | 91.4 | 6.60 | 92.3 |
| | 4 | 6.49 | 91.6 | 6.43 | 89.9 |
| | 5 | 6.04 | 85.3 | 6.17 | 86.3 |
| | 6 | 5.93 | 83.8 | 5.93 | 82.9 |
| | 7 | 5.88 | 83.1 | 5.94 | 83.1 |
| | 8 | 5.88 | 83.1 | 5.83 | 81.5 |
| | 9 | 5.12 | 72.3 | 4.71 | 65.9 |
| | 100 | 4.10 | 57.9 | 2.20 | 30.8 |

| C. | | | | | |
|---|---|---|---|---|---|
| pH | Time (days) | SEV Monatin (% sucrose) | Retention of Monatin Sweetness (%) | SEV Aspartame (% sucrose) | Retention of Aspartame Sweetness (%) |
| 4.0 | 0 | 7.40 | | 7.10 | |
| | 3 | 7.08 | 95.7 | 6.75 | 95.1 |
| | 8 | 6.42 | 86.8 | 6.23 | 87.8 |
| | 11 | 6.36 | 85.9 | 6.02 | 84.8 |
| | 17 | 6.10 | 82.4 | 5.75 | 81.0 |
| | 24 | 6.25 | 84.5 | 5.85 | 82.4 |
| | 50 | 6.14 | 82.9 | 5.29 | 74.5 |
| | 100 | 5.80 | 78.4 | 4.10 | 57.7 |

**TABLE 11**

| Stability: Amount of sweetness remaining after 100 days storage at stated pH at 40°C | | |
|---|---|---|
| **pH** | **Sweetener** | **Sweetness Retained (%)** |
| **2.5** | **Aspartame** | **11** |
| **2.5** | **Monatin** | **29** |
| **3.0** | **Aspartame** | **31** |
| **3.0** | **Monatin** | **58** |
| **4.0** | **Aspartame** | **58** |
| **4.0** | **Monatin** | **78** |

The respective buffers were effective at maintaining pH, as seen in Table 12:

**TABLE 12**

| Sweetener | Nominal pH | Actual pH (after 50 days) |
|---|---|---|
| Monatin | 2.5 | 2.39 |
| | 3.0 | 3.13 |
| | 4.0 | 4.28 |
| Aspartame | 2.5 | 2.49 |
| | 3.0 | 3.13 |
| | 4.0 | 4.19 |

If a *pseudo*-first order breakdown reaction is assumed, a plot of logₙ percentage retention versus time (logₙ%RTN v. t) allows estimation of the half-life (t½) and rate constant (k) of sweetness loss under any given set of conditions. In so doing, the kinetics of monatin and aspartame sweetness loss may be summarized as follows in Table 13.

**TABLE 13**

| Sweetener | PH | Half-life (t½; days) | Rate constant (k; day⁻¹) |
|---|---|---|---|
| Monatin | 2.5 | 65 days | 0.011 day⁻¹ |
| | 3.0 | 115 days | 0.006day⁻¹ |
| | 4.0 | 230 days | 0.003day⁻¹ |
| Aspartame | 2.5 | 55 days | 0.013day⁻¹ |
| | 3.0 | 75 days | 0.009day⁻¹ |
| | 4.0 | 140 days | 0.005day⁻¹ |

At each pH and after 100 days storage at 40°C, the percentage retention of monatin sweetness is greater than that retained from aspartame. At pH 4.0, the loss of sweetness of the monatin solution appears almost to have stabilized since there has been very little change in measured sweetness intensity between Days 17 and 100, whereas the aspartame solution continues to lose sweetness.

Estimates of the half-life of monatin and aspartame indicate that sweetness derived from monatin is lost at a slower rate than that from aspartame. Half-life estimates for monatin sweetness at pH 2.5, 3.0 and 4.0 were 65 days, 115 days and 230 days, respectively. Aspartame half-life estimates were 55 days, 75 days and 140 days under the same conditions.

Thus, under acidic conditions and storage at 40°C, monatin delivers a more stable sweetness than does aspartame.

### EXAMPLE 23: Production of erythritol/ monatin granules

A solution of 2000 g erythritol, 16 g R,R monatin and 5 L water is prepared in a small tank at 40°C. 58 kg of erythritol is put into the basket of a fluid bed. The air temperature of the fluid bed is set at 65°C. The monatin/erythritol solution is sprayed on the fluid bed at 25kg/hr for 17 minutes. Additional heating time of 20 minutes is required to dry the powder. Product is sieved over a 1250 mm sieve. *See also* EP 0 325 790 B1 (Mitsubishi, Nikken 1993). The calculated relative sweetness of the monatin/erythritol product (as compared to sucrose) is approximately 1.10. Triangle tests are performed with two monatin/erythritol samples and one monatin/maltodextrin sample. Triangle tests are known in the art. It is expected that ready-to-use cubes prepared with monatin/erythritol will have a color and crystalline quality that closely resembles sucrose.

### EXAMPLE 24: Chromatography of stereoisomers of monatin

*Sample Preparation -* Approximately 50-75 µg of lyophilized material was placed in a microcentrifuge tube. To this 1.0 mL of HPLC grade methanol was added. The solution was vortexed for 30 minutes, centrifuged and an aliquot of the supernatant was removed for analysis.

*Reversed Phase HPLC-* Chromatography of two distinct diastereomer peaks (R,R/S,S and R,S/S,R) was accomplished using a 2.1 x 250mm Xterra^{™} MS C₈ 5µm (Waters Corporation) HPLC column. Detection was carried out using an Ultima^{™} triple quadrupole mass spectrometer from Micromass. Mobile phase was delivered by the following gradient:

| | | | | | | |
|---|---|---|---|---|---|---|
| Time (min) | | 0 | 9 | 16 | 20 | 21 |
| 0.05%TFA | A% | 95 | 65 | 10 | 10 | 95 |
| Methanol, 0.05% TFA | B% | 5 | 35 | 90 | 90 | 5 |
| Flow mL/min | | 0.25 | 0.25 | 0.25 | 0.25 | 0.25 |

*Chiral HPLC-* Chromatography of two distinct monatin stereoisomers (R,R and S,S) was accomplished using a 250 x 4.6 mm Chirobiotic T(Advariced Separations Technologies, Inc.) HPLC column. Detection was carried out using an Ultima^{™} triple quadrupole mass spectrometer from Micromass. Mobile phase consisted of Methanol with 0.2% Acetic acid and 0.05% ammonium hydroxide.

*Mass Spectrometry (MS*/*MS) -* The presence of monatin was detected by a Selected Reaction Monitoring (SRM) experiment. The protonated molecular ion of monatin ([M+H]⁺) has a *m*/*z*=293.3. Fragmentation of this molecular ion produces a significant ion at *m*/*z*=257.3 arising from multiple dehydrations of the molecular ion. This transition has been shown to be very specific to monatin and was chosen as the transition (293.3 to 257.3) for monitoring during the SRM experiment. This method of detection was employed for both reversed phase and chiral separations of monatin.

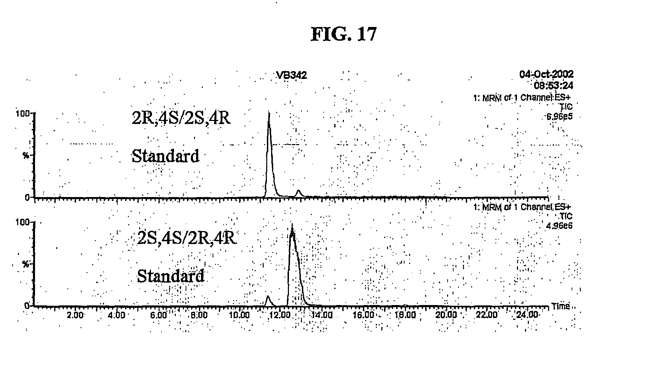

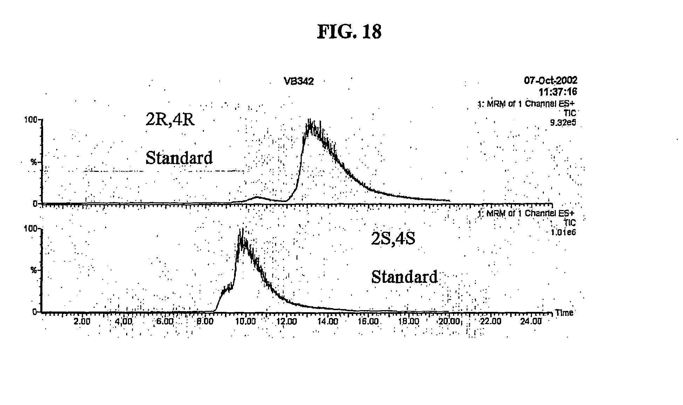

*Results-* The standard samples of R,S/S,R and S,S/R,R were evaluated under Reversed Phase HPLC. The samples were prepared by derivatization and enzymatic resolution. Chromatograms for standard solutions are displayed in FIG. 17. Following the reversed phase analysis, chiral chromatography was performed to evaluate specific isomers present in the samples. Chiral chromatography of standard S,S and R,R, monatin solutions are displayed in FIG. 18.

### EXAMPLE 25: Stability of monatin at high temperature (80°C) and neutral pH

A 100 milliliter solution of 75 ppm monatin at pH 7 was used as a stock solution. The synthetic monatin sample contained approximately 96% of the 2R,4R/2S,4S enantiomeric pair and 4% of the 2R,4S/2S,4R enantiomeric pair. Samples were incubated at 80°C and pH 7 for the duration of the experiment and samples were withdrawn at 0, 1, 2, 3, 4 hours and 1, 2, 4, 7, 14, 21 and 35 days. All experimental conditions were run in duplicate.

*Separation and Quantification Using LC-MS using Reverse Phase Chromatography-*A response curve was established for both detected diastereomer peaks of the synthetic monatin. A range of 5-150 ppm was bracketed with the synthetic monatin standard dissolved in DI water. Separation of the two diastereomer peaks was accomplished using a 3.9 x 150mm Novapak C18 (Waters Corporation) HPLC column. Ultraviolet-Visible (UV) and Mass Spectrometer (MS) detectors were used in series for detection and quantitation. Monatin and its lactone peak each have a UVₘₐₓ at 279 nm that aided in precise detection. Quantification was done by acquiring Selected Ion Monitoring (SIM) scan of 293.3 m/z and 275.3 m/z in positive-ion electrospray mode.

*Results -* At a neutral pH (common for baking and desserts), the degree of degradation of monatin was determined to be insignificant even after 7-35 days. The disappearance of monatin over time is highly dependent on pH since the primary byproducts are cyclization and possibly very small levels of racemization. During the experiment at 80°C and pH 7, no change in concentration of racemic RR/SS monatin or lactones thereof was detected within the limits of precision afforded by using LC-MS for quantitation. Based on this data, it is expected that at high temperatures and neutral pH, monatin stability is acceptable for baking.

In view of the many possible embodiments to which the principles of this disclosure may be applied, it should be recognized that the illustrated embodiments are only particular examples of the disclosure and should not be taken as a limitation on the scope of the disclosure. For example, from the teachings of the disclosure herein, it would be apparant to a person of ordinary skill that a monatin sweetener compostion can be made in liquid concentrate form, rather than in a solid form, wherein a chosen volume of the liquid concentrate, e.g., 1 mL or 0.35 mL, would have a sweetness comparable to a chosen amount, such as two teaspoons, of granulated sugar.

## Claims

1. A tabletop sweetener composition comprising monatin or salt thereof wherein 1 gram of the composition comprises from about 0 to about 200 mg S,S monatin or salt thereof, preferably from about 3 to about 200 mg S,S monatin or salt thereof, and from about 0 to about 5 mg R,R monatin or salt thereof, preferably from about 3 to about 5 mg R,R monatin or salt thereof, wherein the composition provides a sweetness comparable to about 0.9 to about 9.0 grams of granulated sugar.

2. The tabletop sweetener composition of claim 1, further comprising at least one ingredient chosen from bulking agents, carriers, fibers, sugar alcohols, oligosaccharides, sugars, non-monatin high intensity sweeteners, nutritive sweeteners, flavorings, flavour enhancers, flavour stabilizers, acidulants, anti-caking agents, and free-flow agents.

3. The tabletop sweetener composition of claim 1, further comprising erythritol.

4. The tabletop sweetener composition of claim 1, further comprising trehalose.

5. The tabletop sweetener composition of claim 1, further comprising cyclamate.

6. The tabletop sweetener composition of claim 1, further comprising agglomerated dextrose with maltodextrin.

7. The tabletop sweetener composition of claim 1, wherein the sweetness is provided by monatin or salt thereof produced in a biosynthetic pathway, and wherein a 1 gram portion of the composition provides a sweetness comparable to two teaspoons of granulated sugar.

8. A ready-to-use sweetener composition comprising monatin or salt thereof, wherein a volume of the composition provides a sweetness comparable to a same volume of granulated sugar.

9. The ready-to-use sweetener composition of claim 8, wherein 1 gram of the composition comprises about 3 to about 25 m S,S monatin or salt thereof, and from about 0 to about 0.625 mg R,R monatin or salt thereof.

10. The ready-to-use sweetener composition of claim 8, wherein 1 gram of the composition comprises from about 0.5 to about 1 mg R,R monatin or salt thereof, and wherein the monatin or salt thereof is substantially free of S,S, S,R or R,S monatin or salt thereof.

11. The ready-to-use sweetener composition of claim 10, further comprisiung erythritol.

12. A sweetener composition comprising a stereoisomerically-enriched monatin mixture, wherein the monatin mixture is produced via a biosynthetic pathway.

13. The sweetener composition of claim 12, wherein the mixture is predominantly R,R monatin or salt thereof.

14. A method of making a sweetener composition comprising monatin or salt thereof, wherein the method comprises producing monatin or salt thereof from at least one substrate chosen from glucose, tryptophan, indole-3-lactic acid, indole-3-pyruvate and the monatin precursor.

15. The method of claim 14, wherein the method further comprises combining the monatin or salt thereof with at least one other ingredient that is not monatin or salt thereof.
